# EUROPEAN PATENT APPLICATION

(11) **EP 4 773 692 A1**
(43) Date of publication of application: **08.07.2026**
(21) Application number: 24867283.4
(22) Date of filing: 02.09.2024
(51) Int. Cl.: H04W 72/0446

(54) **SLOT ADJUSTMENT METHOD AND APPARATUS, AND COMMUNICATION SYSTEM**

(30) Priority: 20.09.2023 CN 202311223123
(71) Applicant: HUAWEI TECHNOLOGIES CO., LTD., Shenzhen 518129 (CN)
(72) Inventor: SUN, Peng, Shenzhen, Guangdong 518129 (CN); XU, Li, Shenzhen, Guangdong 518129 (CN); XIAO, Jie, Shenzhen, Guangdong 518129 (CN); LI, Rixin, Shenzhen, Guangdong 518129 (CN); ZHOU, Yongbo, Shenzhen, Guangdong 518129 (CN); SUN, Hongliang, Shenzhen, Guangdong 518129 (CN)
(74) Representative: Gill Jennings & Every LLP
(86) International application number: PCT/CN2024/116291
(87) International publication number: WO 2025/060871

(57) **Abstract**

This application provides a slot adjustment method and apparatus, and a communication system, and pertains to the field of communication technologies. The method includes: A first device receives a first overhead frame sent by a second device, where the first overhead frame carries a slot adjustment request for a first service; the first device adjusts, based on the slot adjustment request for the first service, a slot used to carry the first service; and the first device sends a second overhead frame to the second device, where the second overhead frame carries an identifier of a second service and a slot adjustment acknowledge that is for the first service and that corresponds to the slot adjustment request, and a transmission direction of the second service is opposite to a transmission direction of the first service. In this application, a bandwidth of a transmission channel of a service can be adjusted by adjusting a fine grain slot used to carry the service, and service damage caused by a bandwidth adjustment process can be avoided in a scenario in which fine grain private lines used to carry different services share some physical links.

## Description

This application claims priority to Chinese Patent Application No. 202311223123.7, filed on September 20, 2023 and entitled "SLOT ADJUSTMENT METHOD AND APPARATUS, AND COMMUNICATION SYSTEM", which is incorporated herein by reference in its entirety.

### TECHNICAL FIELD

This application relates to the field of communication technologies, and in particular, to a slot adjustment method and apparatus, and a communication system.

### BACKGROUND

A fine grain technology is also referred to as an Ethernet hard private line technology. Based on a ubiquitous Ethernet (X-Ethernet) technology and standard and a corresponding bearer network, the fine grain technology provides a million bits per second (million bits per second, Mbps)-level fine grain hard channel, supports low-latency and low-jitter circuit switching, meets evolution of a packet transport network (packet transport network, PTN) device, an internet protocol (internet protocol, IP) radio access network (IP radio access network, IPRAN) device, and the like, and supports a service carrying requirement of a high-quality and low-speed private line.

The fine grain technology divides a large channel into fine grain slots to provide a fine grain channel isolation capability. The large channel may be a coarse grain slot or 10G BASE-R PHY, and the coarse grain slot is also referred to as a large granularity slot, a large grain slot, a coarse granularity slot, or the like. For example, a slot with a bandwidth of 5 gigabits per second (gigabits per second, Gbps) defined in a metro transport network (metro transport network, MTN) standard is a type of coarse grain slot. The fine grain slot is also referred to as a small granularity slot, a small grain slot, a fine granularity slot (fine granularity slot, fgslot) or (fine granularity calendar slot, fgCS), a sub-slot (sub-slot), or the like. For example, a coarse grain slot with a bandwidth of 5 Gbps may be divided into 480 fine grain slots with a bandwidth of 10 Mbps. One fine grain slot may be independently allocated to one service for use, and one service may be allocated at least one fine grain slot. Generally, a quantity of fine grain slots needed by a service is determined based on a bandwidth requirement of the service, and then the fine grain slots are allocated to the service. The quantity of fine grain slots allocated to the service determines a bandwidth of a transmission channel of the service. In the fine grain technology, one transmission channel includes at least one fine grain slot, and the transmission channel is also referred to as a fine grain channel or a fine grain hard channel.

In a service transmission process, the bandwidth requirement of the service may change. Therefore, a slot adjustment method is needed to adjust the bandwidth of the transmission channel of the service by adjusting a fine grain slot used to carry the service, that is, adjusting a fine grain slot included in the transmission channel of the service, so that the bandwidth of the transmission channel of the service meets the bandwidth requirement of the service, and a bandwidth waste is avoided.

### SUMMARY

This application provides a slot adjustment method and apparatus, and a communication system, so that a bandwidth of a transmission channel of a service can be adjusted by adjusting a fine grain slot used to carry the service, and service damage caused by a bandwidth adjustment process can be avoided in a scenario in which fine grain private lines used to carry different services share some physical links. Technical solutions of this application are as follows:

According to a first aspect, a slot adjustment method is provided. The method includes: A first device receives a first overhead frame sent by a second device, where the first overhead frame carries a slot adjustment request for a first service; the first device adjusts, based on the slot adjustment request for the first service, a slot used to carry the first service; and the first device sends a second overhead frame to the second device, where the second overhead frame carries an identifier of a second service and a slot adjustment acknowledge that is for the first service and that corresponds to the slot adjustment request, and a transmission direction of the second service is opposite to a transmission direction of the first service. Both the first device and the second device are on a transmission path of the first service, and are on a transmission path of the second service, and the first device is located downstream the second device on the transmission path of the first service.

According to the technical solution provided in this application, the first device adjusts, based on the slot adjustment request that is for the first service and that is sent by the second device, the slot used to carry the first service, so that a bandwidth of a transmission channel of the first service is adjusted by adjusting the slot used to carry the first service. The first device includes, for the second device, the slot adjustment acknowledge for the first service in the second overhead frame of the second service whose transmission direction is opposite to that of the first service, to avoid a case in which the second device cannot determine that the slot adjustment acknowledge corresponds to the first service, and therefore during slot adjustment, cannot adjust only the slot used to carry the first service. In a scenario in which fine grain private lines used to carry different services share some physical links, service damage caused by a bandwidth adjustment process can be avoided.

Optionally, the second overhead frame further carries an identifier of the first service. In other words, that the second overhead frame carries the slot adjustment acknowledge for the first service includes that the second overhead frame carries the identifier of the first service. Specifically, the second overhead frame carries the identifier of the first service and a slot adjustment acknowledge, and the identifier of the first service and the slot adjustment acknowledge jointly form the slot adjustment acknowledge for the first service. This technical solution is applicable to a scenario in which fine grain private lines carrying different services share some physical links and slot adjustment processes of these different services are isolated from each other, and is also applicable to a scenario in which fine grain private lines carrying different services share some physical links and slot adjustment processes of these different services are performed simultaneously. That the slot adjustment processes of the different services are isolated from each other includes: Slots used to carry these different services are adjusted in a time division manner, and only a slot used to carry one service is adjusted at each moment (or a similar time description, for example, in each time period, in each phase, or in each adjustment period). For example, these different services include the first service and a third service. A slot used to carry the first service is first adjusted, and then a slot used to carry the third service is adjusted after the slot used to carry the first service is adjusted; or a slot used to carry the third service is first adjusted, and then a slot used to carry the first service is adjusted after the slot used to carry the third service is adjusted.

According to the technical solution provided in this application, the first device includes, for the second device, the identifier of the first service and the slot adjustment acknowledge in the second overhead frame of the second service whose transmission direction is opposite to that of the first service, to indicate, to the second device, that the slot adjustment acknowledge is the slot adjustment acknowledge for the first service, to avoid a case in which the second device cannot determine that the slot adjustment acknowledge corresponds to the first service, and therefore during slot adjustment, cannot adjust only the slot used to carry the first service. In a scenario in which fine grain private lines used to carry different services share some physical links, service damage caused by a bandwidth adjustment process can be avoided.

Optionally, that the second overhead frame carries the slot adjustment acknowledge for the first service includes that the second overhead frame carries only the slot adjustment acknowledge, and the slot adjustment acknowledge is the slot adjustment acknowledge for the first service. This technical solution is applicable to a scenario in which fine grain private lines carrying different services share some physical links and slot adjustment processes of these different services are isolated from each other.

Optionally, that the first overhead frame carries the slot adjustment request for the first service includes: The first overhead frame carries the identifier of the first service and a slot adjustment request, and the identifier of the first service and the slot adjustment request jointly form the slot adjustment request for the first service. This technical solution is applicable to a scenario in which fine grain private lines carrying different services share some physical links and slot adjustment processes of these different services are isolated from each other, and is also applicable to a scenario in which fine grain private lines carrying different services share some physical links and slot adjustment processes of these different services are performed simultaneously. In this technical solution, the first overhead frame may further carry the identifier of the second service.

Optionally, that the first overhead frame carries the slot adjustment request for the first service includes that the first overhead frame carries only the slot adjustment request, and the slot adjustment request is the slot adjustment request for the first service. This technical solution is applicable to a scenario in which fine grain private lines carrying different services share some physical links and slot adjustment processes of these different services are isolated from each other. In this technical solution, the first overhead frame may further carry the identifier of the second service.

Optionally, the method further includes: When the first overhead frame meets an adjustment request condition, the first device determines that the first overhead frame carries the slot adjustment request for the first service, where the adjustment request condition includes any one of the following three conditions:
Condition 11: A value of a request flag bit in the first overhead frame is toggled compared with a value of a request flag bit in an overhead frame in a second overhead multiframe.

Condition 12: A value of a request flag bit in the first overhead frame is toggled compared with a value of a request flag bit in an overhead frame in a second overhead multiframe, and the value of the request flag bit in the first overhead frame is different from a value of an acknowledge flag bit in an overhead frame in a third overhead multiframe.

Condition 13: A value of a request flag bit in the first overhead frame is a first value.

The first overhead frame is included in a first overhead multiframe, the first overhead multiframe and the second overhead multiframe are two overhead multiframes consecutively sent by the second device to the first device, the first overhead multiframe is located after the second overhead multiframe, and the third overhead multiframe is an overhead multiframe that is being sent to the second device when the first device receives the first overhead frame.

According to the technical solution provided in this application, a plurality of adjustment request conditions are set for the first device to determine whether the slot adjustment request for the first service is received. This enriches implementations of determining, by the first device, whether the slot adjustment request for the first service is received. In addition, when the adjustment request condition includes the condition 12, the first device determines, with reference to toggle of the request flag bit and status comparison between the request flag bit and the acknowledge flag bit, whether the slot adjustment request for the first service is received, thereby improving reliability of determining, by the first device, whether the slot adjustment request for the first service is received.

Optionally, the adjustment request condition includes that the value of the request flag bit in the first overhead frame is the first value (that is, the condition 13); and the first overhead frame is a 1^{st} overhead frame in the first overhead multiframe, a value of a request flag bit in the 1^{st} overhead frame in the first overhead multiframe is the first value, and a value of a request flag bit in a remaining overhead frame in the first overhead multiframe is a second value; or the first overhead frame is any overhead frame in the first overhead multiframe, and a value of a request flag bit in each overhead frame in the first overhead multiframe is the first value.

Optionally, the method further includes: The first device receives a third overhead frame sent by the second device, where the third overhead frame carries a slot validation notification for the first service, and the slot validation notification indicates the first device to validate a slot adjustment result for the first service; and the first device validates the slot adjustment result for the first service based on the slot validation notification for the first service.

Optionally, that the third overhead frame carries the slot validation notification for the first service includes: The third overhead frame carries the identifier of the first service and a slot validation notification, and the identifier of the first service and the slot validation notification jointly form the slot validation notification for the first service. This technical solution is applicable to a scenario in which fine grain private lines carrying different services share some physical links and slot adjustment processes of these different services are isolated from each other, and is also applicable to a scenario in which fine grain private lines carrying different services share some physical links and slot adjustment processes of these different services are performed simultaneously. In this technical solution, the third overhead frame may further carry the identifier of the second service.

Optionally, that the third overhead frame carries the slot validation notification for the first service includes: The first overhead frame carries only the slot validation notification, and the slot validation notification is the slot validation notification for the first service. This technical solution is applicable to a scenario in which a fine grain private line carrying the first service and fine grain private lines carrying different services share some physical links and slot adjustment processes of these different services are isolated from each other. In this technical solution, the third overhead frame may further carry the identifier of the second service.

Optionally, the method further includes: When the third overhead frame meets a slot validation condition, the first device determines that the third overhead frame carries the slot validation notification for the first service, where the slot validation condition includes any one of the following three conditions:
Condition 31: A value of a validation flag bit in the third overhead frame is toggled compared with a value of a validation flag bit in an overhead frame in a fourth overhead multiframe.

Condition 32: A value of a validation flag bit in the third overhead frame is toggled compared with a value of a validation flag bit in an overhead frame in a fourth overhead multiframe, and the value of the validation flag bit in the third overhead frame is the same as a value of an acknowledge flag bit in an overhead frame in a fifth overhead multiframe.

Condition 33: A value of a validation flag bit in the third overhead frame is a first value.

The third overhead frame is included in a sixth overhead multiframe, the sixth overhead multiframe and the fourth overhead multiframe are two overhead multiframes consecutively sent by the second device to the first device, the sixth overhead multiframe is located after the fourth overhead multiframe, and the fifth overhead multiframe is an overhead multiframe that is being sent to the second device when the first device receives the third overhead frame.

According to the technical solution provided in this application, a plurality of slot validation conditions are set for the first device to determine whether the slot validation notification for the first service is received. This enriches implementations of determining, by the first device, whether the slot validation notification for the first service is received. In addition, when the slot validation condition includes the condition 32, the first device determines, with reference to toggle of the validation flag bit and status comparison between the validation flag bit and the acknowledge flag bit, whether the slot validation notification for the first service is received, thereby improving reliability of determining, by the first device, whether the slot validation notification for the first service is received.

Optionally, the slot validation condition includes that the value of the validation flag bit in the third overhead frame is the first value (that is, the condition 33); and the third overhead frame is any one of first m overhead frames in the sixth overhead multiframe, values of validation flag bits in the first m overhead frames in the sixth overhead multiframe are the first value, a value of a validation flag bit in a remaining overhead frame in the sixth overhead multiframe is a second value, and m is a positive integer; or the third overhead frame is any overhead frame in the sixth overhead multiframe, and a value of a validation flag bit in each overhead frame in the sixth overhead multiframe is the first value.

Optionally, the slot validation condition includes that values of validation flag bits in at least k consecutive overhead frames in the sixth overhead multiframe are the first value, the at least k consecutive overhead frames include the third overhead frame, and k is a positive integer.

Optionally, m is an integer greater than or equal to 3, and k is an integer greater than or equal to 3.

Optionally, the method further includes: The first device sends a fourth overhead frame to the second device, where the fourth overhead frame carries a slot adjustment notification for the first service, and the slot adjustment notification is used to notify the second device to adjust the slot used to carry the first service. The fourth overhead frame further carries the identifier of the second service. The fourth overhead frame is an overhead frame of the second service, and the fourth overhead frame is used to carry slot configuration information of the second service.

According to the technical solution provided in this application, the first device includes, for the second device, the slot adjustment notification for the first service in the fourth overhead frame of the second service whose transmission direction is opposite to that of the first service, to avoid a case in which the second device cannot determine that the slot adjustment notification corresponds to the first service, and therefore during slot adjustment, cannot adjust only the slot used to carry the first service. In a scenario in which fine grain private lines used to carry different services share some physical links, service damage caused by a bandwidth adjustment process can be avoided.

Optionally, the fourth overhead frame further carries the identifier of the first service. In other words, that the fourth overhead frame carries the slot adjustment notification for the first service includes that the fourth overhead frame carries the identifier of the first service. Specifically, the fourth overhead frame carries the identifier of the first service and a slot adjustment notification, and the identifier of the first service and the slot adjustment notification jointly form the slot adjustment notification for the first service. This technical solution is applicable to a scenario in which fine grain private lines carrying different services share some physical links and slot adjustment processes of these different services are isolated from each other, and is also applicable to a scenario in which fine grain private lines carrying different services share some physical links and slot adjustment processes of these different services are performed simultaneously.

According to the technical solution provided in this application, the first device includes, for the second device, the identifier of the first service and the slot adjustment notification in the fourth overhead frame of the second service whose transmission direction is opposite to that of the first service, to indicate, to the second device, that the slot adjustment notification is the slot adjustment notification for the first service, to avoid a case in which the second device cannot determine that the slot adjustment notification corresponds to the first service, and therefore during slot adjustment, cannot adjust only the slot used to carry the first service. In a scenario in which fine grain private lines used to carry different services share some physical links, service damage caused by a bandwidth adjustment process can be avoided.

Optionally, that the fourth overhead frame carries the slot adjustment notification for the first service includes that the fourth overhead frame carries only the slot adjustment notification, and the slot adjustment notification is the slot adjustment notification for the first service. This technical solution is applicable to a scenario in which fine grain private lines carrying different services share some physical links and slot adjustment processes of these different services are isolated from each other.

Optionally, the second overhead frame further carries the identifier of the first service, the second overhead frame includes a first fine grain client identification (fine grain client identity document, fgclientID) field, a second fgclientID field, a fine grain overhead multiframe indicator (fine grain overhead multiframe indicator, fgOMFI) field, a notification flag bit, a request flag bit, an acknowledge flag bit, and a validation flag bit, the first fgclientID field in the second overhead frame is used to carry the identifier of the second service, and the second fgclientID field in the second overhead frame is used to carry the identifier of the first service.

The fourth overhead frame further carries the identifier of the first service, the fourth overhead frame includes a first fgclientID field, a second fgclientID field, an fgOMFI field, a notification flag bit, a request flag bit, an acknowledge flag bit, and a validation flag bit, the first fgclientID field in the fourth overhead frame is used to carry the identifier of the second service, and the second fgclientID field in the fourth overhead frame is used to carry the identifier of the first service.

The first overhead frame carries the identifier of the first service and the identifier of the second service, the first overhead frame includes a first fgclientID field, a second fgclientID field, an fgOMFI field, a notification flag bit, a request flag bit, an acknowledge flag bit, and a validation flag bit, the first fgclientID field in the first overhead frame is used to carry the identifier of the first service, and the second fgclientID field in the first overhead frame is used to carry the identifier of the second service.

The third overhead frame carries the identifier of the first service and the identifier of the second service, the third overhead frame includes a first fgclientID field, a second fgclientID field, an fgOMFI field, a notification flag bit, a request flag bit, an acknowledge flag bit, and a validation flag bit, the first fgclientID field in the third overhead frame is used to carry the identifier of the first service, and the second fgclientID field in the third overhead frame is used to carry the identifier of the second service.

Optionally, the second overhead frame includes a first fgclientID field, an fgOMFI field, a notification flag bit, a request flag bit, an acknowledge flag bit, and a validation flag bit, and the first fgclientID field in the second overhead frame is used to carry the identifier of the second service.

The fourth overhead frame includes a first fgclientID field, an fgOMFI field, a notification flag bit, a request flag bit, an acknowledge flag bit, and a validation flag bit, and the first fgclientID field in the fourth overhead frame is used to carry the identifier of the second service.

The first overhead frame carries the identifier of the first service, the first overhead frame includes a first fgclientID field, an fgOMFI field, a notification flag bit, a request flag bit, an acknowledge flag bit, and a validation flag bit, and the first fgclientID field in the first overhead frame is used to carry the identifier of the first service.

The third overhead frame carries the identifier of the first service, the third overhead frame includes a first fgclientID field, an fgOMFI field, a notification flag bit, a request flag bit, an acknowledge flag bit, and a validation flag bit, and the first fgclientID field in the third overhead frame is used to carry the identifier of the first service.

Optionally, the first overhead frame is included in one fine grain multiplexing unit (fine granularity multiplexing unit, fgMU) in the first overhead multiframe, and the first overhead multiframe includes 480 fgMUs.

Optionally, each of the 480 fgMUs includes an overhead frame, and the overhead frame in each fgMU carries an identifier of a service carried in a slot indicated by an fgOMFI field in the overhead frame. In other words, each overhead frame in the first overhead multiframe carries an identifier of a service carried in a slot indicated by an fgOMFI field in the overhead frame. It can be learned that the technical solution provided in this application is a full adjustment solution.

According to a second aspect, a slot adjustment method is provided. The method includes: A second device sends a first overhead frame to a first device, where the first overhead frame carries a slot adjustment request for a first service; and the second device receives a second overhead frame sent by the first device, where the second overhead frame carries an identifier of a second service and a slot adjustment acknowledge that is for the first service and that corresponds to the slot adjustment request, and a transmission direction of the second service is opposite to a transmission direction of the first service.

According to the technical solution provided in this application, the second device sends the slot adjustment request for the first service to the first device, so that the first device adjusts a slot used to carry the first service. In this way, a bandwidth of a transmission channel of the first service is adjusted by adjusting the slot used to carry the first service. The first device includes, for the second device, the slot adjustment acknowledge for the first service in the second overhead frame of the second service whose transmission direction is opposite to that of the first service, to avoid a case in which the second device cannot determine that the slot adjustment acknowledge corresponds to the first service, and therefore during slot adjustment, cannot adjust only the slot used to carry the first service. In a scenario in which fine grain private lines used to carry different services share some physical links, service damage caused by a bandwidth adjustment process can be avoided.

Optionally, the second overhead frame further carries an identifier of the first service. In other words, that the second overhead frame carries the slot adjustment acknowledge for the first service includes that the second overhead frame carries the identifier of the first service. Specifically, the second overhead frame carries the identifier of the first service and a slot adjustment acknowledge, and the identifier of the first service and the slot adjustment acknowledge jointly form the slot adjustment acknowledge for the first service. This technical solution is applicable to a scenario in which fine grain private lines carrying different services share some physical links and slot adjustment processes of these different services are isolated from each other, and is also applicable to a scenario in which fine grain private lines carrying different services share some physical links and slot adjustment processes of these different services are performed simultaneously.

According to the technical solution provided in this application, the first device includes, for the second device, the identifier of the first service and the slot adjustment acknowledge in the second overhead frame of the second service whose transmission direction is opposite to that of the first service, to indicate, to the second device, that the slot adjustment acknowledge is the slot adjustment acknowledge for the first service, to avoid a case in which the second device cannot determine that the slot adjustment acknowledge corresponds to the first service, and therefore during slot adjustment, cannot adjust only the slot used to carry the first service. In a scenario in which fine grain private lines used to carry different services share some physical links, service damage caused by a bandwidth adjustment process can be avoided.

Optionally, that the second overhead frame carries the slot adjustment acknowledge for the first service includes that the second overhead frame carries only the slot adjustment acknowledge, and the slot adjustment acknowledge is the slot adjustment acknowledge for the first service. This technical solution is applicable to a scenario in which fine grain private lines carrying different services share some physical links and slot adjustment processes of these different services are isolated from each other.

Optionally, that the first overhead frame carries the slot adjustment request for the first service includes: The first overhead frame carries the identifier of the first service and a slot adjustment request, and the identifier of the first service and the slot adjustment request jointly form the slot adjustment request for the first service. This technical solution is applicable to a scenario in which fine grain private lines carrying different services share some physical links and slot adjustment processes of these different services are isolated from each other, and is also applicable to a scenario in which fine grain private lines carrying different services share some physical links and slot adjustment processes of these different services are performed simultaneously. In this technical solution, the first overhead frame may further carry the identifier of the second service.

Optionally, that the first overhead frame carries the slot adjustment request for the first service includes that the first overhead frame carries only the slot adjustment request, and the slot adjustment request is the slot adjustment request for the first service. This technical solution is applicable to a scenario in which fine grain private lines carrying different services share some physical links and slot adjustment processes of these different services are isolated from each other. In this technical solution, the first overhead frame may further carry the identifier of the second service.

Optionally, the method further includes: When the second overhead frame meets an adjustment acknowledge condition, the second device determines that the second overhead frame carries the slot adjustment acknowledge for the first service, where the adjustment acknowledge condition includes any one of the following three conditions:
Condition 21: A value of an acknowledge flag bit in the second overhead frame is toggled compared with a value of an acknowledge flag bit in an overhead frame in a seventh overhead multiframe.

Condition 22: A value of an acknowledge flag bit in the second overhead frame is toggled compared with a value of an acknowledge flag bit in an overhead frame in a seventh overhead multiframe, and the value of the acknowledge flag bit in the second overhead frame is the same as a value of a request flag bit in an overhead frame in an eighth overhead multiframe.

Condition 23: A value of an acknowledge flag bit in the second overhead frame is a first value.

The second overhead frame is included in a ninth overhead multiframe, the ninth overhead multiframe and the seventh overhead multiframe are two overhead multiframes consecutively sent by the first device to the second device, the ninth overhead multiframe is located after the seventh overhead multiframe, and the eight overhead multiframe is an overhead multiframe that is being sent to the first device when the second device receives the second overhead frame.

According to the technical solution provided in this application, a plurality of adjustment acknowledge conditions are set for the second device to determine whether the slot adjustment acknowledge for the first service is received. This enriches implementations of determining, by the second device, whether the slot adjustment acknowledge for the first service is received. In addition, when the adjustment acknowledge condition includes the condition 22, the second device determines, with reference to toggle of the acknowledge flag bit and status comparison between the acknowledge flag bit and the request flag bit, whether the slot adjustment acknowledge for the first service is received, thereby improving reliability of determining, by the second device, whether the slot adjustment acknowledge for the first service is received.

Optionally, the adjustment acknowledge condition includes that the value of the acknowledge flag bit in the second overhead frame is the first value (that is, the condition 23); and the second overhead frame is a 1^{st} overhead frame in the ninth overhead multiframe, a value of an acknowledge flag bit in the 1^{st} overhead frame in the ninth overhead multiframe is the first value, and a value of an acknowledge flag bit in a remaining overhead frame in the ninth overhead multiframe is a second value; or the second overhead frame is any overhead frame in the ninth overhead multiframe, and a value of an acknowledge flag bit in each overhead frame in the ninth overhead multiframe is the first value.

Optionally, the method further includes: The second device sends a third overhead frame to the first device, where the third overhead frame carries a slot validation notification for the first service, and the slot validation notification indicates the first device to validate a slot adjustment result for the first service.

Optionally, that the third overhead frame carries the slot validation notification for the first service includes: The third overhead frame carries the identifier of the first service and a slot validation notification, and the identifier of the first service and the slot validation notification jointly form the slot validation notification for the first service. This technical solution is applicable to a scenario in which fine grain private lines carrying different services share some physical links and slot adjustment processes of these different services are isolated from each other, and is also applicable to a scenario in which fine grain private lines carrying different services share some physical links and slot adjustment processes of these different services are performed simultaneously. In this technical solution, the third overhead frame may further carry the identifier of the second service.

Optionally, that the third overhead frame carries the slot validation notification for the first service includes: The first overhead frame carries only the slot validation notification, and the slot validation notification is the slot validation notification for the first service. This technical solution is applicable to a scenario in which fine grain private lines carrying different services share some physical links and slot adjustment processes of these different services are isolated from each other. In this technical solution, the third overhead frame may further carry the identifier of the second service.

Optionally, the method further includes: The second device receives a fourth overhead frame sent by the first device, where the fourth overhead frame carries a slot adjustment notification for the first service, and the slot adjustment notification is used to notify the second device to adjust a slot used to carry the first service; and the second device adjusts, based on the slot adjustment notification for the first service, the slot used to carry the first service. The fourth overhead frame further carries the identifier of the second service.

According to the technical solution provided in this application, the second device adjusts, based on the slot adjustment notification that is for the first service and that is sent by the first device, the slot used to carry the first service, so that a bandwidth of a transmission channel of the first service is adjusted by adjusting the slot used to carry the first service. The first device includes, for the second device, the slot adjustment notification for the first service in the fourth overhead frame of the second service whose transmission direction is opposite to that of the first service, to avoid a case in which the second device cannot determine that the slot adjustment notification corresponds to the first service, and therefore during slot adjustment, cannot adjust only the slot used to carry the first service. In a scenario in which fine grain private lines used to carry different services share some physical links, service damage caused by a bandwidth adjustment process can be avoided.

Optionally, the fourth overhead frame further carries the identifier of the first service. In other words, that the fourth overhead frame carries the slot adjustment notification for the first service includes that the fourth overhead frame carries the identifier of the first service. Specifically, the fourth overhead frame carries the identifier of the first service and a slot adjustment notification, and the identifier of the first service and the slot adjustment notification jointly form the slot adjustment notification for the first service. This technical solution is applicable to a scenario in which fine grain private lines carrying different services share some physical links and slot adjustment processes of these different services are isolated from each other, and is also applicable to a scenario in which fine grain private lines carrying different services share some physical links and slot adjustment processes of these different services are performed simultaneously.

According to the technical solution provided in this application, the first device includes, for the second device, the identifier of the first service and the slot adjustment notification in the fourth overhead frame of the second service whose transmission direction is opposite to that of the first service, to indicate, to the second device, that the slot adjustment notification is the slot adjustment notification for the first service, to avoid a case in which the second device cannot determine that the slot adjustment notification corresponds to the first service, and therefore during slot adjustment, cannot adjust only the slot used to carry the first service. In a scenario in which fine grain private lines used to carry different services share some physical links, service damage caused by a bandwidth adjustment process can be avoided.

Optionally, that the fourth overhead frame carries the slot adjustment notification for the first service includes that the fourth overhead frame carries only the slot adjustment notification, and the slot adjustment notification is the slot adjustment notification for the first service. This technical solution is applicable to a scenario in which fine grain private lines carrying different services share some physical links and slot adjustment processes of these different services are isolated from each other.

Optionally, the method further includes: When the fourth overhead frame meets an adjustment notification condition, the second device determines that the fourth overhead frame carries the slot adjustment notification for the first service, where the adjustment notification condition includes any one of the following three conditions:
Condition 41: A value of a notification flag bit in the fourth overhead frame is toggled compared with a value of a notification flag bit in an overhead frame in a tenth overhead multiframe.

Condition 42: A value of a notification flag bit in the fourth overhead frame is toggled compared with a value of a notification flag bit in an overhead frame in a tenth overhead multiframe, and the value of the notification flag bit in the fourth overhead frame is different from a value of a request flag bit in an overhead frame in an eleventh overhead multiframe.

Condition 43: A value of a notification flag bit in the fourth overhead frame is a first value.

The fourth overhead frame is included in a twelfth overhead multiframe, the twelfth overhead multiframe and the tenth overhead multiframe are two overhead multiframes consecutively sent by the first device to the second device, the twelfth overhead multiframe is located after the tenth overhead multiframe, and the eleventh overhead multiframe is an overhead multiframe that is being sent to the first device when the second device receives the fourth overhead frame.

According to the technical solution provided in this application, a plurality of adjustment notification conditions are set for the second device to determine whether the slot adjustment notification for the first service is received. This enriches implementations of determining, by the second device, whether the slot adjustment notification for the first service is received. In addition, when the adjustment notification condition includes the condition 42, the second device determines, with reference to toggle of the notification flag bit and status comparison between the notification flag bit and the request flag bit, whether the slot adjustment notification for the first service is received, thereby improving reliability of determining, by the second device, whether the slot adjustment notification for the first service is received.

Optionally, the adjusting notification condition includes that the value of the notification flag bit in the fourth overhead frame is the first value (that is, the condition 43); and the fourth overhead frame is a 1^{st} overhead frame in the twelfth overhead multiframe, a value of a notification flag bit in the 1^{st} overhead frame in the twelfth overhead multiframe is the first value, and a value of a notification flag bit in a remaining overhead frame in the twelfth overhead multiframe is a second value; or the fourth overhead frame is any overhead frame in the twelfth overhead multiframe, and a value of a request flag bit in each overhead frame in the twelfth overhead multiframe is the first value.

Optionally, the second overhead frame further carries the identifier of the first service, the second overhead frame includes a first fgclientID field, a second fgclientID field, an fgOMFI field, a notification flag bit, a request flag bit, an acknowledge flag bit, and a validation flag bit, the first fgclientID field in the second overhead frame is used to carry the identifier of the second service, and the second fgclientID field in the second overhead frame is used to carry the identifier of the first service.

The fourth overhead frame further carries the identifier of the first service, the fourth overhead frame includes a first fgclientID field, a second fgclientID field, an fgOMFI field, a notification flag bit, a request flag bit, an acknowledge flag bit, and a validation flag bit, the first fgclientID field in the fourth overhead frame is used to carry the identifier of the second service, and the second fgclientID field in the fourth overhead frame is used to carry the identifier of the first service.

The first overhead frame carries the identifier of the first service and the identifier of the second service, the first overhead frame includes a first fgclientID field, a second fgclientID field, an fgOMFI field, a notification flag bit, a request flag bit, an acknowledge flag bit, and a validation flag bit, the first fgclientID field in the first overhead frame is used to carry the identifier of the first service, and the second fgclientID field in the first overhead frame is used to carry the identifier of the second service.

The third overhead frame carries the identifier of the first service and the identifier of the second service, the third overhead frame includes a first fgclientID field, a second fgclientID field, an fgOMFI field, a notification flag bit, a request flag bit, an acknowledge flag bit, and a validation flag bit, the first fgclientID field in the third overhead frame is used to carry the identifier of the first service, and the second fgclientID field in the third overhead frame is used to carry the identifier of the second service.

Optionally, the second overhead frame includes a first fgclientID field, an fgOMFI field, a notification flag bit, a request flag bit, an acknowledge flag bit, and a validation flag bit, and the first fgclientID field in the second overhead frame is used to carry the identifier of the second service.

The fourth overhead frame includes a first fgclientID field, an fgOMFI field, a notification flag bit, a request flag bit, an acknowledge flag bit, and a validation flag bit, and the first fgclientID field in the fourth overhead frame is used to carry the identifier of the second service.

The first overhead frame carries the identifier of the first service, the first overhead frame includes a first fgclientID field, an fgOMFI field, a notification flag bit, a request flag bit, an acknowledge flag bit, and a validation flag bit, and the first fgclientID field in the first overhead frame is used to carry the identifier of the first service.

The third overhead frame carries the identifier of the first service, the third overhead frame includes a first fgclientID field, an fgOMFI field, a notification flag bit, a request flag bit, an acknowledge flag bit, and a validation flag bit, and the first fgclientID field in the third overhead frame is used to carry the identifier of the first service.

Optionally, the first overhead frame is included in one fgMU in a first overhead multiframe, and the first overhead multiframe includes 480 fgMUs.

Optionally, each of the 480 fgMUs includes an overhead frame, and the overhead frame in each fgMU carries an identifier of a service carried in a slot indicated by an fgOMFI field in the overhead frame. In other words, each overhead frame in the first overhead multiframe carries an identifier of a service carried in a slot indicated by an fgOMFI field in the overhead frame. It can be learned that the technical solution provided in this application is a full adjustment solution.

Optionally, the first overhead frame is included in the first overhead multiframe (that is, the slot adjustment request for the first service is included in the first overhead multiframe), the second overhead frame is included in the ninth overhead multiframe (that is, the slot adjustment acknowledge for the first service is included in the ninth overhead multiframe), the third overhead frame is included in the sixth overhead multiframe (that is, the slot validation notification for the first service is included in the sixth overhead multiframe), and the fourth overhead frame is included in the twelfth overhead multiframe (that is, the slot adjustment notification for the first service is included in the twelfth overhead multiframe). If the value of the request flag bit in each overhead frame in the first overhead multiframe is the first value, the value of the acknowledge flag bit in each overhead frame in the ninth overhead multiframe is the first value, the value of the validation flag bit in each overhead frame in the sixth overhead multiframe is the first value, and the value of the notification flag bit in each overhead frame in the twelfth overhead multiframe is the first value, the second device starts to set the value of the request flag bit to the second value when sending the slot validation notification for the first service to the first device, the second device starts to set the value of the validation flag bit to the second value after validating the slot adjustment result for the first service, the first device starts to set the value of the notification flag bit to the second value when sending the slot adjustment acknowledge for the first service to the second device, and the first device starts to set the value of the acknowledge flag bit to the second value after validating the slot adjustment result for the first service. Specifically, the second device sets a value of a request flag bit in each overhead frame in the sixth overhead multiframe sent to the first device and an overhead multiframe after the sixth overhead multiframe to the second value, the second device sets a value of a validation flag bit in each overhead frame in the overhead multiframe after the sixth overhead multiframe sent to the first device to the second value, the first device sets a value of a notification flag bit in each overhead frame in the ninth overhead multiframe sent to the second device and an overhead multiframe after the ninth overhead multiframe to the second value, and from a next overhead multiframe of an overhead multiframe that is being sent to the second device when the slot validation notification for the first service is received, the first device starts to set a value of an acknowledge flag bit in each of overhead frames sent to the second device to the second value. For example, the first value is 1, the second value is 0, and the request flag bit, the acknowledge flag bit, the validation flag bit, and the notification flag bit are collectively referred to as adjustment flag bits or adjustment indication bits. Setting a value of the adjustment indication bit to the second value may also be described as returning the value of the adjustment indication bit to 0.

According to a third aspect, a slot adjustment apparatus is provided. The slot adjustment apparatus is used in a first device, and the slot adjustment apparatus includes modules configured to perform the method provided in any one of the first aspect or the optional manners of the first aspect. These modules may be implemented based on software, hardware, or a combination of software and hardware, and these modules may be randomly combined or split based on a specific implementation.

Optionally, the slot adjustment apparatus includes a transceiver module and a processing module. The transceiver module is configured to perform receiving and sending operations in the method provided in any one of the first aspect or the optional manners of the first aspect, and the processing module is configured to perform an operation other than the receiving and sending operations in the method provided in any one of the first aspect or the optional manners of the first aspect.

Optionally, the transceiver module is configured to receive a first overhead frame sent by a second device, where the first overhead frame carries a slot adjustment request for a first service.

The processing module is configured to adjust, based on the slot adjustment request for the first service, a slot used to carry the first service.

The transceiver module is further configured to send a second overhead frame to the second device, where the second overhead frame carries an identifier of a second service and a slot adjustment acknowledge that is for the first service and that corresponds to the slot adjustment request, and a transmission direction of the second service is opposite to a transmission direction of the first service.

Optionally, the second overhead frame further carries an identifier of the first service.

Optionally, the processing module is further configured to: when the first overhead frame meets an adjustment request condition, determine that the first overhead frame carries the slot adjustment request for the first service, where the adjustment request condition includes any one of the following:
a value of a request flag bit in the first overhead frame is toggled compared with a value of a request flag bit in an overhead frame in a second overhead multiframe;
a value of a request flag bit in the first overhead frame is toggled compared with a value of a request flag bit in an overhead frame in a second overhead multiframe, and the value of the request flag bit in the first overhead frame is different from a value of an acknowledge flag bit in an overhead frame in a third overhead multiframe; or
a value of a request flag bit in the first overhead frame is a first value, where
the first overhead frame is included in a first overhead multiframe, the first overhead multiframe and the second overhead multiframe are two overhead multiframes consecutively sent by the second device to the first device, the first overhead multiframe is located after the second overhead multiframe, and the third overhead multiframe is an overhead multiframe that is being sent to the second device when the first device receives the first overhead frame.

Optionally, the adjustment request condition includes that the value of the request flag bit in the first overhead frame is the first value.

The first overhead frame is a 1^{st} overhead frame in the first overhead multiframe, a value of a request flag bit in the 1^{st} overhead frame in the first overhead multiframe is the first value, and a value of a request flag bit in a remaining overhead frame in the first overhead multiframe is a second value.

Alternatively, the first overhead frame is any overhead frame in the first overhead multiframe, and a value of a request flag bit in each overhead frame in the first overhead multiframe is the first value.

Optionally, the transceiver module is further configured to receive a third overhead frame sent by the second device, where the third overhead frame carries a slot validation notification for the first service, and the slot validation notification indicates the first device to validate a slot adjustment result for the first service.

The processing module is further configured to validate the slot adjustment result for the first service based on the slot validation notification for the first service.

Optionally, the processing module is further configured to: when the third overhead frame meets a slot validation condition, determine that the third overhead frame carries the slot validation notification for the first service, where the slot validation condition includes any one of the following:
a value of a validation flag bit in the third overhead frame is toggled compared with a value of a validation flag bit in an overhead frame in a fourth overhead multiframe;
a value of a validation flag bit in the third overhead frame is toggled compared with a value of a validation flag bit in an overhead frame in a fourth overhead multiframe, and the value of the validation flag bit in the third overhead frame is the same as a value of an acknowledge flag bit in an overhead frame in a fifth overhead multiframe; or
a value of a validation flag bit in the third overhead frame is a first value, where
the third overhead frame is included in a sixth overhead multiframe, the sixth overhead multiframe and the fourth overhead multiframe are two overhead multiframes consecutively sent by the second device to the first device, the sixth overhead multiframe is located after the fourth overhead multiframe, and the fifth overhead multiframe is an overhead multiframe that is being sent to the second device when the first device receives the third overhead frame.

Optionally, the slot validation condition includes that the value of the validation flag bit in the third overhead frame is the first value.

The third overhead frame is any one of first m overhead frames in the sixth overhead multiframe, values of validation flag bits in the first m overhead frames in the sixth overhead multiframe are the first value, a value of a validation flag bit in a remaining overhead frame in the sixth overhead multiframe is a second value, and m is a positive integer; or the third overhead frame is any overhead frame in the sixth overhead multiframe, and a value of a validation flag bit in each overhead frame in the sixth overhead multiframe is the first value.

Optionally, the slot validation condition includes that values of validation flag bits in at least k consecutive overhead frames in the sixth overhead multiframe are the first value, the at least k consecutive overhead frames include the third overhead frame, and k is a positive integer.

Optionally, the transceiver module is further configured to send a fourth overhead frame to the second device, where the fourth overhead frame carries a slot adjustment notification for the first service, and the slot adjustment notification is used to notify the second device to adjust the slot used to carry the first service.

Optionally, the second overhead frame further carries the identifier of the first service, the second overhead frame includes a first fgclientID field, a second fgclientID field, an fgOMFI field, a notification flag bit, a request flag bit, an acknowledge flag bit, and a validation flag bit, the first fgclientID field is used to carry the identifier of the second service, and the second fgclientID field is used to carry the identifier of the first service.

Optionally, the second overhead frame includes a first fgclientID field, an fgOMFI field, a notification flag bit, a request flag bit, an acknowledge flag bit, and a validation flag bit, and the first fgclientID field is used to carry the identifier of the second service.

Optionally, the first overhead frame is included in one fgMU in the first overhead multiframe, and the first overhead multiframe includes 480 fgMUs.

Optionally, each of the 480 fgMUs includes an overhead frame, and the overhead frame in each fgMU carries an identifier of a service carried in a slot indicated by an fgOMFI field in the overhead frame.

According to a fourth aspect, a slot adjustment apparatus is provided. The slot adjustment apparatus is used in a second device, and the slot adjustment apparatus includes modules configured to perform the method provided in any one of the second aspect or the optional manners of the second aspect. These modules may be implemented based on software, hardware, or a combination of software and hardware, and these modules may be randomly combined or split based on a specific implementation.

Optionally, the slot adjustment apparatus includes a transceiver module and a processing module. The transceiver module is configured to perform receiving and sending operations in the method provided in any one of the second aspect or the optional manners of the second aspect, and the processing module is configured to perform an operation other than the receiving and sending operations in the method provided in any one of the second aspect or the optional manners of the second aspect.

Optionally, the transceiver module is configured to send a first overhead frame to a first device, where the first overhead frame carries a slot adjustment request for a first service; and receive a second overhead frame sent by the first device, where the second overhead frame carries an identifier of a second service and a slot adjustment acknowledge that is for the first service and that corresponds to the slot adjustment request, and a transmission direction of the second service is opposite to a transmission direction of the first service.

Optionally, the second overhead frame further carries an identifier of the first service.

Optionally, the processing module is configured to: when the second overhead frame meets an adjustment acknowledge condition, determine that the second overhead frame carries the slot adjustment acknowledge for the first service, where the adjustment acknowledge condition includes any one of the following:
a value of an acknowledge flag bit in the second overhead frame is toggled compared with a value of an acknowledge flag bit in an overhead frame in a seventh overhead multiframe;
a value of an acknowledge flag bit in the second overhead frame is toggled compared with a value of an acknowledge flag bit in an overhead frame in a seventh overhead multiframe, and the value of the acknowledge flag bit in the second overhead frame is the same as a value of a request flag bit in an overhead frame in an eighth overhead multiframe; or
a value of an acknowledge flag bit in the second overhead frame is a first value, where
the second overhead frame is included in a ninth overhead multiframe, the ninth overhead multiframe and the seventh overhead multiframe are two overhead multiframes consecutively sent by the first device to the second device, the ninth overhead multiframe is located after the seventh overhead multiframe, and the eight overhead multiframe is an overhead multiframe that is being sent to the first device when the second device receives the second overhead frame.

Optionally, the adjustment acknowledge condition includes that the value of the acknowledge flag bit in the second overhead frame is the first value.

The second overhead frame is a 1^{st} overhead frame in the ninth overhead multiframe, a value of an acknowledge flag bit in the 1^{st} overhead frame in the ninth overhead multiframe is the first value, and a value of an acknowledge flag bit in a remaining overhead frame in the ninth overhead multiframe is a second value.

Alternatively, the second overhead frame is any overhead frame in the ninth overhead multiframe, and a value of an acknowledge flag bit in each overhead frame in the ninth overhead multiframe is the first value.

Optionally, the transceiver module is configured to send a third overhead frame to the first device, where the third overhead frame carries a slot validation notification for the first service, and the slot validation notification indicates the first device to validate a slot adjustment result for the first service.

Optionally, the transceiver module is configured to receive a fourth overhead frame sent by the first device, where the fourth overhead frame carries a slot adjustment notification for the first service, and the slot adjustment notification is used to notify the second device to adjust a slot used to carry the first service.

The processing module is configured to adjust, based on the slot adjustment notification for the first service, the slot used to carry the first service.

Optionally, the processing module is configured to: when the fourth overhead frame meets an adjustment notification condition, determine that the fourth overhead frame carries the slot adjustment notification for the first service, where the adjustment notification condition includes any one of the following:
a value of a notification flag bit in the fourth overhead frame is toggled compared with a value of a notification flag bit in an overhead frame in a tenth overhead multiframe;
a value of a notification flag bit in the fourth overhead frame is toggled compared with a value of a notification flag bit in an overhead frame in a tenth overhead multiframe, and the value of the notification flag bit in the fourth overhead frame is different from a value of a request flag bit in an overhead frame in an eleventh overhead multiframe; or
a value of a notification flag bit in the fourth overhead frame is a first value, where
the fourth overhead frame is included in a twelfth overhead multiframe, the twelfth overhead multiframe and the tenth overhead multiframe are two overhead multiframes consecutively sent by the first device to the second device, the twelfth overhead multiframe is located after the tenth overhead multiframe, and the eleventh overhead multiframe is an overhead multiframe that is being sent to the first device when the second device receives the fourth overhead frame.

Optionally, the adjustment notification condition includes that the value of the notification flag bit in the fourth overhead frame is the first value.

The fourth overhead frame is a 1^{st} overhead frame in the twelfth overhead multiframe, a value of a notification flag bit in the 1^{st} overhead frame in the twelfth overhead multiframe is the first value, and a value of a notification flag bit in a remaining overhead frame in the twelfth overhead multiframe is a second value.

Alternatively, the fourth overhead frame is any overhead frame in the twelfth overhead multiframe, and a value of a request flag bit in each overhead frame in the twelfth overhead multiframe is the first value.

Optionally, the second overhead frame further carries the identifier of the first service, the second overhead frame includes a first fgclientID field, a second fgclientID field, an fgOMFI field, a notification flag bit, a request flag bit, an acknowledge flag bit, and a validation flag bit, the first fgclientID field is used to carry the identifier of the second service, and the second fgclientID field is used to carry the identifier of the first service.

Optionally, the second overhead frame includes a first fgclientID field, an fgOMFI field, a notification flag bit, a request flag bit, an acknowledge flag bit, and a validation flag bit, and the first fgclientID field is used to carry the identifier of the second service.

Optionally, the first overhead frame is included in one fgMU in a first overhead multiframe, and the first overhead multiframe includes 480 fgMUs.

Optionally, each of the 480 fgMUs includes an overhead frame, and the overhead frame in each fgMU carries an identifier of a service carried in a slot indicated by an fgOMFI field in the overhead frame.

According to a fifth aspect, a slot adjustment apparatus is provided, including a memory and a processor. The memory is configured to store a computer program. The processor is configured to execute the computer program stored in the memory, to enable the slot adjustment apparatus to perform the method provided in any one of the first aspect or the optional manners of the first aspect, or perform the method provided in any one of the second aspect or the optional manners of the second aspect.

According to a sixth aspect, a slot adjustment apparatus is provided, including a main control board and an interface board. The main control board and the interface board are configured to implement the method provided in any one of the first aspect or the optional manners of the first aspect, or implement the method provided in any one of the second aspect or the optional manners of the second aspect.

According to a seventh aspect, a communication system is provided, including a first device and a second device. The first device includes the apparatus provided in any one of the third aspect or the optional manners of the third aspect, and the second device includes the apparatus provided in any one of the fourth aspect or the optional manners of the fourth aspect; or at least one of the first device and the second device includes the apparatus provided in the fifth aspect or the sixth aspect.

According to an eighth aspect, a computer-readable storage medium is provided. The computer-readable storage medium stores a computer program. When the computer program is executed, the method provided in any one of the first aspect or the optional manners of the first aspect is implemented, or the method provided in any one of the second aspect or the optional manners of the second aspect is implemented.

According to a ninth aspect, a computer program product is provided. The computer program product includes a program or code. When the program or the code is executed, the method provided in any one of the first aspect or the optional manners of the first aspect is implemented, or the method provided in any one of the second aspect or the optional manners of the second aspect is implemented.

According to a tenth aspect, a chip is provided. When the chip runs, the method provided in any one of the first aspect or the optional manners of the first aspect is implemented, or the method provided in any one of the second aspect or the optional manners of the second aspect is implemented.

Optionally, the chip includes a programmable logic circuit and/or program instructions.

Optionally, the chip is a network processor (network processor, NP) chip.

For technical effects of the third aspect to the tenth aspect, refer to technical effects of any one of the first aspect and the optional implementations of the first aspect, and refer to technical effects of any one of the second aspect and the optional implementations of the second aspect. Details are not described herein again.

### BRIEF DESCRIPTION OF DRAWINGS

FIG. 1 is a diagram of a base frame;
FIG. 2 is a diagram of an fgMU;
FIG. 3 is a diagram of an fgMU overhead frame;
FIG. 4 is a diagram of an application scenario according to an embodiment of this application;
FIG. 5 is a diagram of another application scenario according to an embodiment of this application;
FIG. 6 is a diagram of another application scenario according to an embodiment of this application;
FIG. 7 is a diagram of an overhead frame according to an embodiment of this application;
FIG. 8 is a diagram of another overhead frame according to an embodiment of this application;
FIG. 9 is a diagram of an overhead multiframe according to an embodiment of this application;
FIG. 10 is a diagram of another overhead multiframe according to an embodiment of this application;
FIG. 11 is a flowchart of a slot adjustment method according to an embodiment of this application;
FIG. 12 is a diagram of a slot adjustment method according to an embodiment of this application;
FIG. 13 is a diagram of another slot adjustment method according to an embodiment of this application;
FIG. 14 is a diagram of a slot adjustment method according to an embodiment of this application;
FIG. 15 is a diagram of another slot adjustment method according to an embodiment of this application;
FIG. 16A and FIG. 16B are a schematic flowchart of deleting a slot according to an embodiment of this application;
FIG. 17A and FIG. 17B are a schematic flowchart of adding a slot according to an embodiment of this application;
FIG. 18 is a diagram of a change in an adjustment indication bit in a slot deletion procedure according to an embodiment of this application;
FIG. 19 is a diagram of a change in an adjustment indication bit in a slot addition procedure according to an embodiment of this application;
FIG. 20A and FIG. 20B are another schematic flowchart of deleting a slot according to an embodiment of this application;
FIG. 21A and FIG. 21B are another schematic flowchart of adding a slot according to an embodiment of this application;
FIG. 22A and FIG. 22B are another schematic flowchart of deleting a slot according to an embodiment of this application;
FIG. 23A and FIG. 23B are another schematic flowchart of adding a slot according to an embodiment of this application;
FIG. 24A and FIG. 24B are another schematic flowchart of deleting a slot according to an embodiment of this application;
FIG. 25A and FIG. 25B are another schematic flowchart of adding a slot according to an embodiment of this application;
FIG. 26 is a diagram of a slot adjustment apparatus according to an embodiment of this application;
FIG. 27 is a diagram of another slot adjustment apparatus according to an embodiment of this application; and
FIG. 28 is a diagram of another slot adjustment apparatus according to an embodiment of this application.

### DESCRIPTION OF EMBODIMENTS

The following further describes in detail implementations of this application with reference to accompanying drawings.

A fine grain technology is also referred to as an Ethernet hard private line technology. Based on a ubiquitous Ethernet (X-Ethernet) technology and standard and a corresponding bearer network, the fine grain technology provides a million bits per second (million bits per second, Mbps)-level fine grain hard channel, supports low-latency and low-jitter circuit switching, meets evolution of a packet transport network (packet transport network, PTN) device, an internet protocol (internet protocol, IP) radio access network (IP radio access network, IPRAN) device, and the like, and supports a service carrying requirement of a high-quality and low-speed private line.

Conventional private line carrying technologies are classified into two main directions: packet switching and circuit switching. Packet switching is based on packet processing and forwarding, and is capable of statistical multiplexing. Circuit switching is usually based on time division multiplexing (time division multiplexing, TDM) slot switching, exclusively uses a bandwidth resource, and has good isolation.

An X-Ethernet technology corresponds to a PTN standard and an international telecommunication union (International Telecommunication Union, ITU) telecommunication standardization sector (ITU Telecommunication Standardization Sector, ITU-T) metro transport network (metro transport network, MTN) standard. The X-Ethernet technology divides a TDM slot on the Ethernet, and is a circuit switching technology. However, a granularity of a slot obtained through division is too large. For example, a bandwidth of a slot defined in the MTN standard is 5 gigabits per second (gigabits per second, Gbps). When the slot supports a fine grain packet private line with a bandwidth less than 1 Gbps, a bandwidth is wasted and efficiency is low. In other words, when the slot carries a service with a bandwidth less than 1 Gbps, a bandwidth is wasted and efficiency is low.

A standard of a fine grain technology corresponds to an ITU-T fine grain MTN (fine granularity MTN, fgMTN) project. The fine grain technology divides a large channel into fine grain slots to provide a fine grain channel isolation capability. The large channel may be a coarse grain slot or 10G BASE-R PHY, and the coarse grain slot is also referred to as a large granularity slot, a large grain slot, a coarse granularity slot, or the like. For example, a slot with a bandwidth of 5 Gbps defined in an MTN standard is a type of coarse grain slot. The fine grain slot is also referred to as a small granularity slot, a small grain slot, a fine granularity slot (fine granularity slot, fgslot) or (fine granularity calendar slot, fgCS), a sub-slot (sub-slot), or the like. For example, a coarse grain slot with a bandwidth of 5 Gbps may be divided into 480 fine grain slots with a bandwidth of 10 Mbps. The fine grain slot has a nominal rate of 10.1 Mbps, and has an actual rate of (10.41625-100 ppm) Mbps to (10.41625+100 ppm) Mbps, where ppm indicates parts per million (parts per million). 1% bandwidth expansion is additionally considered for each fine grain slot to carry operation, administration, and maintenance (operation, administration, and maintenance, OAM) data. Each fine grain slot provides a bandwidth of 10 Mbps for a fine grain client (fine granularity client, fgclient). One fine grain slot may be independently allocated to one fgclient for use, and one fgclient may be allocated at least one fine grain slot. For example, one fgclient corresponds to one service, one fine grain slot may be independently allocated to one service for use, and one service may be allocated at least one fine grain slot.

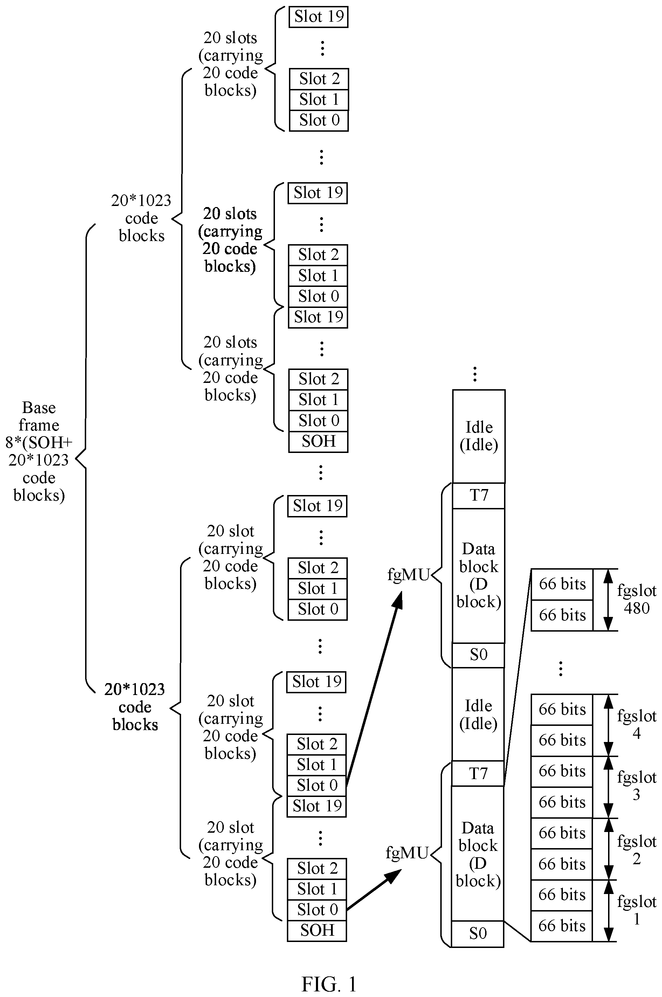

FIG. 1 is a diagram of a base frame. In FIG. 1, SOH represents a section overhead (section overhead), a length of SOH is 66 bits (bit), and SOH includes 2 synchronization bits and 64 payload bits; slot represents a coarse granularity slot, and a bandwidth of slot is 5 Gbps; and fgslot represents a fine grain slot, and a bandwidth of fgslot is 10 Mbps. As shown in FIG. 1, one base frame includes 8*(SOH+20*1023 code blocks), and each code block is carried in one slot. Therefore, it may also be described as that one base frame includes 8*(SOH+20*1023 slots). In some documents, a structure including one (SOH+20*1023 code blocks) is referred to as one MTN section layer frame. Therefore, one base frame includes eight MTN section layer frames. A slot 0 in the base frame may be used to carry a fine grain service (a slot 1 to a slot 19 may also be used to carry a fine grain service, and this is not limited in embodiments of this application). For example, as shown in FIG. 1, the slot 0 is used to carry a fine grain multiplexing unit (fine granularity multiplexing unit, fgMU), and an idle (idle) code block is filled between adjacent fgMUs, so that a quantity of code blocks received by a receiving device in 1 second matches a quantity of code blocks sent by a sending device in 1 second. The fgMU uses a 64/66B encoding type in IEEE-802.3 Clause 82 for encoding. During transmission on a service channel at an MTN channel layer, idle code blocks between fgMUs may be added and/or deleted to implement rate adaptation.

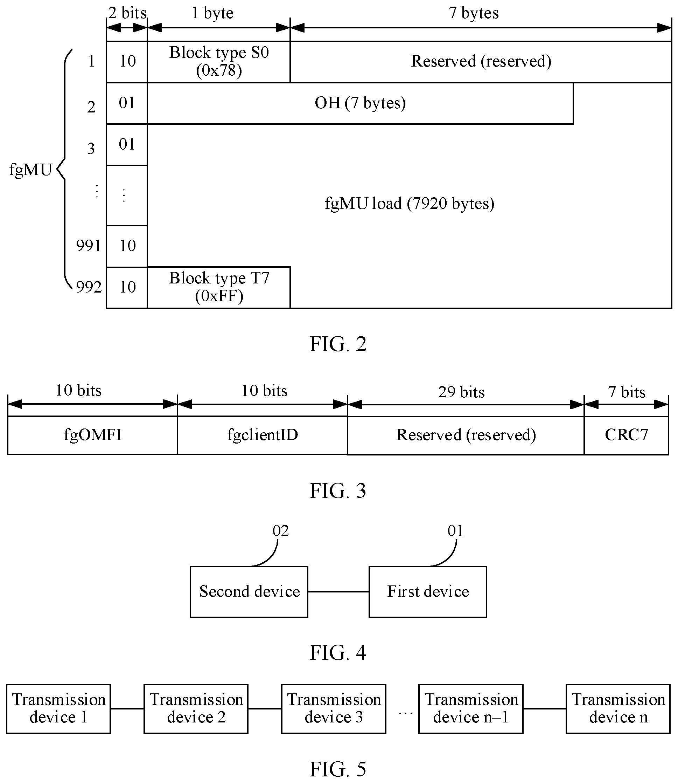

FIG. 2 is a diagram of an fgMU. One fgMU includes one start (start, S) code block (S0 code block), 990 data (data, D) code blocks, and one terminate (terminate, T) code block (T7 code block). The S0 code block is the first code block in the fgMU, the T7 code block is the last code block in the fgMU, and lengths of the S0 code block, the D code block, and the T7 code block are all 66 bits. Therefore, one fgMU includes 992 code blocks whose lengths are 66 bits. The S0 code block is compatible with the Ethernet and includes a preamble and a frame delimiter. The 990 D code blocks and the one T7 code block provide a data area whose length is 990×8+7=7927 bytes. The data area is used to carry content of 7927 bytes. The data area includes an overhead (overhead, OH) area whose length is 7 bytes and a payload area whose length is 7920 bytes. The payload area is also referred to as an fgMU payload or an fgMU payload area. The fgMU payload includes 480 fgslots with a bandwidth of 10 Mbps (that is, one slot with a bandwidth of 5 Gbps is divided into 480 fgslots with a bandwidth of 10 Mbps). Each fgslot is used to carry two code blocks that are from a same service and whose lengths are 66 bits, and each fgslot may be independently allocated to one fgclient for use. The overhead area is an overhead frame included in the fgMU, and the overhead area is also referred to as an fgMU overhead area or an fgMU overhead frame. An fgMU overhead frame that reaches a consensus currently in ITU-T is shown in FIG. 3. The fgMU overhead frame includes a fine grain overhead multiframe indicator (fine grain overhead multiframe indicator, fgOMFI) field, a fine grain client identification (fine grain client identity document, fgclientID) field, a reserved (reserved, Res) field, and a cyclic redundancy check (cyclic redundancy check, CRC) 7 field. A length of the fgOMFI field is 10 bits. The 1^{st} bit (most significant bit) in the fgOMFI field is reserved for future extension. Currently, the 2^{nd} to 10^{th} bits are used. A value of the fgOMFI field ranges from 0 to 479. The fgOMFI field indicates an fgslot corresponding to an fgclientID in the fgMU overhead frame to which the fgOMFI field belongs. For example, when fgOMFI=0 (that is, the value of the fgOMFI field is 0), the fgOMFI field indicates that the fgclientID in the fgMU overhead frame to which the fgOMFI field belongs corresponds to an fgslot 1. When fgOMFI=479 (that is, the value of the fgOMFI field is 479), the fgOMFI field indicates that the fgclientID in the fgMU overhead frame to which the fgOMFI field belongs corresponds to an fgslot 480. A length of the fgclientID field is 10 bits, a value of the fgclientID field ranges from 1 to 480, and the fgclientID field is used to carry a fine grain client identifier (that is, a service identifier). When fgclientID=0 (that is, the value of the fgclientID field is 0), it indicates that an fgslot corresponding to the fgclientID is not occupied. The CRC7 field is used to check bits from the fgclientID field to the CRC7 field, that is, the 11^{th} to 49^{th} bits in the fgMU overhead frame.

In the fine grain technology, a quantity of fine grain slots needed to carry a service is determined based on a bandwidth requirement of the service and a bandwidth of the fine grain slot, and a fine grain slot used to carry the service is allocated to the service based on the quantity of fine grain slots needed by the service. A quantity of fine grain slots allocated to the service determines a bandwidth of a transmission channel of the service. However, in a service transmission process, the bandwidth requirement of the service may change. In this case, the bandwidth of the transmission channel of the service may be adjusted by adjusting the fine grain slot used to carry the service, that is, adjusting a fine grain slot included in the transmission channel of the service, so that the bandwidth of the transmission channel of the service meets the bandwidth requirement of the service, and a bandwidth waste is avoided. For example, the bandwidth of the transmission channel of the service may be adjusted by adding and/or deleting a fine grain slot used to carry the service. Currently, the fine grain slot used to carry the service is usually adjusted in an incremental adjustment manner. However, currently, ITU-T SG15 Q11 has determined to adjust, in a full adjustment manner, the fine grain slot used to carry the service. Therefore, a solution for adjusting, in the full adjustment manner, the fine grain slot used to carry the service is needed. The incremental adjustment manner means that an overhead multiframe carries slot configuration information (or referred to as slot negotiation information) of only a service whose slot needs to be adjusted, and the full adjustment manner means that an overhead multiframe carries slot configuration information of a service whose slot needs to be adjusted and slot configuration information of a service whose slot does not need to be adjusted. One overhead multiframe includes a plurality of overhead frames. In the incremental adjustment manner, some overhead frames in one overhead multiframe need to carry slot configuration information of a corresponding service, other overhead frames do not need to carry the slot configuration information, and other overhead frames are in an idle state. In the full adjustment manner, all overhead frames in one overhead multiframe need to carry slot configuration information of a corresponding service.

Embodiments of this application provide a slot adjustment solution. The slot adjustment solution is a full adjustment solution. In the slot adjustment solution, a bandwidth of a transmission channel of a first service may be adjusted by adjusting a slot (for example, a fine grain slot) used to carry the first service, so that the bandwidth of the transmission channel of the first service meets a bandwidth requirement of the first service, and a bandwidth waste is avoided. In this slot adjustment solution, a slot used to carry a service is adjusted based on a service granularity. In a scenario in which a plurality of fine grain private lines share some physical links, service damage caused by a bandwidth adjustment process can be avoided.

The following describes the technical solutions in embodiments of this application. An application scenario of embodiments of this application is first described. In the following description, unless otherwise specified, each described slot is a fine grain slot, for example, an fgslot or an fgCS.

FIG. 4 is a diagram of an application scenario according to an embodiment of this application. The application scenario provides a communication system. The communication system includes a first device 01 and a second device 02. A transmission channel is established between the first device 01 and the second device 02. The transmission channel may be a wired transmission channel or a wireless transmission channel. The first device 01 and the second device 02 adjust, through slot negotiation, a slot used to carry a first service. The first device 01 and the second device 02 are intended to distinguish between two transmission devices that perform negotiation interaction, but are not intended to limit operations performed by the transmission devices. In some cases, the first device 01 may be used as the second device 02 to perform an operation related to the second device 02, and the second device 02 may be used as the first device 01 to perform an operation related to the first device 01. For example, the first device 01 is further connected to a downstream transmission device, and the first device 01 performs slot negotiation with the downstream transmission device of the first device 01 after ending slot negotiation with the second device 02. In this case, the first device 01 is used as the second device 02 to perform an operation related to the second device 02 in a slot adjustment method. For another example, the second device 02 is further connected to an upstream transmission device, and the second device 02 further performs slot negotiation with the upstream transmission device of the second device 02 before or after slot negotiation with the first device 01. In this case, the second device 02 is used as the first device 01 to perform an operation related to the first device 01 in a slot adjustment method.

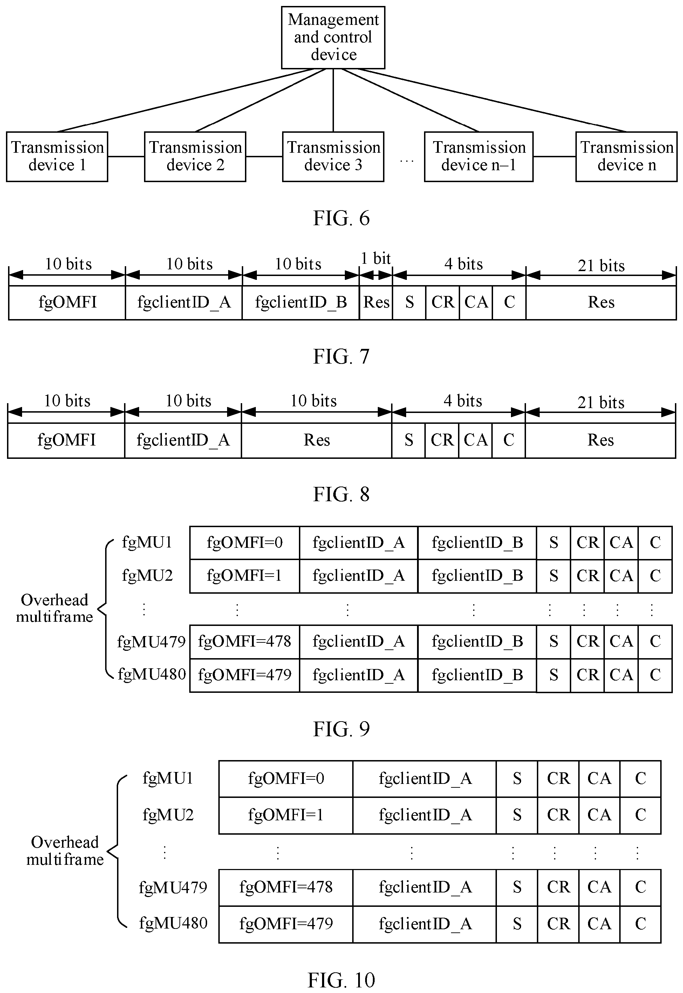

FIG. 5 is a diagram of another application scenario according to an embodiment of this application. A communication system provided in this application scenario includes transmission devices 1 to n. A transmission channel is established between adjacent transmission devices in the transmission devices 1 to n, and the adjacent transmission devices in the transmission devices 1 to n adjust, through slot negotiation, a slot used to carry a first service. Any two adjacent transmission devices in the transmission devices 1 to n are the first device 01 and the second device 02. For example, the transmission device 1 is the second device 02, and the transmission device 2 is the first device 01. For another example, the transmission device 2 is the second device 02, and the transmission device 3 is the first device 01. For another example, the transmission device n-1 is the second device 02, and the transmission device n is the first device 01. In some embodiments, the communication system further includes a management and control device. FIG. 6 is a diagram of another application scenario according to an embodiment of this application. A communication system provided in this application scenario further includes a management and control device. The management and control device is configured to deliver slot adjustment information to a transmission device that is in transmission devices 1 to n and that is located on a transmission path of a first service. Adjacent transmission devices that are in the transmission devices 1 to n and that are located on the transmission path of the first service adjust, through slot negotiation based on the slot adjustment information delivered by the management and control device, a slot used to carry the first service. For example, the transmission devices 1 to n are all located on the transmission path of the first service. The transmission device 1 and the transmission device 2 adjust, through slot negotiation based on the slot adjustment information delivered by the management and control device, a slot used to carry the first service. The transmission device 2 and the transmission device 3 adjust, through slot negotiation based on the slot adjustment information delivered by the management and control device, a slot used to carry the first service. The transmission device n-1 and the transmission device n adjust, through slot negotiation based on the slot adjustment information delivered by the management and control device, a slot used to carry the first service. The slot adjustment information delivered by the management and control device includes indication information of a service whose slot needs to be adjusted and adjustment indication information; or the slot adjustment information delivered by the management and control device includes indication information of a service whose slot needs to be adjusted, adjustment indication information, and indication information of a slot that needs to be adjusted. For example, the indication information of the service whose slot needs to be adjusted may be an identifier of the service, for example, an fgclientID indicating the service whose slot needs to be adjusted; the adjustment indication information indicates adding or deleting a slot; and the indication information of the slot that needs to be adjusted may be an identifier, a number, or the like of the slot that needs to be adjusted, and may be specifically an fgsoltID of the slot that needs to be adjusted.

In embodiments of this application, adjusting the slot used to carry the first service includes: adding a slot used to carry the first service and/or deleting a slot used to carry the first service. A process of adding the slot used to carry the first service is completed hop by hop from a sink end to a source end of the transmission path of the first service. A process of deleting the slot used to carry the first service is completed hop by hop from the source end to the sink end of the transmission path of the first service. For example, as shown in FIG. 5 and FIG. 6, the transmission path of the first service is the transmission device 1 -> the transmission device 2 -> the transmission device 3 ... -> the transmission device n-1 -> the transmission device n. The transmission device 1 is the source end of the transmission path of the first service, and the transmission device n is the sink end of the transmission path of the first service. The process of adding the slot used to carry the first service is completed hop by hop from the transmission device n to the transmission device 1. The process of deleting the slot used to carry the first service is completed hop by hop from the transmission device 1 to the transmission device n.

In embodiments of this application, the transmission device may be any device having a data transmission function. For example, the transmission device is a switch (switch), a router (router), a gateway (gateway, GW), a PTN device, an IPRAN device, a terminal device, or a server, and the transmission devices 1 to n may include a provider edge (provider edge, PE) device and a provider (provider, P) device. For example, the transmission device 1 and the transmission device n are both PE devices, and the transmission devices 2 to n-1 are all P devices. In some cases, a slot adjustment function of the transmission device is integrated into a chip or a network adapter in the transmission device. For example, when the transmission device is a switch, a router, a gateway, a PTN device, an IPRAN device, or the like, the transmission device includes a network processor (network processor, NP) chip, and the slot adjustment function of the transmission device is integrated into the NP chip in the transmission device. For another example, when the transmission device is a terminal device or a server, the transmission device includes a network adapter, and the slot adjustment function of the transmission device is integrated into the network adapter in the transmission device. In addition, the slot adjustment method in embodiments of this application may be implemented by software, hardware, or a combination of software and hardware in the transmission device. The management and control device may be a controller or a third-party network element, and the management and control device may integrate functions such as network management, service control, and network analysis. The controller is a functional module deployed in a server, or a server, or a server cluster including several servers, or a cloud computing service center, or another device or module having a network control function. This is not limited in embodiments of this application.

The foregoing describes the application scenarios of embodiments of this application, and the following describes method embodiments of this application.

In the slot adjustment method provided in embodiments of this application, slot configuration information (or referred to as slot negotiation information) is transmitted between adjacent transmission devices by using an overhead multiframe as a unit. In embodiments of this application, it is defined that one overhead multiframe includes 480 fgMUs, and one fgMU includes one overhead frame (or referred to as an fgMU overhead frame), and overhead frames in two formats are defined. The overhead frames in the two formats can be used to adjust, in a full adjustment manner, configuration information of a slot used to carry a service. To facilitate the following description of the slot adjustment method provided in embodiments of this application, the following first describes an overhead frame and an overhead multiframe that are defined in embodiments of this application.

FIG. 7 is a diagram of an overhead frame according to an embodiment of this application. The overhead frame includes an fgOMFI field, an fgclientID_A field, an fgclientID_B field, a notification flag bit S, a request flag bit CR, an acknowledge flag bit CA, a validation flag bit C, and two reserved (reserved, Res) fields. A length of the overhead frame is 56 bits, lengths of the fgOMFI field, the fgclientID_A field, and the fgclientID_B field are 10 bits, lengths of the notification flag bit S, the request flag bit CR, the acknowledge flag bit CA, and the validation flag bit C are 1 bit, a length of one Res field of the two Res fields is 1 bit, and a length of the other Res field is 21 bits. A value of the fgOMFI field ranges from 0 to 479. The fgOMFI field is used to carry a number of an overhead frame to which the fgOMFI field belongs, and indicates a slot (for example, fgslot) corresponding to fgclientID_A in the overhead frame. For example, when fgOMFI=0 (that is, the value of the fgOMFI field is 0), it indicates that the overhead frame is a 1^{st} overhead frame, and the fgOMFI field indicates that fgclientID_A in the overhead frame corresponds to an fgslot 1. When fgOMFI=479 (that is, the value of the fgOMFI field is 479), it indicates that the overhead frame is a 480^{th} overhead frame, and the fgOMFI field indicates that fgclientID_A in the overhead frame corresponds to an fgslot 480. The fgclientID_A field is used to carry an identifier of a service carried in a slot indicated by the fgOMFI field, and the fgclientID_B field is used to carry an identifier of a reverse service of the service carried in the slot indicated by the fgOMFI field. A transmission direction of the reverse service is opposite to a transmission direction of the service carried in the slot indicated by the fgOMFI field. For example, the service carried in the slot indicated by the fgOMFI field is a service A, a reverse service of the service A is a service B, a transmission direction of the service B is opposite to a transmission direction of the service A, the fgclientID_A field is used to carry an identifier of the service A, and the fgclientID_B field is used to carry an identifier of the service B. For example, if fgOMFI=0, the fgclientID_A field is used to carry an identifier of a service A carried in the fgslot 1. For another example, if fgOMFI=479, the fgclientID_A field is used to carry an identifier of a service A carried in the fgslot 480. The request flag bit is also referred to as a calendar switch request (calendar switch request, CR) flag bit or an adjustment request flag bit, and the acknowledge flag bit is also referred to as a calendar switch acknowledge (calendar switch acknowledge, CA) flag bit or an adjustment acknowledge flag bit. The notification flag bit S is usually used in a scenario of adding a slot. Therefore, the notification flag bit S is also referred to as a slot increase adjustment notification flag bit. The notification flag bit S, the request flag bit CR, the acknowledge flag bit CA, and the validation flag bit C are collectively referred to as adjustment flag bits or adjustment indication bits, and these adjustment flag bits are used by adjacent transmission devices to perform slot negotiation. Specifically, the notification flag bit S is used by a downstream device to send an overhead frame 1 including an S message (that is, a slot adjustment notification or a slot increase adjustment notification) to an upstream device, to notify the upstream device to start to adjust a slot of a service corresponding to fgclientID_B (that is, a service indicated by a service identifier carried in fgclientID_B) in the overhead frame 1. The request flag bit CR is used by the upstream device to send an overhead frame 2 including a CR message (that is, a slot adjustment request) to the downstream device, to request the downstream device to adjust a slot of a service corresponding to fgclientID_A in the overhead frame 2. The service corresponding to fgclientID_A in the overhead frame 2 and the service corresponding to fgclientID_B in the overhead frame 1 are a same service. After sending the overhead frame 2 including the CR message to the downstream device, the upstream device sets CA message (that is, a slot adjustment acknowledge) acknowledge expiration duration. If no CA message sent by the downstream device is received within the expiration duration, the upstream device reports alarm information to a management and control device, so that the management and control device performs a management and control operation. The acknowledge flag bit CA is used by the downstream device to send an overhead frame 3 including a CA message (that is, a slot adjustment acknowledge) to the upstream device after receiving the overhead frame 2 including the CR message. A service corresponding to fgclientID_B in the overhead frame 3 and the service corresponding to fgclientID_A in the overhead frame 2 are a same service. The validation flag bit C is used by the upstream device to send an overhead frame 4 including a C message (that is, a slot validation notification) to the downstream device after receiving the overhead frame 3 including the CA message, to notify the downstream device to validate a slot adjustment result. A service corresponding to fgclientID_A in the overhead frame 4 and the service corresponding to fgclientID_B in the overhead frame 3 are a same service.

FIG. 8 is a diagram of another overhead frame according to an embodiment of this application. A difference between the overhead frame shown in FIG. 8 and the overhead frame shown in FIG. 7 lies in that: The overhead frame shown in FIG. 8 does not include an fgclientID_B field used to carry an identifier of a reverse service. Meanings of fields in the overhead frame shown in FIG. 8 are the same as meanings of related fields in the overhead frame shown in FIG. 7. Details are not described herein again. Because the overhead frame shown in FIG. 8 does not include the fgclientID_B field used to carry the identifier of the reverse service, an overhead frame that includes an S message, an overhead frame that includes a CA message, and the like that are sent by a downstream device to an upstream device each cannot carry the identifier of the reverse service. For example, an overhead frame of a downlink service cannot carry an identifier of an uplink service, and an overhead frame of a downlink service cannot carry an identifier of an uplink service. Therefore, the overhead frame shown in FIG. 8 is applicable to a scenario in which slot adjustment processes of different services in a same transmission direction are isolated from each other (or referred to as independent of each other). In this scenario, an identifier of a reverse service does not need to be carried in an overhead frame. That the slot adjustment processes of the different services in the same transmission direction are isolated from each other includes: Slots used to carry these different services are adjusted in a time division manner, and only a slot used to carry one service is adjusted at each moment (or a similar time description, for example, in each time period, in each phase, or in each adjustment period). For example, the different services in the same transmission direction include a first service and a third service. A slot used to carry the first service is first adjusted, and then a slot used to carry the third service is adjusted after the slot used to carry the first service is adjusted; or a slot used to carry the third service is first adjusted, and then a slot used to carry the first service is adjusted after the slot used to carry the third service is adjusted.

FIG. 9 is a diagram of an overhead multiframe according to an embodiment of this application. The overhead multiframe includes 480 fgMUs, and each fgMU includes the overhead frame shown in FIG. 7 (FIG. 9 shows only some fields in the overhead frame in the fgMU, and does not show other content in the fgMU). fgOMFI=0 to fgOMFI=479 are in one-to-one correspondence with 480 slots (fgslots). For example, fgOMFI=0 corresponds to an fgslot 1, fgOMFI=1 corresponds to an fgslot 2, fgOMFI=478 corresponds to an fgslot 479, and fgOMFI=479 corresponds to an fgslot 480.

FIG. 10 is a diagram of another overhead multiframe according to an embodiment of this application. The overhead multiframe includes 480 fgMUs, and each fgMU includes the overhead frame shown in FIG. 8 (FIG. 10 shows only some fields in the overhead frame in the fgMU, and does not show other content in the fgMU). fgOMFI=0 to fgOMFI=479 are in one-to-one correspondence with 480 slots (fgslots). For example, fgOMFI=0 corresponds to an fgslot 1, fgOMFI=1 corresponds to an fgslot 2, fgOMFI=478 corresponds to an fgslot 479, and fgOMFI=479 corresponds to an fgslot 480.

It should be noted that, because the overhead frame shown in FIG. 7 and the overhead multiframe shown in FIG. 9 may carry both slot configuration information of a forward service and slot configuration information of a reverse service, the overhead frame shown in FIG. 7 and the overhead multiframe shown in FIG. 9 are applicable to a scenario in which fine grain private lines carrying different services share some physical links and slot adjustment processes of these different services are isolated from each other, and are also applicable to a scenario in which fine grain private lines carrying different services share some physical links and slot adjustment processes of these different services are performed simultaneously. In these scenarios, based on both the overhead frame shown in FIG. 7 and the overhead multiframe shown in FIG. 9, a fine grain slot used to carry a service can be adjusted based on a service granularity in a full adjustment manner. The overhead frame shown in FIG. 8 and the overhead multiframe shown in FIG. 10 may carry slot configuration information of a forward service, but cannot carry slot configuration information of a reverse service. Therefore, the overhead frame shown in FIG. 8 and the overhead multiframe shown inFIG. 10 are applicable to a scenario in which some physical links are shared and slot adjustment processes of these different services are isolated from each other. In this scenario, based on both the overhead frame shown in FIG. 8 and the overhead multiframe shown in FIG. 10, a fine grain slot used to carry a service can be adjusted based on a service granularity in a full adjustment manner. The forward service is a service carried in a fine grain slot indicated by fgOMFI in an overhead frame, and a transmission direction of the reverse service is opposite to a transmission direction of the forward service. That the slot adjustment processes of the different services are isolated from each other includes: Slots used to carry these different services are adjusted in a time division manner, and only a slot used to carry one service is adjusted at each moment (or a similar time description, for example, in each time period, in each phase, or in each adjustment period). For example, these different services include a first service and a third service. A slot used to carry the first service is first adjusted, and then a slot used to carry the third service is adjusted after the slot used to carry the first service is adjusted; or a slot used to carry the third service is first adjusted, and then a slot used to carry the first service is adjusted after the slot used to carry the third service is adjusted.

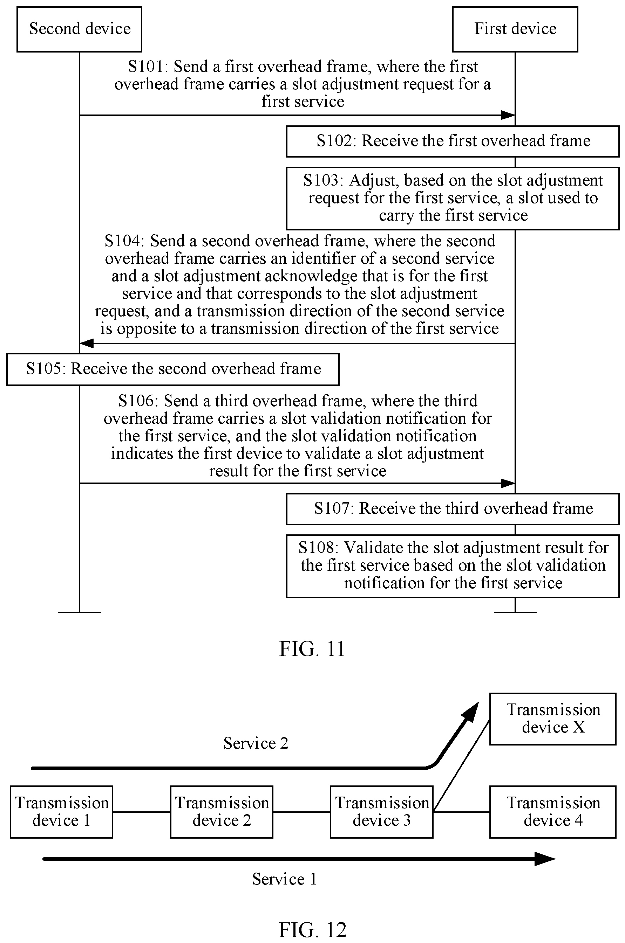

FIG. 11 is a flowchart of a slot adjustment method according to an embodiment of this application. The slot adjustment method is applied to a communication system including a first device and a second device. For example, the communication system is shown in FIG. 4. For another example, the communication system is shown in FIG. 5 or FIG. 6. The first device and the second device are any two adjacent transmission devices in the transmission devices 1 to n, and on a transmission path of a first service, the first device is located downstream the second device. As shown in FIG. 11, the slot adjustment method includes the following steps S101 to S105.

S101: The second device sends a first overhead frame to the first device, where the first overhead frame carries a slot adjustment request for the first service.

The first overhead frame carries an identifier of the first service and the slot adjustment request for the first service. Optionally, the first overhead frame further carries an identifier of a second service, and a transmission direction of the second service is opposite to a transmission direction of the first service.

In an embodiment, the first overhead frame carries the identifier of the first service, the identifier of the second service, and the slot adjustment request for the first service. The first overhead frame includes a first fgclientID field, a second fgclientID field, an fgOMFI field, a notification flag bit S, a request flag bit CR, an acknowledge flag bit CA, and a validation flag bit C. The first service is a service carried in a slot indicated by the fgOMFI field, and the second service is a reverse service of the first service. For example, the first service is an uplink service, and the second service is a downlink service; or the first service is a downlink service, and the second service is an uplink service. The first fgclientID field in the first overhead frame is used to carry the identifier of the first service (that is, the service carried in the slot indicated by the fgOMFI field), the second fgclientID field in the first overhead frame is used to carry the identifier of the second service, and the request flag bit CR in the first overhead frame is used to carry the slot adjustment request for the first service. For example, a structure of the first overhead frame is shown in FIG. 7. The first fgclientID field is an fgclientID_A field, and the second fgclientID field is an fgclientID_B field.

In another embodiment, the first overhead frame carries the identifier of the first service and the slot adjustment request for the first service, and does not carry the identifier of the second service. The first overhead frame includes a first fgclientID field, an fgOMFI field, a notification flag bit S, a request flag bit CR, an acknowledge flag bit CA, and a validation flag bit C. The first service is a service carried in a slot indicated by the fgOMFI field. The first fgclientID field in the first overhead frame is used to carry the identifier of the first service, and the request flag bit CR in the first overhead frame is used to carry the slot adjustment request for the first service. For example, a structure of the first overhead frame is shown in FIG. 8, and the first fgclientID field is an fgclientID_A field.

In this embodiment of this application, the first device and the second device perform slot negotiation in a full adjustment manner to adjust a slot used to carry the first service. The second device sends slot configuration information to the first device by overhead multiframe, where the slot configuration information includes the slot adjustment request for the first service. Optionally, the first overhead frame is included in a first overhead multiframe, the first overhead multiframe includes 480 fgMUs, each of the 480 fgMUs includes an overhead frame, the overhead frame in each fgMU carries an identifier of a service carried in a slot indicated by an fgOMFI field in the overhead frame, and the first overhead frame is included in one of the 480 fgMUs. In a transmission period of the first overhead multiframe, the second device consecutively sends the 480 fgMUs to the first device, to send the first overhead frame to the first device. In an example, the first overhead frame is included in the 1^{st} fgMU in the first overhead multiframe. In another example, the first overhead frame is included in any fgMU in the first overhead multiframe. For example, the first overhead multiframe is shown in FIG. 9 or FIG. 10. The first overhead frame is included in an fgMU 1, or the first overhead frame is included in any fgMU in an fgMU 1 to an fgMU 480.

In this embodiment of this application, the second device first generates the first overhead frame, and then sends the first overhead frame to the first device.

In an embodiment, the first overhead frame is included in the first overhead multiframe, the first overhead multiframe and a second overhead multiframe are two overhead multiframes consecutively sent by the second device to the first device, the first overhead multiframe is located after the second overhead multiframe, and the first overhead frame includes a first fgclientID field, an fgOMFI field, a notification flag bit S, a request flag bit CR, an acknowledge flag bit CA, and a validation flag bit C. That the second device generates the first overhead frame includes: The second device sets a value of the fgOMFI field in the first overhead frame based on a slot that needs to be adjusted and that is used to carry the first service; the second device adds the identifier of the first service to the first fgclientID field in the first overhead frame; and the second device sets a value of the request flag bit CR in the first overhead frame to be toggled compared with a value of a request flag bit CR in an overhead frame in the second overhead multiframe. Optionally, the second device toggles the value of the request flag bit CR by overhead multiframe. Values of request flag bits CR in all overhead frames in the second overhead multiframe are the same. The second device sets values of request flag bits CR in all overhead frames in the first overhead multiframe to be toggled compared with the value of the request flag bit CR in the overhead frame in the second overhead multiframe. For example, when the values of the request flag bits CR in all the overhead frames in the second overhead multiframe are 1, the second device sets the values of the request flag bits CR in all the overhead frames in the first overhead multiframe to 0. When the values of the request flag bits CR in all the overhead frames in the second overhead multiframe are 0, the second device sets the values of the request flag bits CR in all the overhead frames in the first overhead multiframe to 1. A structure of the second overhead multiframe may be the same as or different from a structure of the first overhead multiframe. For example, the structure of the first overhead multiframe and the structure of the second overhead multiframe are both shown in FIG. 9, or the structure of the first overhead multiframe and the structure of the second overhead multiframe are both shown in FIG. 10.

In another embodiment, the first overhead frame includes a first fgclientID field, an fgOMFI field, a notification flag bit S, a request flag bit CR, an acknowledge flag bit CA, and a validation flag bit C. That the second device generates the first overhead frame includes: The second device sets a value of the fgOMFI field in the first overhead frame based on a slot that needs to be adjusted and that is used to carry the first service; the second device adds the identifier of the first service to the first fgclientID field in the first overhead frame; and the second device sets a value of the request flag bit CR in the first overhead frame to a first value (for example, 1). In an example, the second device sets the value of the request flag bit CR to the first value by overhead multiframe, and the second device sets values of request flag bits CR in all overhead frames in the first overhead multiframe to the first value. In another example, the second device sets the value of the request flag bit CR in the first overhead frame in the first overhead multiframe to the first value, and sets a value of a request flag bit CR in a remaining overhead frame in the first overhead multiframe to a second value (for example, 0). In the another example, the first overhead frame may be the 1^{st} overhead frame in the first overhead multiframe, that is, an overhead frame in the 1^{st} fgMU (for example, the fgMU 1 in FIG. 9 orFIG. 10) in the first overhead multiframe. Alternatively, the first overhead frame may not be the 1^{st} overhead frame in the first overhead multiframe. This is not limited in embodiments of this application.

When the first overhead frame further includes a second fgclientID field, in a process of generating the first overhead frame, the second device may further add the identifier of the second service to the second fgclientID field in the first overhead frame. This is not limited in embodiments of this application.

S102: The first device receives the first overhead frame sent by the second device.

S103: The first device adjusts, based on the slot adjustment request for the first service, the slot used to carry the first service.

In an optional embodiment, after the first device receives the first overhead frame sent by the second device, the first device determines whether the first overhead frame meets an adjustment request condition. When the first overhead frame meets the adjustment request condition, the first device determines that the first overhead frame carries the slot adjustment request for the first service, and then the first device adjusts, based on the slot adjustment request for the first service, the slot used to carry the first service. The adjustment request condition includes any one of the following three conditions:
Condition 11: A value of a request flag bit CR in the first overhead frame is toggled compared with a value of a request flag bit CR in an overhead frame in a second overhead multiframe. The first overhead frame is included in the first overhead multiframe, the first overhead multiframe and the second overhead multiframe are two overhead multiframes consecutively sent by the second device to the first device, and the first overhead multiframe is located after the second overhead multiframe. Optionally, values of request flag bits CR in all overhead frames in the second overhead multiframe are the same, and values of request flag bits CR in all overhead frames in the first overhead multiframe are toggled compared with the value of the request flag bit CR in the overhead frame in the second overhead multiframe. For example, when the values of the request flag bits CR in all the overhead frames in the second overhead multiframe are 1, the values of the request flag bits CR in all the overhead frames in the first overhead multiframe are 0. When the values of the request flag bits CR in all the overhead frames in the second overhead multiframe are 0, the values of the request flag bits CR in all the overhead frames in the first overhead multiframe are 1.

Condition 12: A value of a request flag bit CR in the first overhead frame is toggled compared with a value of a request flag bit CR in an overhead frame in a second overhead multiframe, and the value of the request flag bit CR in the first overhead frame is different from a value of an acknowledge flag bit CA in an overhead frame in a third overhead multiframe. The first overhead frame is included in the first overhead multiframe, the first overhead multiframe and the second overhead multiframe are two overhead multiframes consecutively sent by the second device to the first device, the first overhead multiframe is located after the second overhead multiframe, and the third overhead multiframe is an overhead multiframe that is being sent to the second device when the first device receives the first overhead frame. Optionally, values of request flag bits CR in all overhead frames in the second overhead multiframe are the same, values of acknowledge flag bits CA in overhead frames in the third overhead multiframe are the same, values of request flag bits CR in all overhead frames in the first overhead multiframe are toggled compared with the value of the request flag bit CR in the overhead frame in the second overhead multiframe, and the values of the request flag bits CR in all the overhead frames in the first overhead multiframe are different from the value of the acknowledge flag bit CA in the overhead frame in the third overhead multiframe. For example, when the values of the request flag bits CR in all the overhead frames in the second overhead multiframe are 1, and the values of the acknowledge flag bits CA in the overhead frames in the third overhead multiframe are 1, the values of the request flag bits CR in all the overhead frames in the first overhead multiframe are 0. When the values of the request flag bits CR in all the overhead frames in the second overhead multiframe are 0, and the values of the acknowledge flag bits CA in the overhead frames in the third overhead multiframe are 0, the values of the request flag bits CR in all the overhead frames in the first overhead multiframe are 1.

Condition 13: A value of a request flag bit CR in the first overhead frame is a first value. Optionally, the first value is 1.

In an embodiment, when the adjustment request condition includes the condition 13, the first overhead frame is the 1^{st} overhead frame in the first overhead multiframe, that is, an overhead frame in the 1^{st} fgMU in the first overhead multiframe, a value of a request flag bit CR in the 1^{st} overhead frame in the first overhead multiframe is the first value, and a value of a request flag bit CR in a remaining overhead frame in the first overhead multiframe is a second value (for example, 0). In another embodiment, when the adjustment request condition includes the condition 13, the first overhead frame is any overhead frame in the first overhead multiframe, and a value of a request flag bit CR in each overhead frame in the first overhead multiframe is the first value.

In an optional embodiment, that the first device adjusts, based on the slot adjustment request for the first service, the slot used to carry the first service includes: The first device deletes, based on the slot adjustment request for the first service, the slot used to carry the first service, or the first device adds, based on the slot adjustment request for the first service, the slot used to carry the first service. In an embodiment, the first device deletes, based on the slot adjustment request for the first service, a slot that is used to carry the first service and that is indicated by the fgOMFI field in the first overhead frame; or the first device adds, based on the slot adjustment request for the first service, a slot that is used to carry the first service and that is indicated by the fgOMFI field in the first overhead frame. In another embodiment, the first device deletes, based on slot adjustment information delivered by a management and control device, the slot used to carry the first service, or the first device adds, based on slot adjustment information delivered by a management and control device, the slot used to carry the first service. In the another embodiment, the slot adjustment information delivered by the management and control device includes indication information of a slot that needs to be adjusted, for example, includes an identifier, a number, or the like of the slot that needs to be adjusted, and the first device determines, based on the indication information, of the slot that needs to be adjusted, delivered by the management and control device, the specific slot that needs to be adjusted. In an embodiment, the slot adjustment information delivered by the management and control device includes adjustment indication information, the adjustment indication information indicates to add or delete the slot used to carry the first service, and the first device determines, based on the adjustment indication information delivered by the management and control device, whether to delete or add the slot used to carry the first service. In another embodiment, an operation procedure of deleting the slot used to carry the first service is different from an operation procedure of adding the slot used to carry the first service. The first device determines, based on a difference between the operation procedures, whether to delete or add the slot used to carry the first service. For example, in the operation procedure of adding the slot used to carry the first service, before the second device sends the slot adjustment request for the first service to the first device (for example, before the first overhead frame is sent), the first device sends a slot adjustment notification for the first service to the second device, to trigger the second device to send the slot adjustment request for the first service to the first device. The first device determines, based on whether the slot adjustment notification for the first service has been sent to the second device before the slot adjustment request for the first service is received, whether to delete or add the slot used to carry the first service. It should be noted that in this embodiment of this application, "deleting the slot used to carry the first service" means releasing the slot used to carry the first service, and the released slot may be used for another service. For example, "deleting a slot A used to carry the first service" means releasing the slot A used to carry the first service, and the released slot A may be used for another service.

S104: The first device sends a second overhead frame to the second device, where the second overhead frame carries the identifier of the second service and a slot adjustment acknowledge that is for the first service and that corresponds to the slot adjustment request, and the transmission direction of the second service is opposite to the transmission direction of the first service.

Optionally, the second overhead frame further carries the identifier of the first service.

In an embodiment, the second overhead frame carries the identifier of the first service, the identifier of the second service, and the slot adjustment acknowledge for the first service. The second overhead frame includes a first fgclientID field, a second fgclientID field, an fgOMFI field, a notification flag bit S, a request flag bit CR, an acknowledge flag bit CA, and a validation flag bit C. The second service is a service carried in a slot indicated by the fgOMFI field, and the first service is a reverse service of the second service. For example, the first service is an uplink service, and the second service is a downlink service; or the first service is a downlink service, and the second service is an uplink service. The first fgclientID field in the second overhead frame is used to carry the identifier of the second service (that is, the service carried in the slot indicated by the fgOMFI field), the second fgclientID field in the second overhead frame is used to carry the identifier of the first service, and the acknowledge flag bit CA in the second overhead frame is used to carry the slot adjustment acknowledge for the first service. For example, a structure of the second overhead frame is shown in FIG. 7. The first fgclientID field is an fgclientID_A field, and the second fgclientID field is an fgclientID_B field.

In another embodiment, the second overhead frame carries the identifier of the second service and the slot adjustment acknowledge for the first service, and does not carry the identifier of the first service. The second overhead frame includes a first fgclientID field, an fgOMFI field, a notification flag bit S, a request flag bit CR, an acknowledge flag bit CA, and a validation flag bit C. The second service is a service carried in a slot indicated by the fgOMFI field. The first fgclientID field in the second overhead frame is used to carry the identifier of the second service, and the acknowledge flag bit CA in the second overhead frame is used to carry the slot adjustment acknowledge for the first service. For example, a structure of the second overhead frame is shown in FIG. 8, and the first fgclientID field is an fgclientID_A field.

In this embodiment of this application, the first device and the second device perform slot negotiation in a full adjustment manner to adjust the slot used to carry the first service. The first device sends slot configuration information to the second device by overhead multiframe, where the slot configuration information includes the slot adjustment acknowledge for the first service. Optionally, the second overhead frame is included in a ninth overhead multiframe, the ninth overhead multiframe includes 480 fgMUs, each of the 480 fgMUs includes an overhead frame, the overhead frame in each fgMU carries an identifier of a service carried in a slot indicated by an fgOMFI field in the overhead frame, and the second overhead frame is included in one of the 480 fgMUs. In a transmission period of the ninth overhead multiframe, the first device consecutively sends the 480 fgMUs to the second device, to send the second overhead frame to the second device. In an example, the second overhead frame is included in the 1^{st} fgMU in the ninth overhead multiframe. In another example, the second overhead frame is included in any fgMU in the ninth overhead multiframe. For example, the ninth overhead multiframe is shown in FIG. 9 or FIG. 10. The second overhead frame is included in an fgMU 1, or the second overhead frame is included in any fgMU in an fgMU 1 to an fgMU 480.

In this embodiment of this application, the first device first generates the second overhead frame, and then sends the second overhead frame to the second device.

In an embodiment, the second overhead frame is included in a ninth overhead multiframe, the ninth overhead multiframe and a seventh overhead multiframe are two overhead multiframes consecutively sent by the first device to the second device, the ninth overhead multiframe is located after the seventh overhead multiframe, and the second overhead frame includes a first fgclientID field, an fgOMFI field, a notification flag bit S, a request flag bit CR, an acknowledge flag bit CA, and a validation flag bit C. That the first device generates the second overhead frame includes: The first device sets a value of the fgOMFI field in the second overhead frame based on a slot used to carry the second service; the first device adds the identifier of the second service to the first fgclientID field in the second overhead frame; and the first device sets a value of the acknowledge flag bit CA in the second overhead frame to be toggled compared with a value of an acknowledge flag bit CA in an overhead frame in the seventh overhead multiframe. Optionally, the first device toggles the value of the acknowledge flag bit CA by overhead multiframe. Values of acknowledge flag bits CA in all overhead frames in the seventh overhead multiframe are the same. The first device sets values of acknowledge flag bits CA in all overhead frames in the ninth overhead multiframe to be toggled compared with the value of the acknowledge flag bit CA in the overhead frame in the seventh overhead multiframe. For example, when the values of the acknowledge flag bits CA in all the overhead frames in the seventh overhead multiframe are 1, the first device sets the values of the acknowledge flag bits CA in all the overhead frames in the ninth overhead multiframe to 0. When the values of the acknowledge flag bits CA in all the overhead frames in the seventh overhead multiframe are 0, the first device sets the values of the acknowledge flag bits CA in all the overhead frames in the ninth overhead multiframe to 1. A structure of the seventh overhead multiframe may be the same as or different from a structure of the ninth overhead multiframe. For example, the structure of the seventh overhead multiframe and the structure of the ninth overhead multiframe are both shown in FIG. 9, or the structure of the seventh overhead multiframe and the structure of the ninth overhead multiframe are both shown in FIG. 10.

In another embodiment, the second overhead frame includes a first fgclientID field, an fgOMFI field, a notification flag bit S, a request flag bit CR, an acknowledge flag bit CA, and a validation flag bit C. That the first device generates the second overhead frame includes: The first device sets a value of the fgOMFI field in the second overhead frame based on a slot used to carry the second service; the first device adds the identifier of the second service to the first fgclientID field in the second overhead frame; and the first device sets a value of the acknowledge flag bit CA in the second overhead frame to the first value (for example, 1). In an example, the first device sets the value of the acknowledge flag bit CA to the first value by overhead multiframe, and the first device sets values of acknowledge flag bits CA in all overhead frames in the ninth overhead multiframe to the first value. In another example, the first device sets the value of the acknowledge flag bit CA in the second overhead frame in the ninth overhead multiframe to the first value, and sets a value of an acknowledge flag bit CA in a remaining overhead frame in the ninth overhead multiframe to the second value (for example, 0). In the another example, the second overhead frame may be the 1^{st} overhead frame in the ninth overhead multiframe, that is, an overhead frame in the 1^{st} fgMU (for example, the fgMU 1 in FIG. 9 or FIG. 10) in the ninth overhead multiframe. Alternatively, the second overhead frame may not be the 1^{st} overhead frame in the ninth overhead multiframe. This is not limited in embodiments of this application.

When the second overhead frame further includes a second fgclientID field, in a process of generating the second overhead frame, the first device may further add the identifier of the first service to the second fgclientID field in the second overhead frame. This is not limited in embodiments of this application.

S105: The second device receives the second overhead frame sent by the first device.

In an optional embodiment, after the second device receives the second overhead frame sent by the first device, the second device determines whether the second overhead frame meets an adjustment acknowledge condition. When the second overhead frame meets the adjustment acknowledge condition, the second device determines that the second overhead frame carries the slot adjustment acknowledge for the first service. The adjustment acknowledge condition includes any one of the following three conditions:

Condition 21: A value of an acknowledge flag bit CA in the second overhead frame is toggled compared with a value of an acknowledge flag bit CA in an overhead frame in a seventh overhead multiframe. The second overhead frame is included in a ninth overhead multiframe, the ninth overhead multiframe and the seventh overhead multiframe are two overhead multiframes consecutively sent by the first device to the second device, and the ninth overhead multiframe is located after the seventh overhead multiframe. Optionally, values of acknowledge flag bits CA in all overhead frames in the seventh overhead multiframe are the same. Values of acknowledge flag bits CA in all overhead frames in the ninth overhead multiframe are toggled compared with the value of the acknowledge flag bit CA in the overhead frame in the seventh overhead multiframe. For example, when the values of the acknowledge flag bits CA in all the overhead frames in the seventh overhead multiframe are 1, the values of the acknowledge flag bits CA in all the overhead frames in the ninth overhead multiframe are 0. When the values of the acknowledge flag bits CA in all the overhead frames in the seventh overhead multiframe are 0, the values of the acknowledge flag bits CA in all the overhead frames in the ninth overhead multiframe are 1.

Condition 22: A value of an acknowledge flag bit CA in the second overhead frame is toggled compared with a value of an acknowledge flag bit CA in an overhead frame in a seventh overhead multiframe, and the value of the acknowledge flag bit CA in the second overhead frame is the same as a value of a request flag bit CR in an overhead frame in an eighth overhead multiframe. The second overhead frame is included in a ninth overhead multiframe, the ninth overhead multiframe and the seventh overhead multiframe are two overhead multiframes consecutively sent by the first device to the second device, the ninth overhead multiframe is located after the seventh overhead multiframe, and the eight overhead multiframe is an overhead multiframe that is being sent to the first device when the second device receives the second overhead frame. Optionally, values of acknowledge flag bits CA in overhead frames in the seventh overhead multiframe are the same, values of request flag bits CR in overhead frames in the eighth overhead multiframe are the same, values of acknowledge flag bits CA in all overhead frames in the ninth overhead multiframe are toggled compared with the value of the acknowledge flag bit CA in the overhead frame in the seventh overhead multiframe, and the values of the acknowledge flag bits CA in all the overhead frames in the ninth overhead multiframe are the same as the value of the request flag bit CR in the overhead frame in the eighth overhead multiframe. For example, when the values of the acknowledge flag bits CA in all the overhead frames in the seventh overhead multiframe are 1, and the values of the request flag bits CR in the overhead frames in the eighth overhead multiframe are 0, the values of the acknowledge flag bits CA in all the overhead frames in the ninth overhead multiframe are 0. When the values of the acknowledge flag bits CA in all the overhead frames in the seventh overhead multiframe are 0, and the values of the request flag bits CR in the overhead frames in the eighth overhead multiframe are 1, the values of the acknowledge flag bits CA in all the overhead frames in the ninth overhead multiframe are 1.

Condition 23: A value of an acknowledge flag bit CA in the second overhead frame is a first value. Optionally, the first value is 1.

In an embodiment, when the adjustment acknowledge condition includes the condition 23, the second overhead frame is the 1^{st} overhead frame in the ninth overhead multiframe, that is, an overhead frame in the 1^{st} fgMU in the ninth overhead multiframe, a value of an acknowledge flag bit CA in the 1^{st} overhead frame in the ninth overhead multiframe is the first value, and a value of an acknowledge flag bit CA in a remaining overhead frame in the ninth overhead multiframe is a second value (for example, 0). In another embodiment, when the adjustment acknowledge condition includes the condition 23, the second overhead frame is any overhead frame in the ninth overhead multiframe, and a value of an acknowledge flag bit CA in each overhead frame in the ninth overhead multiframe is the first value.

In an optional embodiment, the condition 21 corresponds to the condition 11 in S103, the condition 22 corresponds to the condition 12 in S103, and the condition 23 corresponds to the condition 13 in S103. That is, when the first device determines, based on the condition 11, that the first overhead frame carries the slot adjustment request for the first service, the second device determines, based on the condition 21, that the second overhead frame carries the slot adjustment acknowledge for the first service; or when the first device determines, based on the condition 12, that the first overhead frame carries the slot adjustment request for the first service, the second device determines, based on the condition 22, that the second overhead frame carries the slot adjustment acknowledge for the first service; or when the first device determines, based on the condition 13, that the first overhead frame carries the slot adjustment request for the first service, the second device determines, based on the condition 23, that the second overhead frame carries the slot adjustment acknowledge for the first service.

In conclusion, in the slot adjustment solution provided in this embodiment of this application, a bandwidth of a transmission channel of the first service is adjusted by adjusting the slot used to carry the first service, so that the bandwidth of the transmission channel of the first service meets a bandwidth requirement of the first service, and a bandwidth waste is avoided. The slot adjustment solution is a full adjustment solution. In the slot adjustment solution, a second fgclientID field used to carry an identifier of a reverse service is set in an overhead frame, so that an overhead frame sent by a downstream device (for example, a first node) to an upstream device (for example, a second node) on a transmission path of the first service may carry the identifier of the first service. In this way, the slot used to carry the first service can be adjusted based on a service granularity. In a scenario in which fine grain private lines used to carry different services share some physical links, service damage caused by a bandwidth adjustment process can be avoided.

The following describes technical effects of embodiments of this application with reference to FIG. 12. As shown in FIG. 12, a fine grain private line used to carry a service 1 and a fine grain private line used to carry a service 2 share a physical link between a transmission device 1 and a transmission device 2 and a physical link between the transmission device 2 and a transmission device 3. Fine grain slots need to be added for both the service 1 and the service 2 to increase bandwidths of respective transmission channels (that is, fine grain private lines). After the transmission device 3 and a transmission device 4 increase the bandwidth of the transmission channel of the service 1 through slot negotiation, the transmission device 3 and the transmission device 2 perform slot negotiation to increase the bandwidth of the transmission channel of the service 1. In a process in which the transmission device 3 and the transmission device 2 perform slot negotiation, if an overhead frame sent by the transmission device 3 to the transmission device 2 does not include a second fgclientID field used to carry an identifier of the service 1 (that is, a reverse service of a service transmitted from the transmission device 3 to the transmission device 2), the overhead frame sent by the transmission device 3 to the transmission device 2 cannot carry the identifier of the service 1. The transmission device 3 and the transmission device 2 increase, through slot negotiation, bandwidths of transmission channels of all services carried on the physical link between the transmission device 3 and the transmission device 2, that is, increase the bandwidth of the transmission channel of the service 1 and the bandwidth of the transmission channel of the service 2. However, a bandwidth of a transmission channel used to transmit the service 2 between the transmission device 3 and a transmission device X is not increased. Consequently, a bandwidth of the service 2 on an ingress port of the transmission device 3 is easily greater than a bandwidth on an egress port, and the service 2 is prone to congestion on the egress port of transmission device 3, easily causing damage to the service 2. In this embodiment of this application, the second fgclientID field used to carry the identifier of the reverse service is set in the overhead frame. In a process in which the transmission device 3 and the transmission device 2 perform slot negotiation, the second fgclientID field in the overhead frame sent by the transmission device 3 to the transmission device 2 may be used to carry the identifier of the service 1 (that is, a reverse service of the service transmitted from the transmission device 3 to the transmission device 2). Therefore, the transmission device 3 and the transmission device 2 increase only the bandwidth of the transmission channel of the service 1 through slot negotiation, and do not increase the bandwidth of the transmission channel of the service 2. Therefore, it can be avoided that the service 2 is damaged because the bandwidth of the service 2 on the ingress port of the transmission device 3 is greater than the bandwidth on the egress port.

In an optional embodiment, continue to refer to FIG. 11. After S105, the method further includes the following steps S106 to S108.

S106: The second device sends a third overhead frame to the first device, where the third overhead frame carries a slot validation notification for the first service, and the slot validation notification indicates the first device to validate a slot adjustment result for the first service.

After the second device receives the second overhead frame sent by the first device and determines that the second overhead frame carries the slot adjustment acknowledge for the first service, the second device sends the slot validation notification for the first service to the first device, to indicate the first device to validate the slot adjustment result for the first service. Specifically, the first device sends the third overhead frame, and the third overhead frame carries the slot validation notification for the first service. Optionally, the third overhead frame carries the identifier of the first service and the slot validation notification for the first service. The third overhead frame further carries the identifier of the second service.

In an embodiment, the third overhead frame carries the identifier of the first service, the identifier of the second service, and the slot validation notification for the first service. The third overhead frame includes a first fgclientID field, a second fgclientID field, an fgOMFI field, a notification flag bit S, a request flag bit CR, an acknowledge flag bit CA, and a validation flag bit C, the first service is a service carried in a slot indicated by the fgOMFI field, and the second service is a reverse service of the first service. The first fgclientID field in the third overhead frame is used to carry the identifier of the first service (that is, the service carried in the slot indicated by the fgOMFI field), the second fgclientID field in the third overhead frame is used to carry the identifier of the second service, and the validation flag bit C in the third overhead frame is used to carry the slot validation notification for the first service. For example, a structure of the third overhead frame is shown in FIG. 7. The first fgclientID field is an fgclientID_A field, and the second fgclientID field is an fgclientID_B field.

In another embodiment, the third overhead frame carries the identifier of the first service and the slot validation notification for the first service, and does not carry the identifier of the second service. The third overhead frame includes a first fgclientID field, an fgOMFI field, a notification flag bit S, a request flag bit CR, an acknowledge flag bit CA, and a validation flag bit C. The first service is a service carried in a slot indicated by the fgOMFI field. The first fgclientID field in the third overhead frame is used to carry the identifier of the first service, and the validation flag bit C in the third overhead frame is used to carry the slot validation notification for the first service. For example, a structure of the third overhead frame is shown in FIG. 8, and the first fgclientID field is an fgclientID_A field.

In an optional embodiment, a value of the fgOMFI field in the third overhead frame is the same as the value of the fgOMFI field in the first overhead frame, and a value of the first fgclientID field (that is, the identifier of the first service) in the third overhead frame is the same as the value of the first fgclientID field (that is, the identifier of the first service) in the first overhead frame, and the slot validation notification carried in the third overhead frame indicates the first device to validate an adjustment result for a slot that is used to carry the first service and that is indicated by the fgOMFI field.

In this embodiment of this application, the first device and the second device perform slot negotiation in a full adjustment manner to adjust the slot used to carry the first service. The second device sends slot configuration information to the first device by overhead multiframe, where the slot configuration information includes the slot validation notification for the first service. Optionally, the third overhead frame is included in a sixth overhead multiframe, the sixth overhead multiframe includes 480 fgMUs, each of the 480 fgMUs includes an overhead frame, the overhead frame in each fgMU carries an identifier of a service carried in a slot indicated by an fgOMFI field in the overhead frame, and the third overhead frame is included in one of the 480 fgMUs. In a transmission period of the sixth overhead multiframe, the second device consecutively sends the 480 fgMUs to the first device, to send the third overhead frame to the first device. In an example, the third overhead frame is included in the 1^{st} fgMU in the sixth overhead multiframe. In another example, the third overhead frame is included in any fgMU in the sixth overhead multiframe. For example, the sixth overhead multiframe is shown in FIG. 9 orFIG. 10. The third overhead frame is included in an fgMU 1, or the third overhead frame is included in any fgMU in an fgMU 1 to an fgMU 480.

In this embodiment of this application, the second device first generates the third overhead frame, and then sends the third overhead frame to the first device.

In an embodiment, the third overhead frame is included in a sixth overhead multiframe, the sixth overhead multiframe and a fourth overhead multiframe are two overhead multiframes consecutively sent by the second device to the first device, the sixth overhead multiframe is located after the fourth overhead multiframe, and the third overhead frame includes a first fgclientID field, an fgOMFI field, a notification flag bit S, a request flag bit CR, an acknowledge flag bit CA, and a validation flag bit C. That the second device generates the third overhead frame includes: The second device sets a value of the fgOMFI field in the third overhead frame based on the value of the fgOMFI field in the first overhead frame; the second device adds the identifier of the first service to the first fgclientID field in the third overhead frame; and the second device sets a value of the validation flag bit C in the third overhead frame to be toggled compared with a value of a validation flag bit C in the fourth overhead multiframe. Optionally, the second device toggles the value of the validation flag bit C by overhead multiframe. Values of validation flag bits C in all overhead frames in the fourth overhead multiframe are the same. The second device sets values of validation flag bits C in all overhead frames in the sixth overhead multiframe to be toggled compared with the value of the validation flag bit C in the overhead frame in the fourth overhead multiframe. For example, when the values of the validation flag bits C in all the overhead frames in the fourth overhead multiframe are 1, the second device sets the values of the validation flag bits C in all the overhead frames in the sixth overhead multiframe to 0. When the values of the validation flag bits C in all the overhead frames in the fourth overhead multiframe are 0, the second device sets the values of the validation flag bits C in all the overhead frames in the sixth overhead multiframe to 1. A structure of the sixth overhead multiframe may be the same as or different from a structure of the fourth overhead multiframe. For example, the structure of the sixth overhead multiframe and the structure of the fourth overhead multiframe are both shown in FIG. 9, or the structure of the sixth overhead multiframe and the structure of the fourth overhead multiframe are both shown in FIG. 10.

In another embodiment, the third overhead frame includes a first fgclientID field, an fgOMFI field, a notification flag bit S, a request flag bit CR, an acknowledge flag bit CA, and a validation flag bit C. That the second device generates the third overhead frame includes: The second device sets a value of the fgOMFI field in the third overhead frame based on the value of the fgOMFI field in the first overhead frame; the second device adds the identifier of the first service to the first fgclientID field in the third overhead frame; and the second device sets a value of the validation flag bit C in the third overhead frame to a first value (for example, 1). In an example, the second device sets the value of the validation flag bit C to the first value by overhead multiframe, the third overhead frame is included in the sixth overhead multiframe, and the second device sets values of validation flag bits C in all overhead frames in the sixth overhead multiframe to the first value. In another example, the second device sets values of validation flag bits C in first m overhead frames in the sixth overhead multiframe to the first value, and sets a value of a validation flag bit C in a remaining overhead frame in the sixth overhead multiframe to a second value (for example, 0), where m is a positive integer, for example, m is equal to 3. In the another example, the third overhead frame is any overhead frame in the first m overhead frames. For example, the third overhead frame is the 1^{st} overhead frame in the first m overhead frames, that is, an overhead frame in the 1^{st} fgMU (for example, an fgMU 1 in FIG. 9 or FIG. 10) in the sixth overhead multiframe. Alternatively, the third overhead frame may not be the 1^{st} overhead frame in the sixth overhead multiframe.

When the third overhead frame further includes a second fgclientID field, in a process of generating the third overhead frame, the second device may further add the identifier of the second service to the second fgclientID field in the third overhead frame. This is not limited in embodiments of this application.

S107: The first device receives the third overhead frame sent by the second device.

S108: The first device validates the slot adjustment result for the first service based on the slot validation notification for the first service.

In an optional embodiment, after the first device receives the third overhead frame sent by the second device, the first device determines whether the third overhead frame meets a slot validation condition. When the third overhead frame meets the slot validation condition, the first device determines that the third overhead frame carries the slot validation notification for the first service, and then the first device validates the slot adjustment result for the first service based on the slot validation notification for the first service. The slot validation condition includes any one of the following three conditions:
Condition 31: A value of a validation flag bit C in the third overhead frame is toggled compared with a value of a validation flag bit C in an overhead frame in a fourth overhead multiframe. The third overhead frame is included in a sixth overhead multiframe, the sixth overhead multiframe and the fourth overhead multiframe are two overhead multiframes consecutively sent by the second device to the first device, and the sixth overhead multiframe is located after the fourth overhead multiframe. Optionally, values of validation flag bits C in all overhead frames in the fourth overhead multiframe are the same, and values of validation flag bits C in all overhead frames in the sixth overhead multiframe are toggled compared with the value of the validation flag bit C in the overhead frame in the fourth overhead multiframe. For example, when the values of the validation flag bits C in all the overhead frames in the fourth overhead multiframe are 1, the values of the validation flag bits C in all the overhead frames in the sixth overhead multiframe are 0. When the values of the validation flag bits C in all the overhead frames in the fourth overhead multiframe are 0, the values of the validation flag bits C in all the overhead frames in the sixth overhead multiframe are 1.

Condition 32: A value of a validation flag bit C in the third overhead frame is toggled compared with a value of a validation flag bit C in an overhead frame in a fourth overhead multiframe, and the value of the validation flag bit C in the third overhead frame is the same as a value of an acknowledge flag bit CA in an overhead frame in a fifth overhead multiframe. The third overhead frame is included in a sixth overhead multiframe, the sixth overhead multiframe and the fourth overhead multiframe are two overhead multiframes consecutively sent by the second device to the first device, the sixth overhead multiframe is located after the fourth overhead multiframe, and the fifth overhead multiframe is an overhead multiframe that is being sent to the second device when the first device receives the third overhead frame. Optionally, values of validation flag bits C in all overhead frames in the fourth overhead multiframe are the same, values of acknowledge flag bits CA in all overhead frames in the fifth overhead multiframe are the same, values of validation flag bits C in all overhead frames in the sixth overhead multiframe are toggled compared with the value of the validation flag bit C in the overhead frame in the fourth overhead multiframe, and the values of the validation flag bits C in all the overhead frames in the sixth overhead multiframe are the same as the value of the acknowledge flag bit CA in the overhead frame in the fifth overhead multiframe. For example, when the values of the validation flag bits C in all the overhead frames in the fourth overhead multiframe are 1, and the values of the acknowledge flag bits CA in all the overhead frames in the fifth overhead multiframe are 0, the values of the validation flag bits C in all the overhead frames in the sixth overhead multiframe are 0. When the values of the validation flag bits C in all the overhead frames in the fourth overhead multiframe are 0, and the values of the acknowledge flag bits CA in all the overhead frames in the fifth overhead multiframe are 1, the values of the validation flag bits C in all the overhead frames in the sixth overhead multiframe are 1.

Condition 33: A value of a validation flag bit C in the third overhead frame is a first value. Optionally, the first value is 1.

In an embodiment, when the slot validation condition includes the condition 33, the third overhead frame is any one of first m overhead frames in the sixth overhead multiframe, values of validation flag bits C in the first m overhead frames in the sixth overhead multiframe are the first value, and a value of a validation flag bit C in a remaining overhead frame in the sixth overhead multiframe is a second value. In another embodiment, when the slot validation condition includes the condition 33, the third overhead frame is any overhead frame in the sixth overhead multiframe, and a value of a validation flag bit C in each overhead frame in the sixth overhead multiframe is the first value. The condition 33 may be specifically as follows: Values of validation flag bits C in at least k consecutive overhead frames in the sixth overhead multiframe are the first value, the at least k consecutive overhead frames include the third overhead frame, and k is a positive integer.

In an optional embodiment, the condition 31 corresponds to the condition 21 in S105, the condition 32 corresponds to the condition 22 in S105, and the condition 33 corresponds to the condition 23 in S105. That is, when the second device determines, based on the condition 21, that the second overhead frame carries the slot adjustment acknowledge for the first service, the first device determines, based on the condition 31, that the third overhead frame carries the slot validation notification for the first service; or when the second device determines, based on the condition 22, that the second overhead frame carries the slot adjustment acknowledge for the first service, the first device determines, based on the condition 32, that the third overhead frame carries the slot validation notification for the first service; or when the second device determines, based on the condition 23, that the second overhead frame carries the slot adjustment acknowledge for the first service, the first device determines, based on the condition 33, that the third overhead frame carries the slot validation notification for the first service.

In an optional embodiment, that the first device validates the slot adjustment result for the first service based on the slot validation notification for the first service includes: The first device validates the slot adjustment result for the first service in a next overhead multiframe of the sixth overhead multiframe. For example, the first device starts to validate the slot adjustment result for the first service from the 1^{st} overhead frame in the next overhead multiframe of the sixth overhead multiframe. That is, starting from the next overhead multiframe of the sixth overhead multiframe, the first device uses an adjusted slot to carry the first service.

In an optional embodiment, before the second device sends the slot adjustment request for the first service to the first device, the first device sends the slot adjustment notification for the first service to the second device, and the second device sends the slot adjustment request for the first service to the first device based on the slot adjustment notification for the first service. For example, the second device sends the first overhead frame to the first device based on the slot adjustment notification for the first service. In a specific embodiment, in an operation procedure of adding the slot used to carry the first service, before the second device sends the slot adjustment request for the first service to the first device, the first device sends the slot adjustment notification for the first service to the second device.

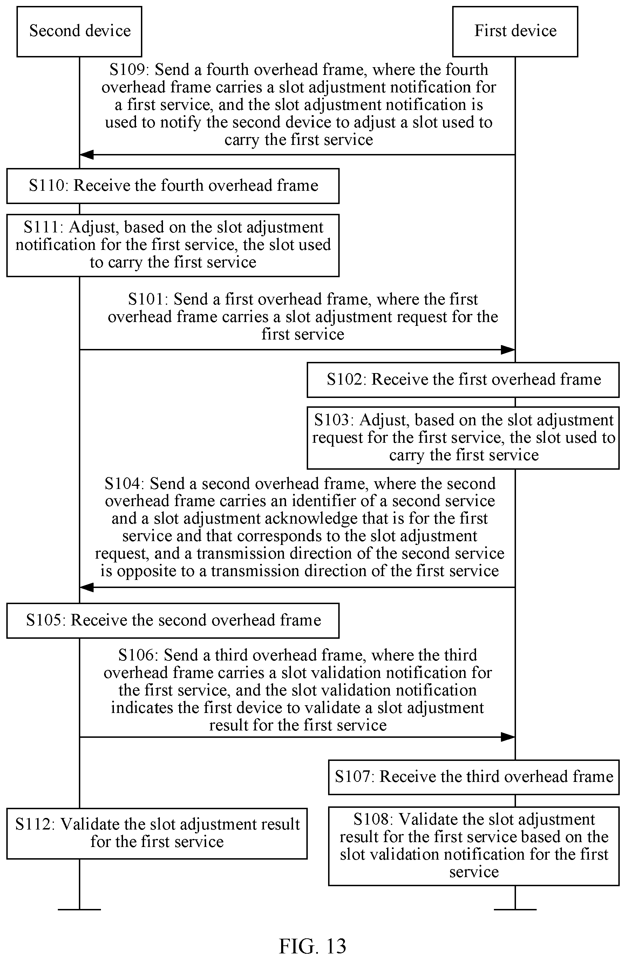

FIG. 13 is a flowchart of another slot adjustment method according to an embodiment of this application. Based on the method shown in FIG. 11, the method shown in FIG. 13 further includes the following steps S109 to S111. S109 to S111 are performed before S101.

S109: The first device sends a fourth overhead frame to the second device, where the fourth overhead frame carries the slot adjustment notification for the first service, and the slot adjustment notification is used to notify the second device to adjust the slot used to carry the first service.

Optionally, the fourth overhead frame carries the identifier of the second service and the slot adjustment notification for the first service, and the second overhead frame may further carry the identifier of the first service.

In an embodiment, the fourth overhead frame carries the identifier of the first service, the identifier of the second service, and the slot adjustment notification for the first service. The fourth overhead frame includes a first fgclientID field, a second fgclientID field, an fgOMFI field, a notification flag bit S, a request flag bit CR, an acknowledge flag bit CA, and a validation flag bit C, the second service is a service carried in a slot indicated by the fgOMFI field, and the first service is a reverse service of the second service. The first fgclientID field in the fourth overhead frame is used to carry the identifier of the second service (that is, the service carried in the slot indicated by the fgOMFI field), the second fgclientID field in the fourth overhead frame is used to carry the identifier of the first service, and the notification flag bit S in the fourth overhead frame is used to carry the slot adjustment notification for the first service. For example, a structure of the fourth overhead frame is shown in FIG. 7. The first fgclientID field is an fgclientID_A field, and the second fgclientID field is an fgclientID_B field.

In another embodiment, the fourth overhead frame carries the identifier of the second service and the slot adjustment notification for the first service, and does not carry the identifier of the first service. The fourth overhead frame includes a first fgclientID field, an fgOMFI field, a notification flag bit S, a request flag bit CR, an acknowledge flag bit CA, and a validation flag bit C. The second service is a service carried in a slot indicated by the fgOMFI field. The first fgclientID field in the fourth overhead frame is used to carry the identifier of the second service, and the notification flag bit S in the fourth overhead frame is used to carry the slot adjustment notification for the first service. For example, a structure of the fourth overhead frame is shown in FIG. 8, and the first fgclientID field is an fgclientID_A field.

In this embodiment of this application, the first device and the second device perform slot negotiation in a full adjustment manner to adjust the slot used to carry the first service. The first device sends slot configuration information to the second device by overhead multiframe, where the slot configuration information includes the slot adjustment notification for the first service. Optionally, the fourth overhead frame is included in a twelfth overhead multiframe, the twelfth overhead multiframe includes 480 fgMUs, each fgMU includes an overhead frame, the overhead frame in each fgMU carries an identifier of a service carried in a slot indicated by an fgOMFI field in the overhead frame, and the fourth overhead frame is included in one of the 480 fgMUs. In a transmission period of the twelfth overhead multiframe, the first device consecutively sends the 480 fgMUs to the second device, to send the fourth overhead frame to the second device. In an example, the fourth overhead frame is included in the 1^{st} fgMU in the twelfth overhead multiframe. In another example, the fourth overhead frame is included in any fgMU in the twelfth overhead multiframe. For example, the twelfth overhead multiframe is shown in FIG. 9 or FIG. 10. The fourth overhead frame is included in an fgMU 1, or the fourth overhead frame is included in any fgMU in an fgMU 1 to an fgMU 480.

In this embodiment of this application, the first device first generates the fourth overhead frame, and then sends the fourth overhead frame to the second device.

In an embodiment, the fourth overhead frame is included in a twelfth overhead multiframe, the twelfth overhead multiframe and a tenth overhead multiframe are two overhead multiframes consecutively sent by the first device to the second device, the twelfth overhead multiframe is located after the tenth overhead multiframe, and the fourth overhead frame includes a first fgclientID field, an fgOMFI field, a notification flag bit S, a request flag bit CR, an acknowledge flag bit CA, and a validation flag bit C. That the first device generates the fourth overhead frame includes: The first device sets a value of the fgOMFI field in the fourth overhead frame based on a slot used to carry the second service; the first device adds the identifier of the second service to the first fgclientID field in the fourth overhead frame; and the first device sets a value of the notification flag bit S in the fourth overhead frame to be toggled compared with a value of a notification flag bit S in an overhead frame in the tenth overhead multiframe. Optionally, the first device toggles the value of the notification flag bit S by overhead multiframe. Values of notification flag bits S in all overhead frames in the tenth overhead multiframe are the same, and the first device sets values of notification flag bits S in all overhead frames in the twelfth overhead multiframe to be toggled compared with the value of the notification flag bit S in the overhead frame in the tenth overhead multiframe. For example, when the values of the notification flag bits S in all the overhead frames in the tenth overhead multiframe are 1, the first device sets the values of the notification flag bits S in all the overhead frames in the twelfth overhead multiframe to 0. When the values of the notification flag bits S in all the overhead frames in the tenth overhead multiframe are 0, the first device sets the values of the notification flag bits S in all the overhead frames in the twelfth overhead multiframe to 1. A structure of the tenth overhead multiframe may be the same as or different from a structure of the twelfth overhead multiframe. For example, the structure of the tenth overhead multiframe and the structure of the twelfth overhead multiframe are both shown in FIG. 9, or the structure of the tenth overhead multiframe and the structure of the twelfth overhead multiframe are both shown inFIG. 10.

In another embodiment, the fourth overhead frame includes a first fgclientID field, an fgOMFI field, a notification flag bit S, a request flag bit CR, an acknowledge flag bit CA, and a validation flag bit C. That the first device generates the fourth overhead frame includes: The first device sets a value of the fgOMFI field in the fourth overhead frame based on a slot used to carry the second service; the first device adds the identifier of the second service to the first fgclientID field in the fourth overhead frame; and the first device sets a value of the notification flag bit S in the fourth overhead frame to the first value (for example, 1). In an example, the first device sets the value of the notification flag bit S to the first value by overhead multiframe, and the first device sets values of notification flag bits S in all overhead frames in the twelfth overhead multiframe to the first value. In another example, the first device sets the value of the notification flag bit S in the fourth overhead frame in the twelfth overhead multiframe to the first value, and sets a value of a notification flag bit S in a remaining overhead frame in the twelfth overhead multiframe to the second value (for example, 0). In the another example, the fourth overhead frame may be the 1^{st} overhead frame in the twelfth overhead multiframe, that is, an overhead frame in the 1^{st} fgMU (for example, the fgMU 1 in FIG. 9 or FIG. 10) in the twelfth overhead multiframe. Alternatively, the fourth overhead frame may not be the 1^{st} overhead frame in the twelfth overhead multiframe. This is not limited in embodiments of this application.

When the fourth overhead frame further includes a second fgclientID field, in a process of generating the fourth overhead frame, the first device may further add the identifier of the first service to the second fgclientID field in the fourth overhead frame. This is not limited in embodiments of this application.

S110: The second device receives the fourth overhead frame sent by the first device.

S111: The second device adjusts, based on the slot adjustment notification for the first service, the slot used to carry the first service.

In an optional embodiment, after the second device receives the fourth overhead frame sent by the first device, the first device determines whether the fourth overhead frame meets an adjustment notification condition. When the fourth overhead frame meets the adjustment notification condition, the second device determines that the fourth overhead frame carries the slot adjustment notification for the first service, and then the second device adjusts, based on the slot adjustment notification for the first service, the slot used to carry the first service. The adjustment notification condition includes any one of the following three conditions:
Condition 41: A value of a notification flag bit S in the fourth overhead frame is toggled compared with a value of a notification flag bit S in an overhead frame in a tenth overhead multiframe. The fourth overhead frame is included in a twelfth overhead multiframe, the twelfth overhead multiframe and the tenth overhead multiframe are two overhead multiframes consecutively sent by the first device to the second device, and the twelfth overhead multiframe is located after the tenth overhead multiframe. Optionally, values of notification flag bits S in all overhead frames in the tenth overhead multiframe are the same, and values of notification flag bits S in all overhead frames in the twelfth overhead multiframe are toggled compared with the value of the notification flag bit S in the overhead frame in the tenth overhead multiframe. For example, when the values of the notification flag bits S in all the overhead frames in the tenth overhead multiframe are 1, the values of the notification flag bits S in all the overhead frames in the twelfth overhead multiframe are 0. When the values of the notification flag bits S in all the overhead frames in the tenth overhead multiframe are 0, the values of the notification flag bits S in all the overhead frames in the twelfth overhead multiframe are 1.

Condition 42: A value of a notification flag bit S in the fourth overhead frame is toggled compared with a value of a notification flag bit S in an overhead frame in a tenth overhead multiframe, and the value of the notification flag bit S in the fourth overhead frame is different from a value of a request flag bit CR in an overhead frame in an eleventh overhead multiframe. The fourth overhead frame is included in a twelfth overhead multiframe, the twelfth overhead multiframe and the tenth overhead multiframe are two overhead multiframes consecutively sent by the first device to the second device, the twelfth overhead multiframe is located after the tenth overhead multiframe, and the eleventh overhead multiframe is an overhead multiframe that is being sent to the first device when the second device receives the fourth overhead frame. Optionally, values of notification flag bits S in all overhead frames in the tenth overhead multiframe are the same, values of request flag bits CR in all overhead frames in the eleventh overhead multiframe are the same, values of notification flag bits S in all overhead frames in the twelfth overhead multiframe are toggled compared with the value of the notification flag bit S in the overhead frame in the tenth overhead multiframe, and the values of the notification flag bits S in all the overhead frames in the twelfth overhead multiframe are different from the value of the request flag bit CR in the overhead frame in the eleventh overhead multiframe. For example, when the values of the notification flag bits S in all the overhead frames in the tenth overhead multiframe are 1, and the values of the request flag bits CR in the overhead frames in the eleventh overhead multiframe are 1, the values of the notification flag bits S in all the overhead frames in the twelfth overhead multiframe are 0. When the values of the notification flag bits S in all the overhead frames in the tenth overhead multiframe are 0, and the values of the request flag bits CR in the overhead frames in the eleventh overhead multiframe are 0, the values of the notification flag bits S in all the overhead frames in the twelfth overhead multiframe are 1.

Condition 43: A value of a notification flag bit S in the fourth overhead frame is a first value. Optionally, the first value is 1.

In an embodiment, when the adjustment notification condition includes the condition 43, the fourth overhead frame is the 1^{st} overhead frame in the twelfth overhead multiframe, that is, an overhead frame in the 1^{st} fgMU in the twelfth overhead multiframe, a value of a notification flag bit S in the 1^{st} overhead frame in the twelfth overhead multiframe is the first value, and a value of a notification flag bit S in a remaining overhead frame in the twelfth overhead multiframe is a second value (for example, 0). In another embodiment, when the adjustment notification condition includes the condition 43, the fourth overhead frame is any overhead frame in the twelfth overhead multiframe, and a value of a request flag bit S in each overhead frame in the twelfth overhead multiframe is the first value.

In an optional embodiment, that the second device adjusts, based on the slot adjustment notification for the first service, the slot used to carry the first service includes: The second device adds, based on the slot adjustment notification for the first service, the slot used to carry the first service. In an embodiment, the second device adds, based on slot adjustment information delivered by a management and control device, the slot used to carry the first service, where the slot adjustment information delivered by the management and control device includes indication information of a slot that needs to be adjusted. The second device determines, based on the indication information of the slot that needs to be adjusted, the specific slot that needs to be added.

In an optional embodiment, the condition 41 corresponds to the condition 11 in S103, the condition 42 corresponds to the condition 12 in S103, and the condition 43 corresponds to the condition 13 in S103. That is, when the second device determines, based on the condition 41, that the fourth overhead frame carries the slot adjustment notification for the first service, the first device determines, based on the condition 11, that the first overhead frame carries the slot adjustment request for the first service; or when the second device determines, based on the condition 42, that the fourth overhead frame carries the slot adjustment notification for the first service, the first device determines, based on the condition 12, that the first overhead frame carries the slot adjustment request for the first service; or when the second device determines, based on the condition 43, that the fourth overhead frame carries the slot adjustment notification for the first service, the first device determines, based on the condition 13, that the first overhead frame carries the slot adjustment request for the first service.

In an optional embodiment, continue to refer to FIG. 13. The slot adjustment method further includes the following step S112.

S112: The second device validates the slot adjustment result for the first service.

After sending the slot validation notification for the first service to the first device, the second device validates the slot adjustment result for the first service. For example, the second device validates the slot adjustment result for the first service in a next overhead multiframe after sending the slot validation notification to the first device.

In the foregoing embodiment, an example in which in an operation procedure of adding the slot used to carry the first service, the first device (a downstream device on the transmission path of the first service) sends the slot adjustment notification for the first service to the second device (an upstream device on the transmission path of the first service), and the second device adjusts, based on the slot adjustment notification for the first service, the slot used to carry the first service is used for description. In an operation procedure of deleting (or referred to as releasing) the slot used to carry the first service, the first device does not send the slot adjustment notification for the first service to the second device, and the second device may adjust, after sending the slot adjustment request for the first service to the first device, the slot used to carry the first service. For example, after sending the slot adjustment request for the first service to the first device and before receiving the slot adjustment acknowledge for the first service sent by the second device, the second device adjusts the slot used to carry the first service. This is not limited in embodiments of this application.

It should be noted that some overhead multiframes in the first to twelfth overhead multiframes in the foregoing embodiment may be a same overhead multiframe. For example, the second overhead multiframe and the eleventh overhead multiframe may be a same overhead multiframe, the third overhead multiframe and the seventh overhead multiframe may be a same overhead multiframe, and the fourth overhead multiframe and the eighth overhead multiframe may be a same overhead multiframe. Specific overhead multiframes that are a same overhead multiframe depend on a case in which the first device and the second device actually send overhead multiframes. In addition, in the foregoing embodiment, in a case in which the second device sets the value of the request flag bit CR to the first value by overhead multiframe, the first device sets the value of the acknowledge flag bit CA to the first value by overhead multiframe, the second device sets the value of the validation flag bit C to the first value by overhead multiframe, and the first device sets the value of the notification flag bit S to the first value by overhead multiframe, when the second device starts to send the slot validation notification to the first device by overhead multiframe (that is, the second device starts to set the value of the validation flag bit C to the first value by overhead multiframe), the value of the request flag bit CR is set to the second value by overhead multiframe; in a next multiframe period after the value of the validation flag bit C is set to the first value by overhead multiframe, the second device sets the value of the validation flag bit C to the second value by overhead multiframe; when the first device validates the slot adjustment result for the first service, the value of the acknowledge flag bit CA is set to the second value by overhead multiframe; and when the first device starts to send the slot adjustment acknowledge to the first device by overhead multiframe (that is, the first device starts to set the value of the acknowledge flag bit CA to the first value by overhead multiframe), the value of the notification flag bit S is set to the second value by overhead multiframe. For example, the first value is 1, and the second value is 0. Setting the value of the request flag bit CR to the second value may also be described as returning the value of the request flag bit CR to 0, setting the value of the acknowledge flag bit CA to the second value may also be described as returning the value of the acknowledge flag bit CA to 0, setting the value of the notification flag bit S to the second value may also be described as returning the value of the notification flag bit S to 0, and setting the value of the validation flag bit C to the second value may also be described as returning the value of the validation flag bit C to 0.

In this embodiment of this application, the operation procedure of deleting the slot used to carry the first service is completed hop by hop from a source end to a sink end of the transmission path of the first service, and the operation procedure of adding the slot used to carry the first service is completed hop by hop from the sink end to the source end of the transmission path of the first service. In the operation procedure of adding the slot used to carry the first service, a downstream device on the transmission path of the first service first sends an S message (that is, a slot adjustment notification) to an upstream device. For example, the transmission path of the first service is a transmission device 1 -> a transmission device 2 -> a transmission device 3 ... -> a transmission device n-1 -> a transmission device n. The transmission device 1 is the source end of the first service, and the transmission device n is the sink end of the first service.

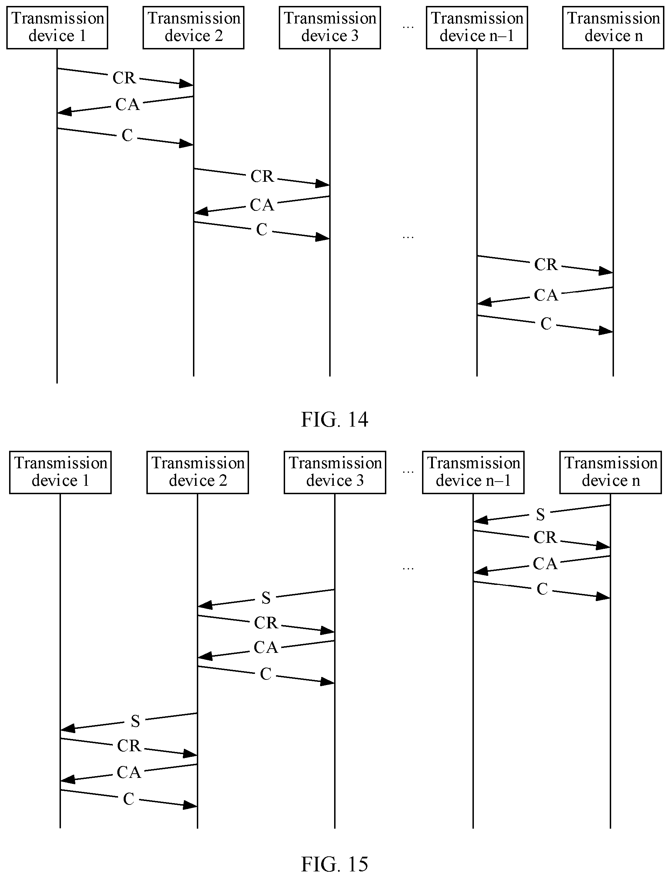

FIG. 14 is a diagram of an operation procedure of deleting a slot used to carry a first service according to an embodiment of this application. The transmission device 1 and the transmission device 2 perform slot negotiation to delete the slot used to carry the first service. After the transmission device 2 completes negotiation with the transmission device 1, the transmission device 2 and the transmission device 3 perform slot negotiation to delete the slot used to carry the first service, and so on, until the transmission device n-1 completes negotiation with the transmission device n. It can be learned that the operation procedure of deleting the slot used to carry the first service is completed hop by hop from the source end to the sink end of the transmission path of the first service. In FIG. 14, CR represents a CR message (that is, a slot adjustment request), CA represents a CA message (that is, a slot adjustment acknowledge), and C represents a C message (that is, a slot validation notification). These are all negotiation messages.

FIG. 15 is a diagram of an operation procedure of adding a slot used to carry a first service according to an embodiment of this application. The transmission device n-1 and the transmission device n perform slot negotiation to add the slot used to carry the first service. After the transmission device n-1 completes negotiation with the transmission device n, the transmission device n-1 performs slot negotiation with the transmission device n-2 to add the slot used to carry the first service. The rest may be deduced by analogy, until the transmission device 2 completes negotiation with the transmission device 1. It can be learned that the operation procedure of adding the slot used to carry the first service is completed hop by hop from the sink end to the source end of the transmission path of the first service. In FIG. 15, S represents an S message (that is, a slot adjustment notification), CR represents a CR message (that is, a slot adjustment request), CA represents a CA message (that is, a slot adjustment acknowledge), C represents a C message (that is, a slot validation notification), and the S message, the CR message, the CA message, and the C message are all negotiation messages.

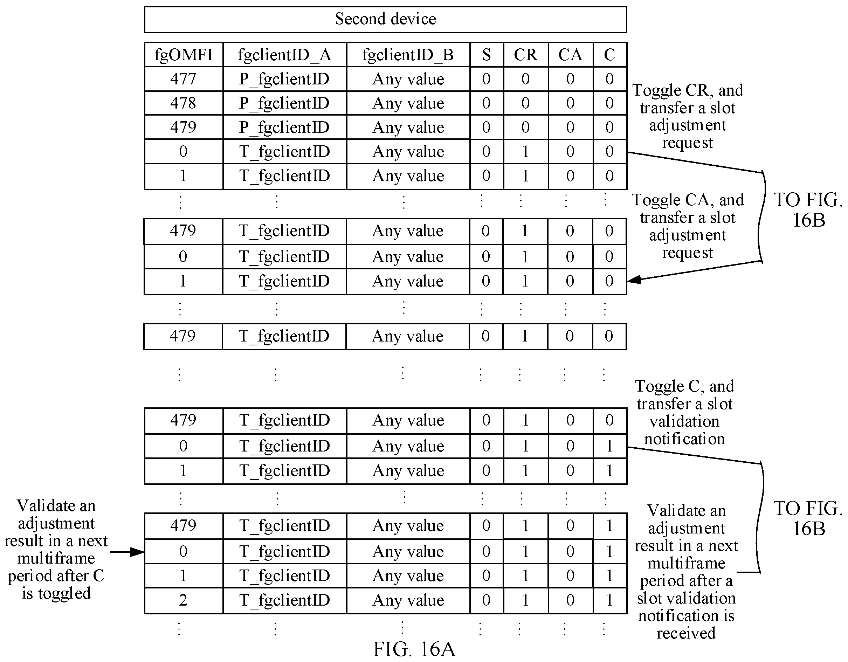

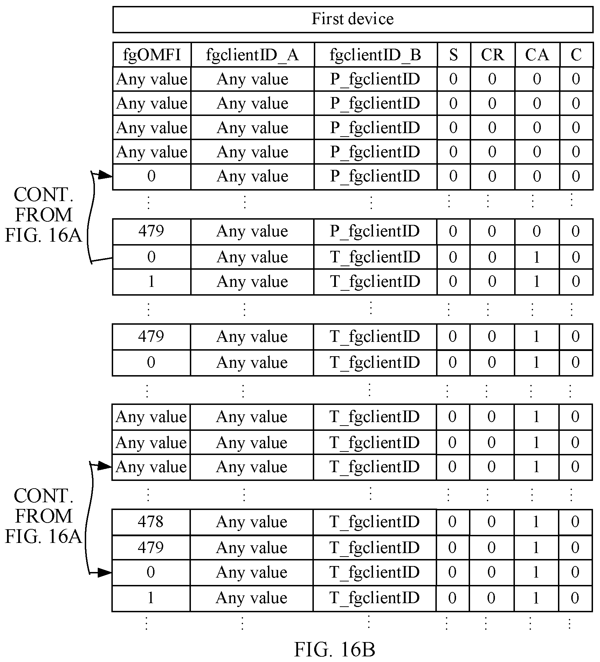

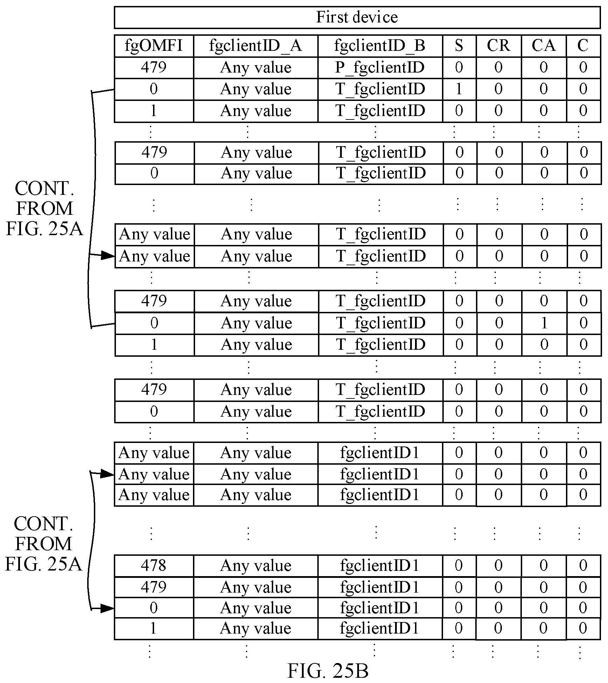

In embodiments of this application, a notification flag bit S, a request flag bit CR, an acknowledge flag bit CA, and a validation flag bit C in an overhead frame are collectively referred to as adjustment flag bits or adjustment indication bits. It can be learned from the description of the embodiments shown in FIG. 11 and FIG. 13 that a slot adjustment process may be triggered through toggle of an adjustment indication bit (corresponding to the foregoing condition 11, condition 21, condition 31, and condition 41), or a slot adjustment process may be triggered through toggle of an adjustment indication bit and status comparison (corresponding to the foregoing condition 12, condition 22, condition 32, and condition 42), or a slot adjustment process may be triggered by setting a value of an adjustment indication bit to a first value (corresponding to the foregoing condition 13, condition 23, condition 33, and condition 43). In a case in which the value of the adjustment indication bit is set to the first value, the value of the adjustment indication bit may be set to the first value by overhead multiframe (that is, values of adjustment indication bits in all overhead frames in the overhead multiframe are set to the first value), or the value of the adjustment indication bit may be set to the first value by overhead frame (for example, a value of an adjustment indication bit in the 1^{st} overhead frame in the overhead multiframe is set to the first value). With reference to FIG. 16A and FIG. 16B to FIG. 25A and FIG. 25B, the following describes, by using four examples, a process in which a first device and a second device adjust, through slot negotiation, a fine grain slot used to carry a first service. Each example includes a description of deleting a fine grain slot used to carry the first service and a description of adding a fine grain slot used to carry the first service. The first device and the second device are two adjacent transmission devices on a transmission path of the first service, and the first device is located downstream the second device. In other words, the first device is a downstream device, and the second device is an upstream device. It should be noted that each row of content in FIG. 16A and FIG. 16B, FIG. 17A and FIG. 17B, and FIG. 20A and FIG. 20B to FIG. 25A and FIG. 25B represents one fgMU. FIG. 16A and FIG. 16B, FIG. 17A and FIG. 17B, and FIG. 20A and FIG. 20B to FIG. 25A and FIG. 25B show only fields related to a slot adjustment process in an overhead frame in the fgMU. In FIG. 16A and FIG. 16B, FIG. 17A and FIG. 17B, and FIG. 20A and FIG. 20B to FIG. 25A and FIG. 25B, P_fgclientID represents fgclientID before slot adjustment, and T_fgclientID represents fgclientID during and after slot adjustment. P_fgclientID carried in different overhead frames may be the same or different, T_fgclientID carried in different overhead frames may be the same or different, and P_fgclientID and T_fgclientID may be the same or different. An identifier of the first service may be any T_fgclientID. That an fgOMFI field is set to any value means that the fgOMFI field is set to any value within 0 to 479, that an fgclientID_A field is set to any value means that the fgclientID_A field may carry any fgclientID, and that an fgclientID_B field is set to any value means that the fgclientID_B field may carry any fgclientID. Specific values of these any values are not concerned in a slot adjustment process in embodiments of this application, and therefore are described as any values.

**First example:** A slot adjustment process is triggered through toggle of an adjustment indication bit. A toggle position of the adjustment indication bit is located at a boundary of an overhead multiframe, that is, the adjustment indication bit starts to be toggled from an overhead frame with fgOMFI=0 (that is, a value of an fgOMFI field is 0) in the overhead multiframe. Toggling the adjustment indication bit herein specifically refers to toggling a value of the adjustment indication bit. For brevity, toggling the adjustment indication bit is used as an example for description below.

FIG. 16A and FIG. 16B are a diagram of deleting a fine grain slot used to carry a first service according to an embodiment of this application. As shown in FIG. 16A and FIG. 16B, a second device transfers a slot adjustment request to a first device by toggling a request flag bit CR. If the first device detects that the request flag bit CR is toggled (for example, the first device detects that the foregoing condition 11 is met), the first device determines that the slot adjustment request is received. After the first device deletes, based on the slot adjustment request, the fine grain slot used to carry the first service, for example, after the first device is ready to validate a slot adjustment result, the first device transfers a slot adjustment acknowledge to the second device by toggling an acknowledge flag bit CA. If the second device detects that the acknowledge flag bit CA is toggled (for example, the second device detects that the foregoing condition 21 is met), the second device determines that the slot adjustment acknowledge is received. Then, the second device transfers a slot validation notification to the first device by toggling a validation flag bit C, and the second device validates the slot adjustment result in a next multiframe period after the validation flag bit C is toggled. If the first device detects that three consecutive validation flag bits C are toggled (for example, the first device detects that the foregoing condition 31 is met), the first device determines that the slot validation notification is received, and the first device validates the slot adjustment result in a next multiframe period after the slot validation notification is received.

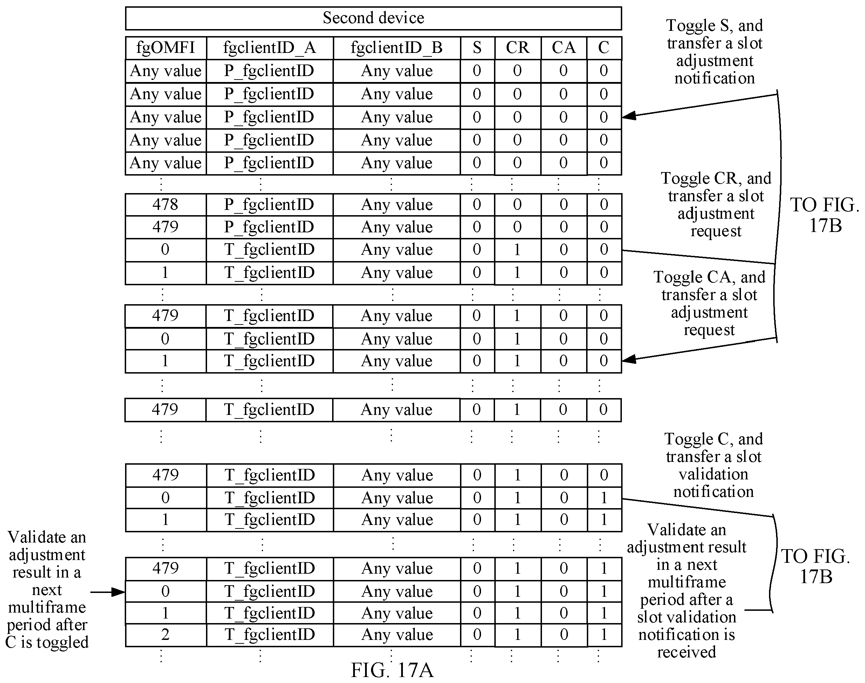

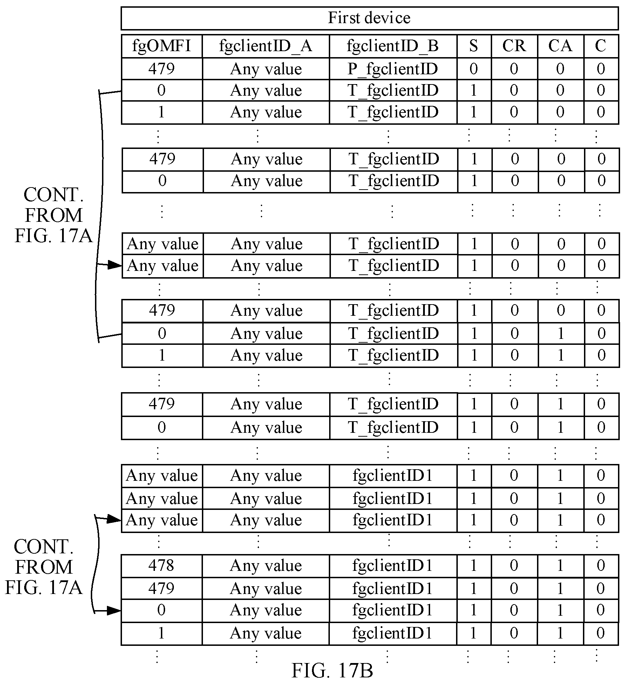

FIG. 17A and FIG. 17B are a diagram of adding a fine grain slot used to carry a first service according to an embodiment of this application. As shown in FIG. 17A and FIG. 17B, the first device transfers a slot adjustment notification to the second device by toggling a notification flag bit S. If the second device detects that the notification flag bit S is toggled (for example, the second device detects that the foregoing condition 41 is met), the second device determines that the slot adjustment notification is received, and the second device adds, based on the slot adjustment notification, the fine grain slot used to carry the first service. After the second device determines that the slot adjustment notification is received, the second device transfers a slot adjustment request to the first device by toggling a request flag bit CR. If the first device detects that the request flag bit CR is toggled (for example, the first device detects that the foregoing condition 11 is met), the first device determines that the slot adjustment request is received. After the first device adds, based on the slot adjustment request, the fine grain slot used to carry the first service, for example, after the first device is ready to validate a slot adjustment result, the first device transfers a slot adjustment acknowledge to the second device by toggling an acknowledge flag bit CA. If the second device detects that the acknowledge flag bit CA is toggled (for example, the second device detects that the foregoing condition 21 is met), the second device determines that the slot adjustment acknowledge is received. Then, the second device transfers a slot validation notification to the first device by toggling a validation flag bit C, and the second device validates the slot adjustment result in a next multiframe period after the validation flag bit C is toggled. If the first device detects that three consecutive validation flag bits C are toggled (for example, the first device detects that the foregoing condition 31 is met), the first device determines that the slot validation notification is received, and the first device validates the slot adjustment result in a next multiframe period after the slot validation notification is received.

**Second example:** A slot adjustment process is triggered through toggle of an adjustment indication bit and status comparison. A toggle position of the adjustment indication bit is located at a boundary of an overhead multiframe, that is, the adjustment indication bit starts to be toggled from an overhead frame with fgOMFI=0 (that is, a value of an fgOMFI field is 0) in the overhead multiframe. Toggling the adjustment indication bit herein specifically refers to toggling a value of the adjustment indication bit. For brevity, toggling the adjustment indication bit is used as an example for description below.

Compared with the foregoing first example, in the second example, a slot adjustment process is triggered through toggle of an adjustment indication bit and status comparison, and in the second example, reliability of slot negotiation may be enhanced by adding a decision condition.

In the second example, before slot adjustment, values of all adjustment indication bits are the same.

Specifically, a value of a request flag bit CR in an overhead frame that carries a slot adjustment request and that is sent by an upstream device (for example, a second device) to a downstream device (for example, a first device) is the same as a value of a notification flag bit S in an overhead frame that carries a slot adjustment notification and that is received by the upstream device from the downstream device. A value of an acknowledge flag bit CA in an overhead frame that carries a slot adjustment acknowledge and that is sent by the downstream device to the upstream device is the same as a value of a request flag bit CR in an overhead frame that carries a slot adjustment request and that is received by the downstream device from the upstream device. A value of a validation flag bit C in an overhead frame that carries a slot validation notification and that is sent by the upstream device to the downstream device is the same as a value of an acknowledge flag bit CA in an overhead frame that carries a slot adjustment acknowledge and that is received by the upstream device from the downstream device. The brief description is as follows: CRᵤₚ=S_{down}, CA_{down}=CRᵤₚ, and Cᵤₚ=CA_{down}. That is, S_{down}=CRᵤₚ=CA_{down}=Cᵤₚ. S_{down} represents the value of the notification flag bit S in the overhead frame that carries the slot adjustment notification and that is sent by the downstream device to the upstream device, CRᵤₚ represents the value of the request flag bit CR in the overhead frame that carries the slot adjustment request and that is sent by the upstream device to the downstream device, CA_{down} represents the value of the acknowledge flag bit CA in the overhead frame that carries the slot adjustment acknowledge and that is sent by the downstream device to the upstream device, and Cᵤₚ represents the value of the validation flag bit C in the overhead frame that carries the slot validation notification and that is sent by the upstream device to the downstream device.

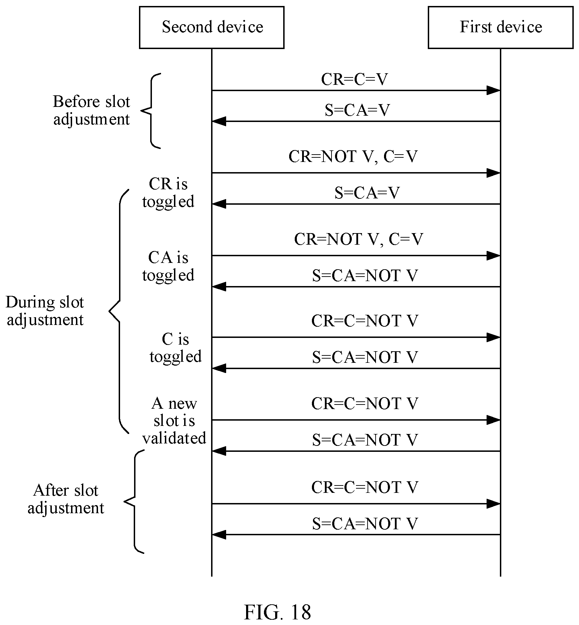

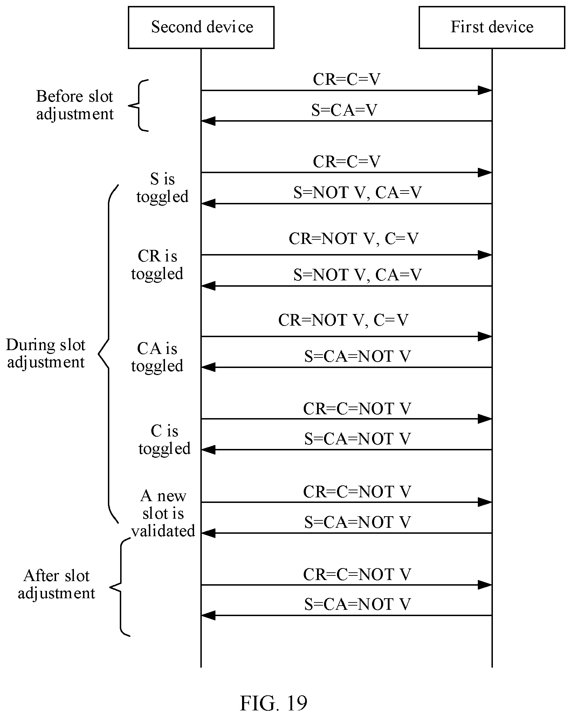

In the second example, in a slot adjustment process, changes in values of adjustment indication bits are shown in FIG. 18 and FIG. 19. FIG. 18 shows a change in a value of each adjustment indication bit in a slot deletion process, and FIG. 19 shows a change in a value of each adjustment indication bit in a slot addition process. In FIG. 18 and FIG. 19, CR=C=V indicates that a value of a request flag bit CR is equal to a value of a validation flag bit C and is equal to V, that is, both the value of the request flag bit CR and the value of the validation flag bit C are V, and CR=C=NOT V indicates that a value of a request flag bit CR is equal to a value of a validation flag bit C and is equal to NOT V, that is, both the value of the request flag bit CR and the value of the validation flag bit C are NOT V. V is equal to 1 or 0. Correspondingly, NOT V is equal to 0 or 1. Meanings of other similar expressions are similar to this, and details are not described herein again. Refer to FIG. 18 and FIG. 19. Before slot adjustment, both a value of a request flag bit CR and a value of a validation flag bit C in an overhead frame sent by the second device to the first device are equal to V, and both a value of a notification flag bit S and a value of an acknowledge flag bit CA in an overhead frame sent by the first device to the second device are equal to V, that is, S_{down}=CRᵤₚ=CA_{down}=Cᵤₚ=V. After slot adjustment, both the value of the request flag bit CR and the value of the validation flag bit C in the overhead frame sent by the second device to the first device are equal to NOT V, and both the value of the notification flag bit S and the value of the acknowledge flag bit CA in the overhead frame sent by the first device to the second device are equal to NOT V, that is, S_{down}=CRᵤₚ=CA_{down}=Cᵤₚ=NOT V. As shown in FIG. 18, in a negotiation process of deleting a slot, a value of a request flag bit CR in an overhead frame sent by the second device to the first device, a value of an acknowledge flag bit CA in an overhead frame sent by the first device to the second device, and a value of a validation flag bit C in an overhead frame sent by the second device to the first device are sequentially toggled, and to ensure that S_{down}=CRᵤₚ=CA_{down}=Cᵤₚ after slot adjustment, the value of the notification flag bit S in the overhead frame sent by the first device to the second device is toggled with the value of the acknowledge flag bit CA. As shown in FIG. 19, in a negotiation process of adding a slot, a value of a notification flag bit S in an overhead frame sent by the first device to the second device, a value of a request flag bit CR in an overhead frame sent by the second device to the first device, a value of an acknowledge flag bit CA in an overhead frame sent by the first device to the second device, and a value of a validation flag bit C in an overhead frame sent by the second device to the first device are sequentially toggled.

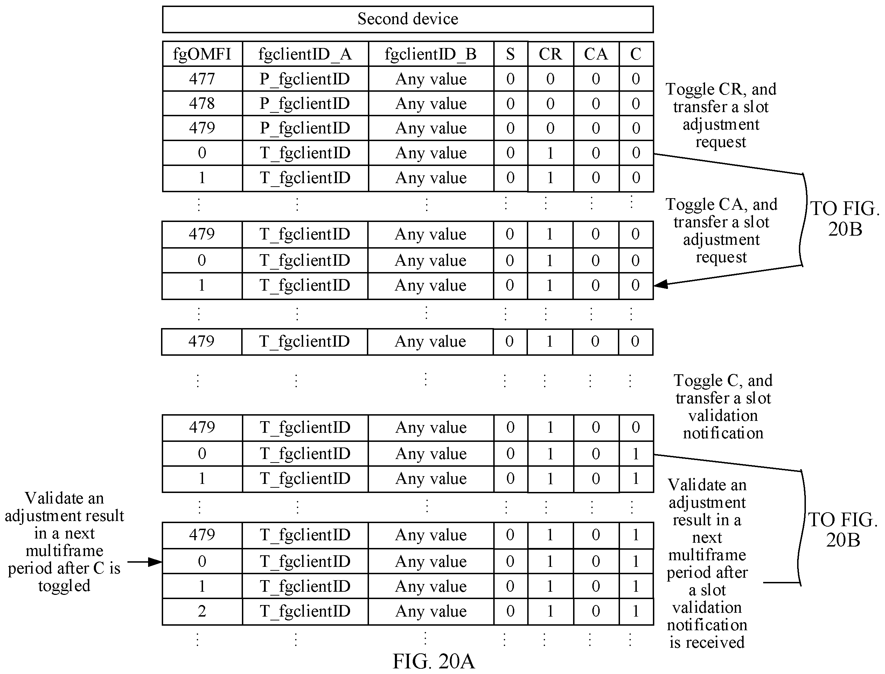

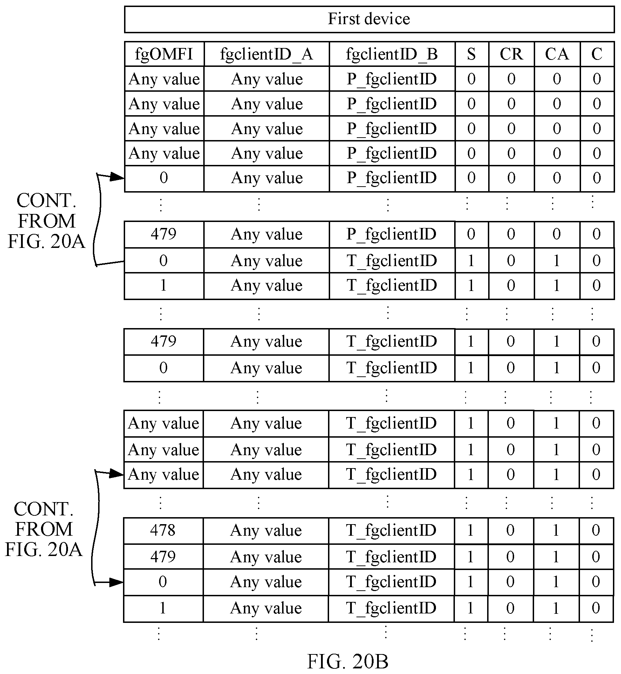

FIG. 20A and FIG. 20B are a diagram of deleting a fine grain slot used to carry a first service according to an embodiment of this application. As shown in FIG. 20A and FIG. 20B, before slot adjustment, S_{down}=CRᵤₚ=CA_{down}=Cᵤₚ=0. When slot adjustment starts, the second device transfers a slot adjustment request to the first device by toggling a request flag bit CR. If the first device detects that the request flag bit CR is toggled and a value of the toggled request flag bit CR is different from a value of an acknowledge flag bit CA in an overhead frame in an overhead multiframe that is being sent by the first device to the second device (for example, the first device detects that the foregoing condition 12 is met), the first device determines that the slot adjustment request is received. After the first device deletes, based on the slot adjustment request, the fine grain slot used to carry the first service, for example, after the first device is ready to validate a slot adjustment result, the first device transfers a slot adjustment acknowledge to the second device by toggling an acknowledge flag bit CA, and the first device further toggles a notification flag bit S when toggling the acknowledge flag bit CA. If the second device detects that the acknowledge flag bit CA is toggled and a value of the toggled acknowledge flag bit CA is the same as a value of a request flag bit CR in an overhead frame in an overhead multiframe that is being sent by the second device to the second device (for example, the second device detects that the foregoing condition 22 is met), the second device determines that the slot adjustment acknowledge is received. Then, the second device transfers a slot validation notification to the first device by toggling a validation flag bit C, and the second device validates the slot adjustment result in a next multiframe period after the validation flag bit C is toggled. If the first device detects that three consecutive validation flag bits C are toggled and a value of the toggled validation flag bit C is the same as a value of an acknowledge flag bit CA in an overhead frame in an overhead multiframe that is being sent by the first device to the second device (for example, the first device detects that the foregoing condition 32 is met), the first device determines that the slot validation notification is received, and the first device validates the slot adjustment result in a next multiframe period after the slot validation notification is received. After slot adjustment, S_{down}=CRᵤₚ=CA_{down}=Cᵤₚ=1.

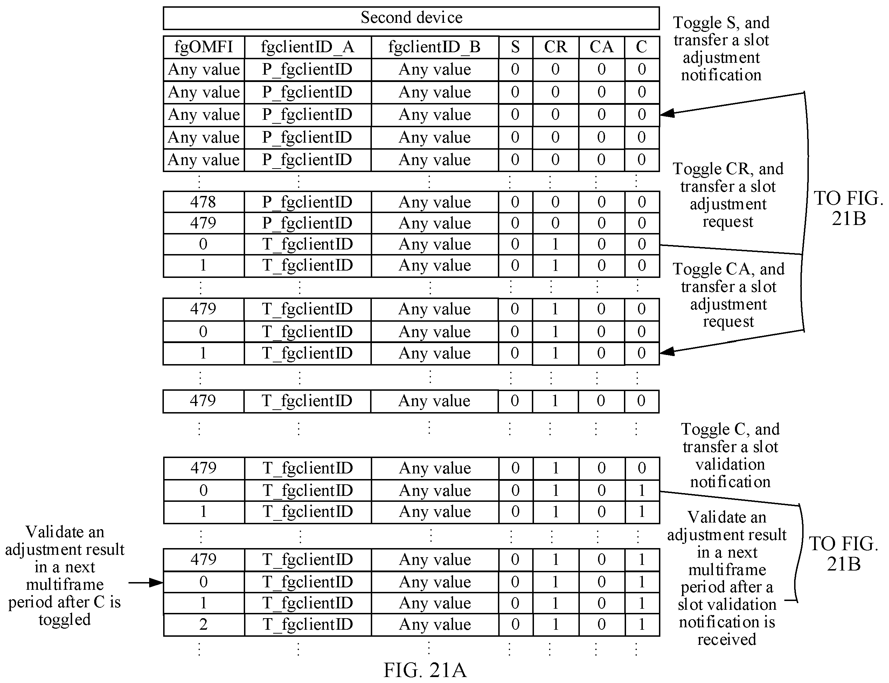

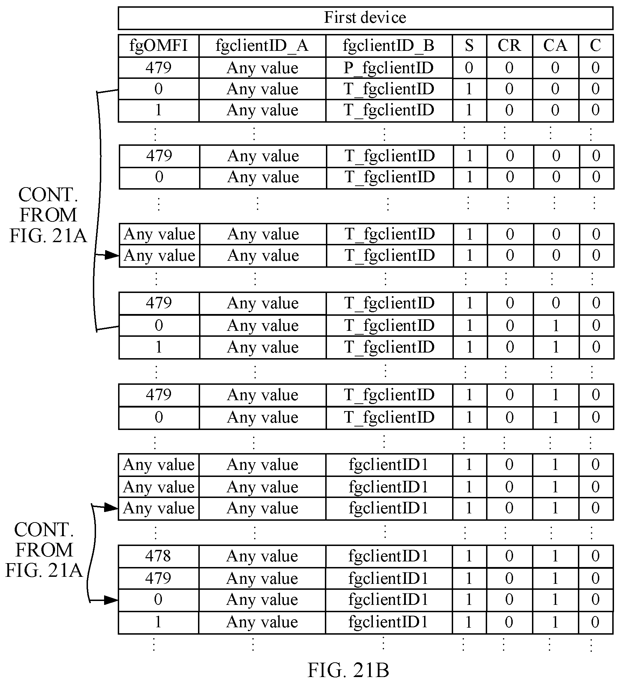

FIG. 21A and FIG. 21B are a diagram of adding a fine grain slot used to carry a first service according to an embodiment of this application. As shown in FIG. 21A and FIG. 21B, before slot adjustment, S_{down}=CRᵤₚ=CA_{down}=Cᵤₚ=0. When slot adjustment starts, the first device transfers a slot adjustment notification to the second device by toggling a notification flag bit S. If the second device detects that the notification flag bit S is toggled and a value of the toggled notification flag bit S is different from a value of a request flag bit CR in an overhead frame in an overhead multiframe that is being sent by the second device to the second device (for example, the second device detects that the foregoing condition 42 is met), the second device determines that the slot adjustment notification is received, and the second device adds, based on the slot adjustment notification, the fine grain slot used to carry the first service. After the second device determines that the slot adjustment notification is received, the second device transfers a slot adjustment request to the first device by toggling a request flag bit CR. If the first device detects that the request flag bit CR is toggled and a value of the toggled request flag bit CR is different from a value of an acknowledge flag bit CA in an overhead frame in an overhead multiframe that is being sent by the first device to the second device (for example, the first device detects that the foregoing condition 12 is met), the first device determines that the slot adjustment request is received. After the first device adds, based on the slot adjustment request, the fine grain slot used to carry the first service, for example, after the first device is ready to validate a slot adjustment result, the first device transfers a slot adjustment acknowledge to the second device by toggling an acknowledge flag bit CA. If the second device detects that the acknowledge flag bit CA is toggled and a value of the toggled acknowledge flag bit CA is the same as a value of a request flag bit CR in an overhead frame in an overhead multiframe that is being sent by the second device to the second device (for example, the second device detects that the foregoing condition 22 is met), the second device determines that the slot adjustment acknowledge is received. Then, the second device transfers a slot validation notification to the first device by toggling a validation flag bit C, and the second device validates the slot adjustment result in a next multiframe period after the validation flag bit C is toggled. If the first device detects that three consecutive validation flag bits C are toggled and a value of the toggled validation flag bit C is the same as a value of an acknowledge flag bit CA in an overhead frame in an overhead multiframe that is being sent by the first device to the second device (for example, the first device detects that the foregoing condition 32 is met), the first device determines that the slot validation notification is received, and the first device validates the slot adjustment result in a next multiframe period after the slot validation notification is received. After slot adjustment, S_{down}=CRᵤₚ=CA_{down}=Cᵤₚ=1.

**Third example:** A slot adjustment process is triggered by setting a value of an adjustment indication bit to a first value by overhead multiframe. This example is described by using 1 as the first value.

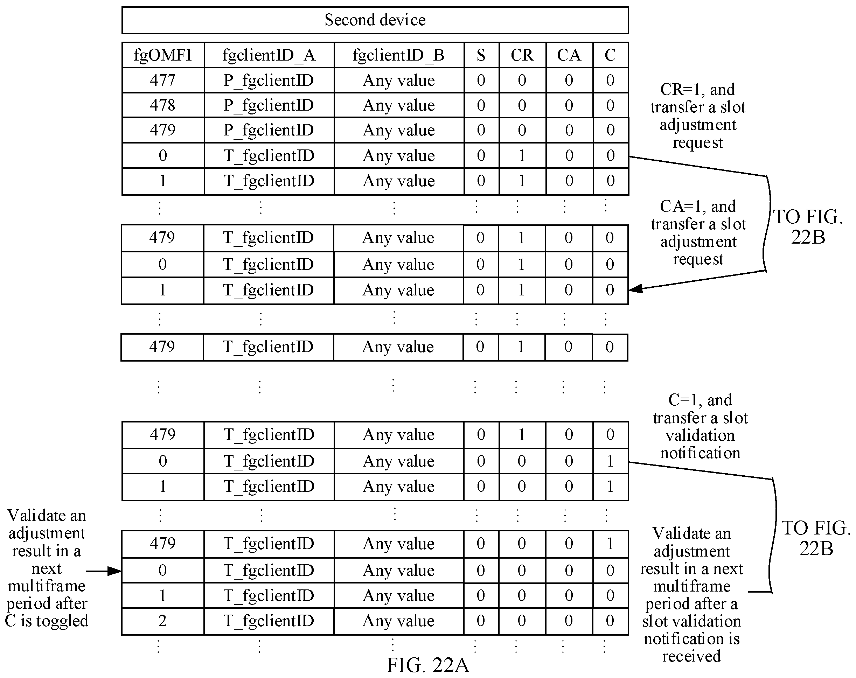

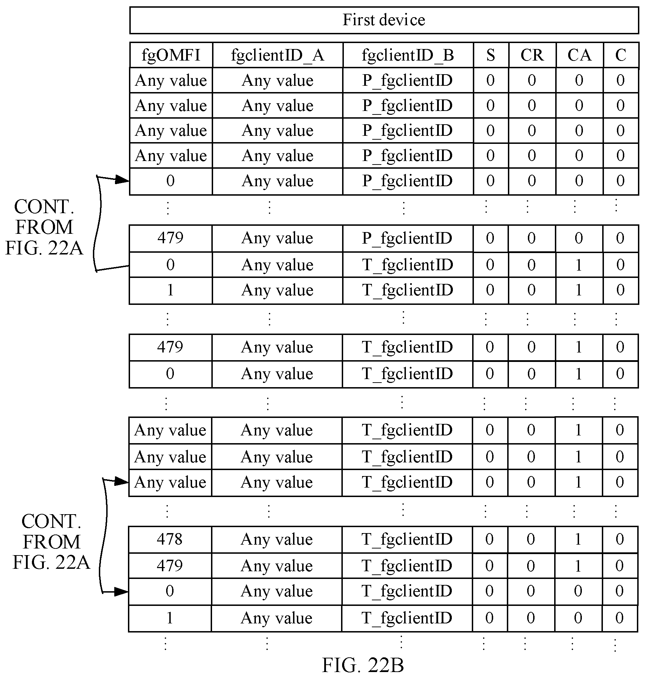

FIG. 22A and FIG. 22B are a diagram of deleting a fine grain slot used to carry a first service according to an embodiment of this application. As shown in FIG. 22A and FIG. 22B, before slot adjustment, a value of each adjustment indication bit is 0. When slot adjustment starts, a second device sets a value of a request flag bit CR to 1 by overhead multiframe, to continuously transfer a slot adjustment request to a first device. If the first device detects that the value of the request flag bit CR is 1 (for example, the first device detects that the foregoing condition 13 is met), the first device determines that the slot adjustment request is received. After the first device deletes, based on the slot adjustment request, the fine grain slot used to carry the first service, for example, after the first device is ready to validate a slot adjustment result, the first device sets a value of an acknowledge flag bit CA to 1 by overhead multiframe, to continuously transfer a slot adjustment acknowledge to the second device. If the second device detects that the value of the acknowledge flag bit CA is 1 (for example, the second device detects that the foregoing condition 23 is met), the first device determines that the slot adjustment acknowledge is received. Then, the second device sets a value of a validation flag bit C to 1 by overhead multiframe, to continuously transfer a slot validation notification to the first device. In addition, when starting to transfer the slot validation notification to the first device, the second device returns the value of the request flag bit CR to 0. The second device validates the slot adjustment result in a next multiframe period after the slot validation notification is transferred to the first device. The second device returns the value of the validation flag bit C to 0 when starting to validate the slot adjustment result. If the first device detects that values of three consecutive validation flag bits C are 1 (for example, the first device detects that the foregoing condition 33 is met), the first device determines that the slot validation notification is received, the first device validates the slot adjustment result in a next multiframe period after the slot validation notification is received, and the first device starts to return the value of the acknowledge flag bit CA to 0 when validating the slot adjustment result. After slot adjustment, a value of each adjustment indication bit is 0.

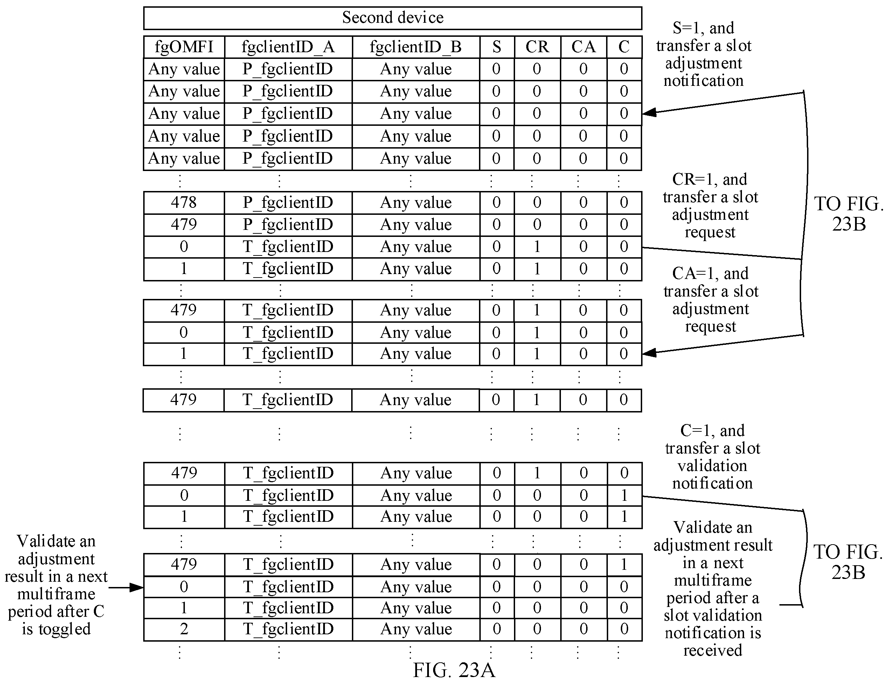

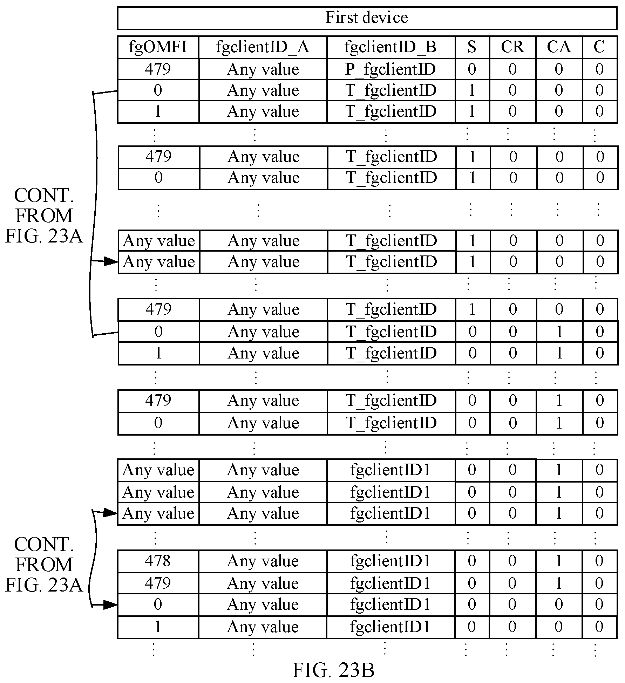

FIG. 23A and FIG. 23B are a diagram of adding a fine grain slot used to carry a first service according to an embodiment of this application. As shown in FIG. 23A and FIG. 23B, before slot adjustment, a value of each adjustment indication bit is 0. When slot adjustment starts, the first device sets a value of a notification flag bit S to 1 by overhead multiframe, to continuously transfer a slot adjustment notification to the second device. If the second device detects that the value of the notification flag bit S is 1 (for example, the second device detects that the foregoing condition 43 is met), the second device determines that the slot adjustment notification is received, and the second device adds, based on the slot adjustment notification, the fine grain slot used to carry the first service. After the second device determines that the slot adjustment notification is received, the second device sets a value of a request flag bit CR to 1 by overhead multiframe, to continuously transfer a slot adjustment request to the first device. If the first device detects that the value of the request flag bit CR is 1 (for example, the first device detects that the foregoing condition 13 is met), the first device determines that the slot adjustment request is received. After the first device adds, based on the slot adjustment request, the fine grain slot used to carry the first service, for example, after the first device is ready to validate a slot adjustment result, the first device sets a value of an acknowledge flag bit CA to 1 by overhead multiframe, to continuously transfer a slot adjustment acknowledge to the second device, and the first device returns the value of the notification flag bit S to 0 when starting to transfer the slot adjustment acknowledge to the second device. If the second device detects that the value of the acknowledge flag bit CA is 1 (for example, the second device detects that the foregoing condition 23 is met), the first device determines that the slot adjustment acknowledge is received. Then, the second device sets a value of a validation flag bit C to 1 by overhead multiframe, to continuously transfer a slot validation notification to the first device. In addition, when starting to transfer the slot validation notification to the first device, the second device returns the value of the request flag bit CR to 0. The second device validates the slot adjustment result in a next multiframe period after the slot validation notification is transferred to the first device. The second device returns the value of the validation flag bit C to 0 when starting to validate the slot adjustment result. If the first device detects that values of three consecutive validation flag bits C are 1 (for example, the first device detects that the foregoing condition 33 is met), the first device determines that the slot validation notification is received, the first device validates the slot adjustment result in a next multiframe period after the slot validation notification is received, and the first device starts to return the value of the acknowledge flag bit CA to 0 when validating the slot adjustment result. After slot adjustment, a value of each adjustment indication bit is 0.

**Fourth example:** A slot adjustment process is triggered by setting a value of an adjustment indication bit to a first value by overhead frame. This example is described by using 1 as the first value. In addition, in this example, for a request indication bit CR, an acknowledge flag bit CA, and a notification flag bit S, a value of an adjustment indication bit in the 1^{st} overhead frame in an overhead multiframe is set to the first value, and for a validation flag bit C, values of adjustment indication bits in first three overhead frames in the overhead multiframe are set to the first value. The 1^{st} overhead frame in the overhead multiframe is an overhead frame in the 1^{st} fgMU in the overhead multiframe, that is, an overhead frame with fgOMFI=0 in the overhead multiframe. The first three overhead frames in the overhead multiframe are overhead frames in first three fgMUs in the overhead multiframe, that is, an overhead frame with fgOMFI=0, an overhead frame with fgOMFI=1, and an overhead frame with fgOMFI=2.

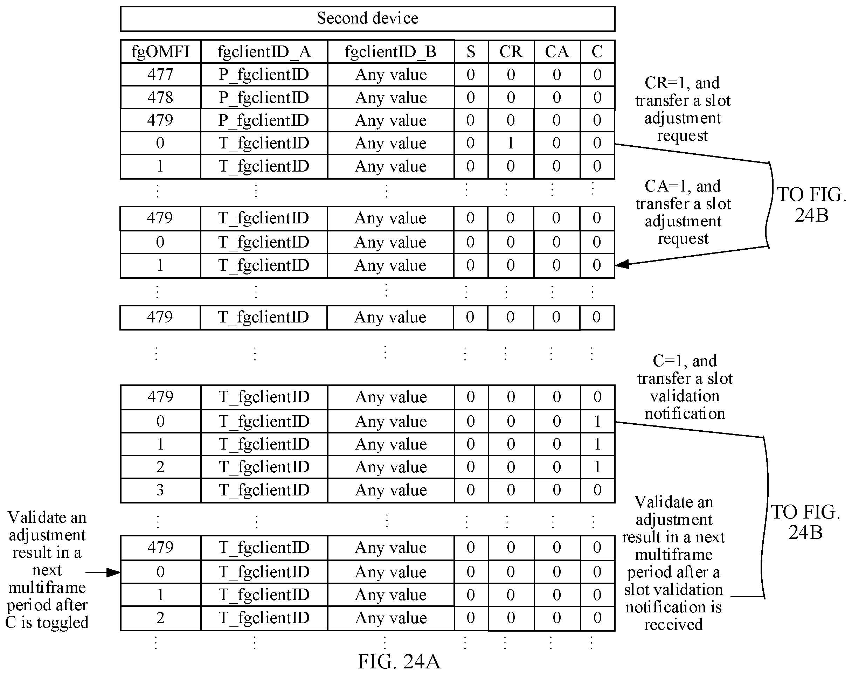

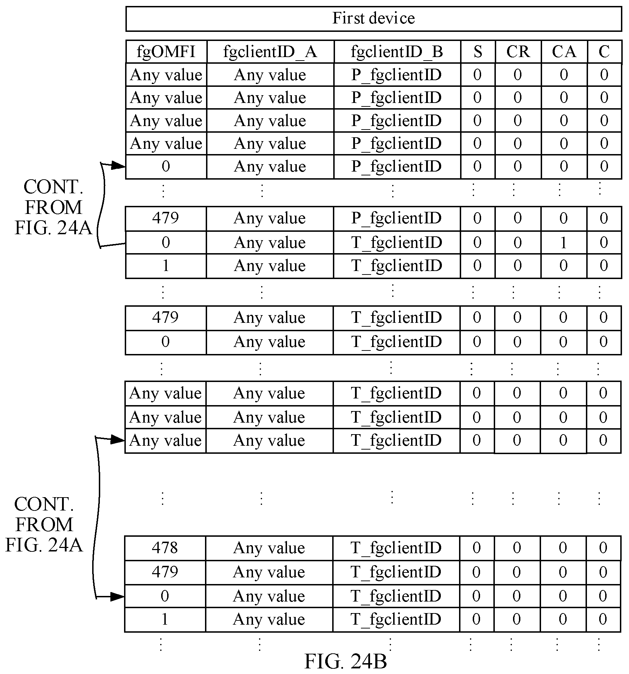

FIG. 24A and FIG. 24B are a diagram of deleting a fine grain slot used to carry a first service according to an embodiment of this application. As shown in FIG. 24A and FIG. 24B, before slot adjustment, a value of each adjustment indication bit is 0. When slot adjustment starts, a second device sets a value of a request flag bit CR to 1 by overhead frame, to transfer a slot adjustment request to a first device. If the first device detects that the value of the request flag bit CR is 1 (for example, the first device detects that the foregoing condition 13 is met), the first device determines that the slot adjustment request is received. After the first device deletes, based on the slot adjustment request, the fine grain slot used to carry the first service, for example, after the first device is ready to validate a slot adjustment result, the first device sets a value of an acknowledge flag bit CA to 1 by overhead frame, to transfer a slot adjustment acknowledge to the second device. If the second device detects that the value of the acknowledge flag bit CA is 1 (for example, the second device detects that the foregoing condition 23 is met), the first device determines that the slot adjustment acknowledge is received. Then, the second device sets a value of a validation flag bit C to 1 by overhead frame, to transfer a slot validation notification to the first device. The second device validates the slot adjustment result in a next multiframe period after the slot validation notification is transferred to the first device. If the first device detects that a value of at least one validation flag bit C is 1 (for example, the first device detects that the foregoing condition 33 is met), the first device determines that the slot validation notification is received, and the first device validates the slot adjustment result in a next multiframe period after the slot validation notification is received. After slot adjustment, a value of each adjustment indication bit is 0.

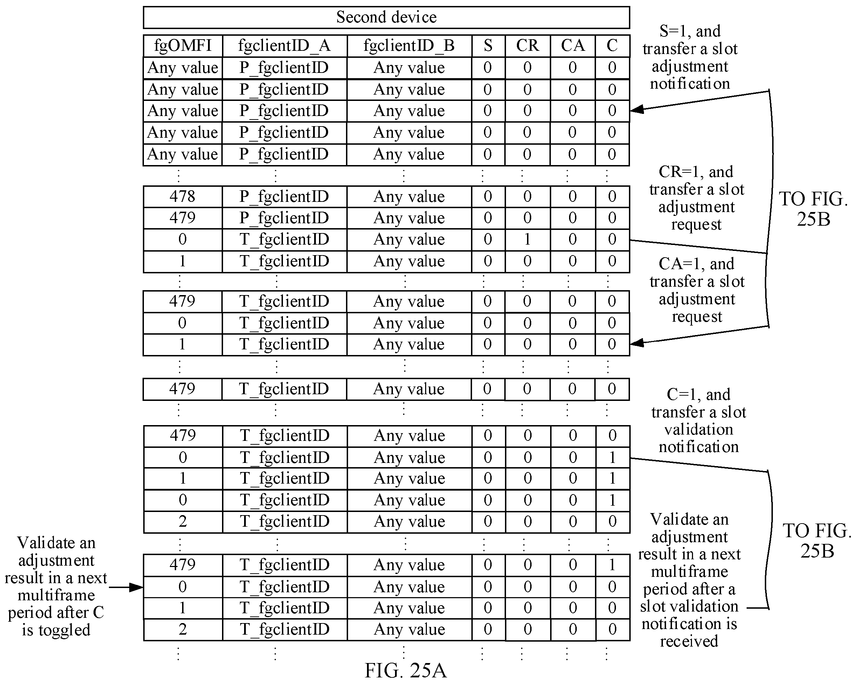

FIG. 25A and FIG. 25B are a diagram of adding a fine grain slot used to carry a first service according to an embodiment of this application. As shown in FIG. 25A and FIG. 25B, before slot adjustment, a value of each adjustment indication bit is 0. When slot adjustment starts, the first device sets a value of a notification flag bit S to 1 by overhead frame, to transfer a slot adjustment notification to the second device. If the second device detects that the value of the notification flag bit S is 1 (for example, the second device detects that the foregoing condition 43 is met), the second device determines that the slot adjustment notification is received, and the second device adds, based on the slot adjustment notification, the fine grain slot used to carry the first service. After the second device determines that the slot adjustment notification is received, the second device sets a value of a request flag bit CR to 1 by overhead frame, to transfer a slot adjustment request to the first device. If the first device detects that the value of the request flag bit CR is 1 (for example, the first device detects that the foregoing condition 13 is met), the first device determines that the slot adjustment request is received. After the first device adds, based on the slot adjustment request, the fine grain slot used to carry the first service, for example, after the first device is ready to validate a slot adjustment result, the first device sets a value of an acknowledge flag bit CA to 1 by overhead frame, to transfer a slot adjustment acknowledge to the second device. If the second device detects that the value of the acknowledge flag bit CA is 1 (for example, the second device detects that the foregoing condition 23 is met), the first device determines that the slot adjustment acknowledge is received. Then, the second device sets a value of a validation flag bit C to 1 by overhead frame, to transfer a slot validation notification to the first device. The second device validates the slot adjustment result in a next multiframe period after the slot validation notification is transferred to the first device. If the first device detects that a value of at least one validation flag bit C is 1 (for example, the first device detects that the foregoing condition 33 is met), the first device determines that the slot validation notification is received, and the first device validates the slot adjustment result in a next multiframe period after the slot validation notification is received. After slot adjustment, a value of each adjustment indication bit is 0.

The first example and the second example are described by using an example in which an adjustment indication bit is toggled from 1 to 0. In some embodiments, a slot adjustment process is triggered by toggling an adjustment indication bit from 0 to 1, or a slot adjustment process is triggered by toggling an adjustment indication bit from 0 to 1 and performing status comparison. In some other embodiments, in one adjustment process, some adjustment indication bits are toggled from 0 to 1, and some other adjustment indication bits are toggled from 1 to 0. This is not limited in embodiments of this application.

The foregoing describes the method embodiments of this application, and the following describes apparatus embodiments of this application. An apparatus in this application may be configured to perform the method in this application. For details that are not disclosed in apparatus embodiments of this application, refer to the method embodiments.

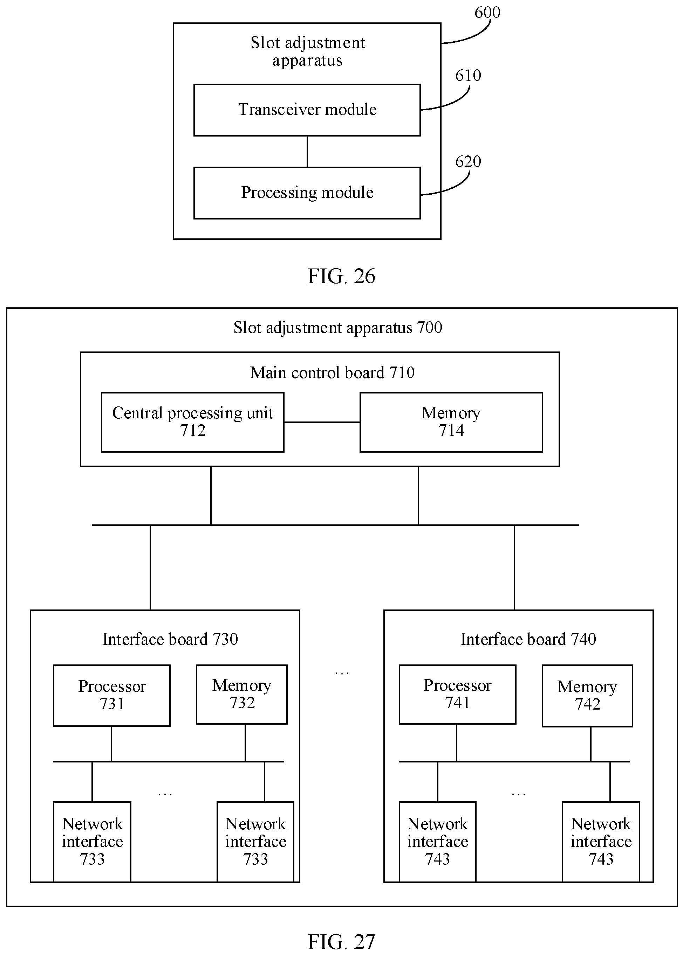

FIG. 26 is a diagram of a slot adjustment apparatus 600 according to an embodiment of this application. The slot adjustment apparatus 600 is used in a transmission device. The transmission device is the first device or the second device in the foregoing embodiments. For example, the slot adjustment apparatus 600 is the first device or a functional component in the first device, or the slot adjustment apparatus 600 is the second device or a functional component in the second device. As shown in FIG. 26, the slot adjustment apparatus 600 includes a transceiver module 610 and a processing module 620. The transceiver module 610 is configured to perform receiving and sending operations in the method embodiments shown in FIG. 11 and FIG. 13, and the processing module 620 is configured to perform operations other than the receiving and sending operations in the method embodiments shown in FIG. 11 and FIG. 13.

**In an embodiment, the slot adjustment apparatus 600 is used in the first device.**

The transceiver module 610 is configured to receive a first overhead frame sent by a second device, where the first overhead frame carries a slot adjustment request for a first service.

The processing module 620 is configured to adjust, based on the slot adjustment request for the first service, a slot used to carry the first service.

The transceiver module 610 is further configured to send a second overhead frame to the second device, where the second overhead frame carries an identifier of a second service and a slot adjustment acknowledge that is for the first service and that corresponds to the slot adjustment request, and a transmission direction of the second service is opposite to a transmission direction of the first service.

Optionally, the second overhead frame further carries an identifier of the first service.

Optionally, the processing module 620 is further configured to: when the first overhead frame meets an adjustment request condition, determine that the first overhead frame carries the slot adjustment request for the first service, where the adjustment request condition includes any one of the following:
a value of a request flag bit in the first overhead frame is toggled compared with a value of a request flag bit in an overhead frame in a second overhead multiframe;
a value of a request flag bit in the first overhead frame is toggled compared with a value of a request flag bit in an overhead frame in a second overhead multiframe, and the value of the request flag bit in the first overhead frame is different from a value of an acknowledge flag bit in an overhead frame in a third overhead multiframe; or
a value of a request flag bit in the first overhead frame is a first value, where
the first overhead frame is included in a first overhead multiframe, the first overhead multiframe and the second overhead multiframe are two overhead multiframes consecutively sent by the second device to the first device, the first overhead multiframe is located after the second overhead multiframe, and the third overhead multiframe is an overhead multiframe that is being sent to the second device when the first device receives the first overhead frame.

Optionally, the adjustment request condition includes that the value of the request flag bit in the first overhead frame is the first value; and the first overhead frame is a 1^{st} overhead frame in the first overhead multiframe, a value of a request flag bit in the 1^{st} overhead frame in the first overhead multiframe is the first value, and a value of a request flag bit in a remaining overhead frame in the first overhead multiframe is a second value; or the first overhead frame is any overhead frame in the first overhead multiframe, and a value of a request flag bit in each overhead frame in the first overhead multiframe is the first value.

Optionally, the transceiver module 610 is further configured to receive a third overhead frame sent by the second device, where the third overhead frame carries a slot validation notification for the first service, and the slot validation notification indicates the first device to validate a slot adjustment result for the first service.

The processing module 620 is further configured to validate the slot adjustment result for the first service based on the slot validation notification for the first service.

Optionally, the processing module 620 is further configured to: when the third overhead frame meets a slot validation condition, determine that the third overhead frame carries the slot validation notification for the first service, where the slot validation condition includes any one of the following:
a value of a validation flag bit in the third overhead frame is toggled compared with a value of a validation flag bit in an overhead frame in a fourth overhead multiframe;
a value of a validation flag bit in the third overhead frame is toggled compared with a value of a validation flag bit in an overhead frame in a fourth overhead multiframe, and the value of the validation flag bit in the third overhead frame is the same as a value of an acknowledge flag bit in an overhead frame in a fifth overhead multiframe; or
a value of a validation flag bit in the third overhead frame is a first value, where
the third overhead frame is included in a sixth overhead multiframe, the sixth overhead multiframe and the fourth overhead multiframe are two overhead multiframes consecutively sent by the second device to the first device, the sixth overhead multiframe is located after the fourth overhead multiframe, and the fifth overhead multiframe is an overhead multiframe that is being sent to the second device when the first device receives the third overhead frame.

Optionally, the slot validation condition includes that the value of the validation flag bit in the third overhead frame is the first value; and the third overhead frame is any one of first m overhead frames in the sixth overhead multiframe, values of validation flag bits in the first m overhead frames in the sixth overhead multiframe are the first value, a value of a validation flag bit in a remaining overhead frame in the sixth overhead multiframe is a second value, and m is a positive integer; or the third overhead frame is any overhead frame in the sixth overhead multiframe, and a value of a validation flag bit in each overhead frame in the sixth overhead multiframe is the first value.

Optionally, the slot validation condition includes that values of validation flag bits in at least k consecutive overhead frames in the sixth overhead multiframe are the first value, the at least k consecutive overhead frames include the third overhead frame, and k is a positive integer.

Optionally, the transceiver module 610 is further configured to send a fourth overhead frame to the second device, where the fourth overhead frame carries a slot adjustment notification for the first service, and the slot adjustment notification is used to notify the second device to adjust the slot used to carry the first service.

Optionally, the second overhead frame further carries the identifier of the first service, the second overhead frame includes a first fgclientID field, a second fgclientID field, an fgOMFI field, a notification flag bit, a request flag bit, an acknowledge flag bit, and a validation flag bit, the first fgclientID field in the second overhead frame is used to carry the identifier of the second service, and the second fgclientID field in the second overhead frame is used to carry the identifier of the first service.

Optionally, the second overhead frame includes a first fgclientID field, an fgOMFI field, a notification flag bit, a request flag bit, an acknowledge flag bit, and a validation flag bit, and the first fgclientID field in the second overhead frame is used to carry the identifier of the second service.

Optionally, the first overhead frame is included in one fgMU in the first overhead multiframe, and the first overhead multiframe includes 480 fgMUs.

Optionally, each of the 480 fgMUs includes an overhead frame, and the overhead frame in each fgMU carries an identifier of a service carried in a slot indicated by an fgOMFI field in the overhead frame.

**In another embodiment, the slot adjustment apparatus 600 is used in the second device.**

The transceiver module 610 is configured to send a first overhead frame to a first device, where the first overhead frame carries a slot adjustment request for a first service; and receive a second overhead frame sent by the first device, where the second overhead frame carries an identifier of a second service and a slot adjustment acknowledge that is for the first service and that corresponds to the slot adjustment request, and a transmission direction of the second service is opposite to a transmission direction of the first service.

Optionally, the second overhead frame further carries an identifier of the first service.

Optionally, the processing module 620 is configured to: when the second overhead frame meets an adjustment acknowledge condition, determine that the second overhead frame carries the slot adjustment acknowledge for the first service, where the adjustment acknowledge condition includes any one of the following:
a value of an acknowledge flag bit in the second overhead frame is toggled compared with a value of an acknowledge flag bit in an overhead frame in a seventh overhead multiframe;
a value of an acknowledge flag bit in the second overhead frame is toggled compared with a value of an acknowledge flag bit in an overhead frame in a seventh overhead multiframe, and the value of the acknowledge flag bit in the second overhead frame is the same as a value of a request flag bit in an overhead frame in an eighth overhead multiframe; or
a value of an acknowledge flag bit in the second overhead frame is a first value, where
the second overhead frame is included in a ninth overhead multiframe, the ninth overhead multiframe and the seventh overhead multiframe are two overhead multiframes consecutively sent by the first device to the second device, the ninth overhead multiframe is located after the seventh overhead multiframe, and the eight overhead multiframe is an overhead multiframe that is being sent to the first device when the second device receives the second overhead frame.

Optionally, the adjustment acknowledge condition includes that the value of the acknowledge flag bit in the second overhead frame is the first value.

The second overhead frame is a 1^{st} overhead frame in the ninth overhead multiframe, a value of an acknowledge flag bit in the 1^{st} overhead frame in the ninth overhead multiframe is the first value, and a value of an acknowledge flag bit in a remaining overhead frame in the ninth overhead multiframe is a second value; or the second overhead frame is any overhead frame in the ninth overhead multiframe, and a value of an acknowledge flag bit in each overhead frame in the ninth overhead multiframe is the first value.

Optionally, the transceiver module 610 is further configured to send a third overhead frame to the first device, where the third overhead frame carries a slot validation notification for the first service, and the slot validation notification indicates the first device to validate a slot adjustment result for the first service.

Optionally, the transceiver module 610 is further configured to receive a fourth overhead frame sent by the first device, where the fourth overhead frame carries a slot adjustment notification for the first service, and the slot adjustment notification is used to notify the second device to adjust a slot used to carry the first service.

The processing module 620 is further configured to adjust, based on the slot adjustment notification for the first service, the slot used to carry the first service.

Optionally, the processing module 620 is further configured to: when the fourth overhead frame meets an adjustment notification condition, determine that the fourth overhead frame carries the slot adjustment notification for the first service, where the adjustment notification condition includes any one of the following:
a value of a notification flag bit in the fourth overhead frame is toggled compared with a value of a notification flag bit in an overhead frame in a tenth overhead multiframe;
a value of a notification flag bit in the fourth overhead frame is toggled compared with a value of a notification flag bit in an overhead frame in a tenth overhead multiframe, and the value of the notification flag bit in the fourth overhead frame is different from a value of a request flag bit in an overhead frame in an eleventh overhead multiframe; or
a value of a notification flag bit in the fourth overhead frame is a first value, where
the fourth overhead frame is included in a twelfth overhead multiframe, the twelfth overhead multiframe and the tenth overhead multiframe are two overhead multiframes consecutively sent by the first device to the second device, the twelfth overhead multiframe is located after the tenth overhead multiframe, and the eleventh overhead multiframe is an overhead multiframe that is being sent to the first device when the second device receives the fourth overhead frame.

Optionally, the adjustment notification condition includes that the value of the notification flag bit in the fourth overhead frame is the first value.

The fourth overhead frame is a 1^{st} overhead frame in the twelfth overhead multiframe, a value of a notification flag bit in the 1^{st} overhead frame in the twelfth overhead multiframe is the first value, and a value of a notification flag bit in a remaining overhead frame in the twelfth overhead multiframe is a second value; or the fourth overhead frame is any overhead frame in the twelfth overhead multiframe, and a value of a request flag bit in each overhead frame in the twelfth overhead multiframe is the first value.

Optionally, the second overhead frame further carries the identifier of the first service, the second overhead frame includes a first fgclientID field, a second fgclientID field, an fgOMFI field, a notification flag bit, a request flag bit, an acknowledge flag bit, and a validation flag bit, the first fgclientID field in the second overhead frame is used to carry the identifier of the second service, and the second fgclientID field in the second overhead frame is used to carry the identifier of the first service.

Optionally, the second overhead frame includes a first fgclientID field, an fgOMFI field, a notification flag bit, a request flag bit, an acknowledge flag bit, and a validation flag bit, and the first fgclientID field in the second overhead frame is used to carry the identifier of the second service.

Optionally, the first overhead frame is included in one fgMU in a first overhead multiframe, and the first overhead multiframe includes 480 fgMUs.

Optionally, each of the 480 fgMUs includes an overhead frame, and the overhead frame in each fgMU carries an identifier of a service carried in a slot indicated by an fgOMFI field in the overhead frame.

The slot adjustment apparatus provided in this embodiment of this application may alternatively use an application-specific integrated circuit (application-specific integrated circuit, ASIC) or a programmable logic device (programmable logic device, PLD). The PLD may be a complex programmable logical device (complex programmable logical device, CPLD), a field-programmable gate array (field-programmable gate array, FPGA), generic array logic (generic array logic, GAL), or any combination thereof. The slot adjustment method provided in the foregoing method embodiments may be alternatively implemented through software. When the slot adjustment method provided in the foregoing method embodiments is implemented through the software, each module in the slot adjustment apparatus may alternatively be a software module.

An embodiment of this application provides a slot adjustment apparatus. The slot adjustment apparatus is used in a transmission device, and the transmission device is the first device or the second device in the foregoing embodiments. For example, the slot adjustment apparatus is the transmission device or a functional component in the transmission device. The slot adjustment apparatus includes a memory and a processor. The memory is configured to store a computer program. The processor is configured to execute the computer program stored in the memory, so that the slot adjustment apparatus performs all or a part of the steps of the slot adjustment method provided in the foregoing method embodiments.

In an example, FIG. 27 is a diagram of another slot adjustment apparatus 700 according to an embodiment of this application. The slot adjustment apparatus 700 is a transmission device or a functional component in the transmission device. The transmission device is the first device or the second device in the foregoing embodiments. The transmission device may be a network device such as a switch or a router. The slot adjustment apparatus 700 may implement the method embodiment shown in FIG. 11 or FIG. 13. The slot adjustment apparatus 700 includes a main control board 710, an interface board 730, and an interface board 740. In a case of a plurality of interface boards, a switching board (not shown in FIG. 27) is further included. The switching board is configured to complete data exchange between interface boards (where the interface board is also referred to as a line card or a service board).

The main control board 710 is configured to complete functions such as system management, device maintenance, and protocol processing. The interface board 730 and the interface board 740 are configured to provide service interfaces and implement service forwarding. These service interfaces are, for example, a POS interface, a gigabit Ethernet (gigabit Ethernet, GE) interface, and an asynchronous transfer mode (asynchronous transfer mode, ATM) interface. The main control board 710 mainly has three types of functional units: a system management and control unit, a system clock unit, and a system maintenance unit. The main control board 710, the interface board 730, and the interface board 740 are connected to a system backplane through a system bus to implement interworking. The interface board 730 includes one or more processors 731. The processor 731 is configured to control and manage the interface board 730 and communicate with a central processing unit 712 on the main control board 710. A memory 732 on the interface board 730 is configured to store a forwarding entry. The interface board 730 includes one or more network interfaces 733 configured to implement receiving and sending. The main control board 710 further includes a memory 714. The memory 714 is configured to store system management information, a protocol, and the like. This is not limited in embodiments of this application.

As shown in FIG. 27, this embodiment includes a plurality of interface boards and uses a distributed forwarding mechanism. In this mechanism, an operation on the interface board 740 is basically similar to an operation on the interface board 730. For example, the interface board 740 includes one or more network interfaces 743 to implement receiving and sending, the interface board 740 includes a memory 742 to store a forwarding entry, and the interface board 740 includes a processor 741 to control and manage the interface board 740 and communicate with the central processing unit 712 on the main control board 710.

The processor 731 in the interface board 730 and/or the processor 741 in the interface board 740 in FIG. 27 may be dedicated hardware or a chip, for example, a network processor or an application-specific integrated circuit, to implement the foregoing functions. This implementation is usually referred to as a manner of using dedicated hardware or a chip for processing on a forwarding plane. In another implementation, the processor 731 in the interface board 730 and/or the processor 741 in the interface board 740 may alternatively use a general-purpose processor, for example, a general-purpose central processing unit (central processing unit, CPU).

There may be one or more main control boards. When there are a plurality of main control boards, the main control boards may include an active main control board and a standby main control board. There may be one or more interface boards. A transmission device (for example, a network device) having a stronger data processing capability provides more interface boards. In a case of a plurality of interface boards, the plurality of interface boards may communicate with each other through one or more switching boards, and load sharing and redundancy backup may be jointly implemented by the plurality of interface boards. In a centralized forwarding architecture, the transmission device may not need the switching board, and the interface board provides a function of processing service data in an entire system. In a distributed forwarding architecture, the transmission device includes a plurality of interface boards, data exchange between the plurality of interface boards may be implemented by using the switching board, and a large-capacity data exchange and processing capability is provided. Therefore, a data access and processing capability of the transmission device in the distributed architecture is better than that of the transmission device in the centralized architecture. A specific architecture to be used depends on a networking deployment scenario, and is not limited herein.

In an optional implementation, the memory 732 and/or the memory 742 are/is a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk or another magnetic storage device, or any other medium capable of carrying or storing expected program code in a form of an instruction or a data structure and capable of being accessed by a computer. However, this is not limited. The memory 732 may exist independently, and is connected to the processor 731 through a communication bus, or may be integrated with the processor 731. The memory 742 may exist independently, and is connected to the processor 741 through a communication bus, or may be integrated with the processor 741.

The memory 732 is configured to store program code (that is, a computer program), and the processor 731 controls execution of the program code, to perform some or all steps of the slot adjustment method provided in the foregoing embodiments. The processor 731 is configured to execute the program code stored in the memory 732. The program code may include one or more software modules. The one or more software modules may be the functional modules provided in the embodiment shown in FIG. 26. The memory 742 may also be configured to store program code, and the processor 741 controls execution of the program code, to perform some or all steps of the slot adjustment method provided in the foregoing embodiments. Likewise, the memory 714 may also be configured to store program code, and the central processing unit 712 controls execution of the program code, to perform some or all steps of the slot adjustment method provided in the foregoing embodiments.

Optionally, the network interface 733 or 743 is an apparatus that uses a transceiver, and is configured to communicate with another device or a network, for example, the Ethernet, a radio access network (radio access network, RAN), or a wireless local area network (wireless local area network, WLAN).

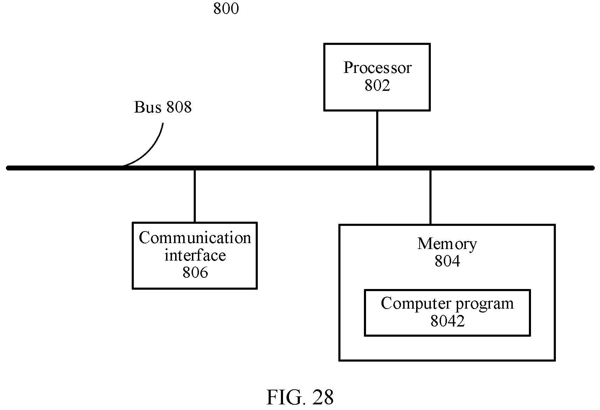

In another example, FIG. 28 is a diagram of another slot adjustment apparatus 800 according to an embodiment of this application. The slot adjustment apparatus 800 is a transmission device or a functional component in the transmission device. The transmission device is the first device or the second device in the foregoing embodiments. The slot adjustment apparatus 1000 may implement the method embodiment shown in FIG. 11 or FIG. 13.

As shown in FIG. 28, the slot adjustment apparatus 800 includes a processor 802, a memory 804, a communication interface 806, and a bus 808. The processor 802, the memory 804, and the communication interface 806 are communicatively connected by using the bus 808. A connection manner between the processor 802, the memory 804, and the communication interface 806 shown in FIG. 28 is merely an example. In an implementation process, the processor 802, the memory 804, and the communication interface 806 may be alternatively connected in a connection manner other than the bus 808. This is not limited in embodiments of this application.

The memory 804 is configured to store a computer program 8042. The computer program 8042 may include instructions and data. The memory 804 may be various types of storage media, for example, a RAM, a ROM, a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a register.

The processor 802 may be a general-purpose processor or a dedicated processor. The general-purpose processor is a processor that performs a specific step and/or operation by reading and executing a computer program (for example, the computer program 8042) stored in a memory (for example, the memory 804). In a process of performing the step and/or operation, the general-purpose processor may use data stored in the memory (for example, the memory 804). The stored computer program may be executed to implement a related function of the processing module 620, and the general-purpose processor may be a CPU. The dedicated processor is a processor that is specially designed to perform a specific step and/or operation. The dedicated processor may be a digital signal processor (digital signal processor, DSP), an ASIC, an FPGA, or the like. The processor 802 may alternatively be a combination of a plurality of processors, for example, a multicore processor. The processor 802 includes at least one circuit to perform all or some steps of the foregoing method embodiments.

The communication interface 806 includes an input/output (input/output, I/O) interface, a physical interface, a logical interface, and another interface that are configured to implement interconnection between components inside the slot adjustment apparatus 800, and an interface that is configured to implement interconnection between the slot adjustment apparatus 800 and another device (for example, a transmission device). The physical interface may be a GE interface, and is configured to implement interconnection between the slot adjustment apparatus 800 and another device. The logical interface is an interface inside the slot adjustment apparatus 800, and is configured to implement interconnection between components inside the slot adjustment apparatus 800. The communication interface 806 may be used by the slot adjustment apparatus 800 to communicate with another device, and the communication interface 806 may implement a related function of the transceiver module 610. The communication interface 806 may further include a transceiver for receiving and sending, and the transceiver may also implement the related function of the transceiver module 610.

The bus 808 is any type of communication bus configured to implement interconnection between the processor 802, the memory 804, and the communication interface 806. The bus 808 may be a peripheral component interconnect (peripheral component interconnect, PCI) bus, an extended industry standard architecture (extended industry standard architecture, EISA) bus, or the like. The bus 808 may be classified into an address bus, a data bus, a control bus, or the like. For ease of representation, only one bold line is used for representation in FIG. 28, but this does not mean that there is only one bus or only one type of bus.

The foregoing components may be separately disposed on chips that are independent of each other, or at least some or all of the components may be disposed on a same chip. Whether components are independently disposed on different chips or are integrated and disposed on one or more chips usually depends on requirements of a product design. Embodiments of this application impose no limitation on specific implementation forms of the foregoing components.

The slot adjustment apparatus 800 shown in FIG. 28 is merely an example. In an implementation process, the slot adjustment apparatus 800 may alternatively include other components, which are not listed one by one in this specification. The slot adjustment apparatus 800 shown in FIG. 28 adjusts, by performing all or some steps of the slot adjustment method provided in the foregoing embodiments, a fine grain slot used to carry a service, to adjust a bandwidth of a transmission channel of the service.

Based on a same inventive concept, an embodiment of this application provides a communication system. The communication system includes a first device and a second device. At least one of the first device and the second device includes the slot adjustment apparatus shown in any one of FIG. 26 to FIG. 28. Both the first device and the second device are on a transmission path of a first service, both the first device and the second device are on a transmission path of a second service, and the first device is located downstream the second device on the transmission path of the first service. For example, the communication system is shown in any one of FIG. 4 to FIG. 6.

Based on a same inventive concept, an embodiment of this application provides a computer-readable storage medium. The computer-readable storage medium stores a computer program. When the computer program is executed (for example, executed by a slot adjustment apparatus, a transmission device, or one or more processors), all or some steps of the method provided in the foregoing method embodiments are implemented.

Based on a same inventive concept, an embodiment of this application provides a computer program product. The computer program product includes a program or code. When the program or the code is executed (for example, executed by a slot adjustment apparatus, a transmission device, or one or more processors), all or some steps of the method provided in the foregoing method embodiments are implemented.

Based on a same inventive concept, an embodiment of this application provides a chip. The chip includes a programmable logic circuit and/or program instructions. When running, the chip is configured to implement all or some steps of the method provided in the foregoing method embodiments.

All or some of the foregoing embodiments may be implemented by software, hardware, firmware, or any combination thereof. When the embodiments are implemented by using the software, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to a computer, or a data storage apparatus such as a server or a data center that integrates one or more usable media. The usable medium may be a magnetic medium (for example, a floppy disk, a hard disk, or a magnetic tape), an optical medium, a semiconductor medium (for example, a solid state drive), or the like.

In this application, the term "at least one" means one or more, and "a plurality of" means two or more. In this application, unless otherwise specified, the symbol "/" usually represents "or". For example, A/B may represent A or B. The term "and/or" in this application merely describes an association relationship between associated objects, and indicates that three relationships may exist. For example, A and/or B may indicate the following three cases: Only A exists, both A and B exist, and only B exists. In addition, for ease of clear description, in this application, words such as "first", "second", and "third" are used to distinguish between same items or similar items whose functions and purposes are basically the same. A person skilled in the art may understand that the words such as "first", "second", and "third" do not limit a quantity and an execution sequence.

Different types of embodiments such as the method embodiments and the apparatus embodiments provided in embodiments of this application may be cross-referenced. A sequence of operations in the method embodiments provided in embodiments of this application can be appropriately adjusted, and the operations can be correspondingly added or deleted based on a situation. Any variation method that can be readily figured out by a person skilled in the art within the technical scope disclosed in this application shall fall within the protection scope of this application.

In corresponding embodiments provided in this application, it should be understood that the disclosed apparatus and the like may be implemented in other composition manners. For example, the described apparatus embodiments are merely examples. For example, division into the units is merely logical function division. In actual implementation, there may be another division manner. For example, a plurality of units or components may be combined or integrated into another system, or some features may be ignored or not performed. The units described as separate parts may or may not be physically separate, and parts described as units may or may not be physical units, may be located in one place, or may be distributed on a plurality of transmission devices. Some or all of the units may be selected according to an actual requirement to achieve the objectives of the solutions in the embodiments.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A slot adjustment method, wherein the method comprises:
receiving, by a first device, a first overhead frame sent by a second device, wherein the first overhead frame carries a slot adjustment request for a first service;
adjusting, by the first device based on the slot adjustment request for the first service, a slot used to carry the first service; and
sending, by the first device, a second overhead frame to the second device, wherein the second overhead frame carries an identifier of a second service and a slot adjustment acknowledge that is for the first service and that corresponds to the slot adjustment request, and a transmission direction of the second service is opposite to a transmission direction of the first service.

2. The method according to claim 1, wherein the second overhead frame further carries an identifier of the first service.

3. The method according to claim 1 or 2, wherein the method further comprises:
when the first overhead frame meets an adjustment request condition, determining, by the first device, that the first overhead frame carries the slot adjustment request for the first service, wherein the adjustment request condition comprises any one of the following:
a value of a request flag bit in the first overhead frame is toggled compared with a value of a request flag bit in an overhead frame in a second overhead multiframe;
a value of a request flag bit in the first overhead frame is toggled compared with a value of a request flag bit in an overhead frame in a second overhead multiframe, and the value of the request flag bit in the first overhead frame is different from a value of an acknowledge flag bit in an overhead frame in a third overhead multiframe; or
a value of a request flag bit in the first overhead frame is a first value, wherein
the first overhead frame is comprised in a first overhead multiframe, the first overhead multiframe and the second overhead multiframe are two overhead multiframes consecutively sent by the second device to the first device, the first overhead multiframe is located after the second overhead multiframe, and the third overhead multiframe is an overhead multiframe that is being sent to the second device when the first device receives the first overhead frame.

4. The method according to claim 3, wherein
the adjustment request condition comprises that the value of the request flag bit in the first overhead frame is the first value; and
the first overhead frame is a 1^{st} overhead frame in the first overhead multiframe, a value of a request flag bit in the 1^{st} overhead frame in the first overhead multiframe is the first value, and a value of a request flag bit in a remaining overhead frame in the first overhead multiframe is a second value; or
the first overhead frame is any overhead frame in the first overhead multiframe, and a value of a request flag bit in each overhead frame in the first overhead multiframe is the first value.

5. The method according to any one of claims 1 to 4, wherein the method further comprises:
receiving, by the first device, a third overhead frame sent by the second device, wherein the third overhead frame carries a slot validation notification for the first service, and the slot validation notification indicates the first device to validate a slot adjustment result for the first service; and
validating, by the first device, the slot adjustment result for the first service based on the slot validation notification for the first service.

6. The method according to claim 5, wherein the method further comprises:
when the third overhead frame meets a slot validation condition, determining, by the first device, that the third overhead frame carries the slot validation notification for the first service, wherein the slot validation condition comprises any one of the following:
a value of a validation flag bit in the third overhead frame is toggled compared with a value of a validation flag bit in an overhead frame in a fourth overhead multiframe;
a value of a validation flag bit in the third overhead frame is toggled compared with a value of a validation flag bit in an overhead frame in a fourth overhead multiframe, and the value of the validation flag bit in the third overhead frame is the same as a value of an acknowledge flag bit in an overhead frame in a fifth overhead multiframe; or
a value of a validation flag bit in the third overhead frame is a first value, wherein
the third overhead frame is comprised in a sixth overhead multiframe, the sixth overhead multiframe and the fourth overhead multiframe are two overhead multiframes consecutively sent by the second device to the first device, the sixth overhead multiframe is located after the fourth overhead multiframe, and the fifth overhead multiframe is an overhead multiframe that is being sent to the second device when the first device receives the third overhead frame.

7. The method according to claim 6, wherein
the slot validation condition comprises that the value of the validation flag bit in the third overhead frame is the first value; and
the third overhead frame is any one of first m overhead frames in the sixth overhead multiframe, values of validation flag bits in the first m overhead frames in the sixth overhead multiframe are the first value, a value of a validation flag bit in a remaining overhead frame in the sixth overhead multiframe is a second value, and m is a positive integer; or
the third overhead frame is any overhead frame in the sixth overhead multiframe, and a value of a validation flag bit in each overhead frame in the sixth overhead multiframe is the first value.

8. The method according to claim 7, wherein
the slot validation condition comprises that values of validation flag bits in at least k consecutive overhead frames in the sixth overhead multiframe are the first value, the at least k consecutive overhead frames comprise the third overhead frame, and k is a positive integer.

9. The method according to any one of claims 1 to 8, wherein the method further comprises:
sending, by the first device, a fourth overhead frame to the second device, wherein the fourth overhead frame carries a slot adjustment notification for the first service, and the slot adjustment notification is used to notify the second device to adjust the slot used to carry the first service.

10. The method according to any one of claims 1 to 9, wherein the second overhead frame further carries the identifier of the first service, the second overhead frame comprises a first fine grain client identification fgclientID field, a second fgclientID field, a fine grain overhead multiframe indicator fgOMFI field, a notification flag bit, a request flag bit, an acknowledge flag bit, and a validation flag bit, the first fgclientID field is used to carry the identifier of the second service, and the second fgclientID field is used to carry the identifier of the first service.

11. The method according to any one of claims 1 to 9, wherein the second overhead frame comprises a first fine grain client identification fgclientID field, a fine grain overhead multiframe indicator fgOMFI field, a notification flag bit, a request flag bit, an acknowledge flag bit, and a validation flag bit, and the first fgclientID field is used to carry the identifier of the second service.

12. The method according to any one of claims 1 to 11, wherein the first overhead frame is comprised in one fine grain multiplexing unit fgMU in the first overhead multiframe, and the first overhead multiframe comprises 480 fgMUs.

13. The method according to claim 12, wherein each of the 480 fgMUs comprises an overhead frame, and the overhead frame in each fgMU carries an identifier of a service carried in a slot indicated by an fgOMFI field in the overhead frame.

14. A slot adjustment method, wherein the method comprises:
sending, by a second device, a first overhead frame to a first device, wherein the first overhead frame carries a slot adjustment request for a first service; and
receiving, by the second device, a second overhead frame sent by the first device, wherein the second overhead frame carries an identifier of a second service and a slot adjustment acknowledge that is for the first service and that corresponds to the slot adjustment request, and a transmission direction of the second service is opposite to a transmission direction of the first service.

15. The method according to claim 14, wherein the second overhead frame further carries an identifier of the first service.

16. The method according to claim 14 or 15, wherein the method further comprises:
when the second overhead frame meets an adjustment acknowledge condition, determining, by the second device, that the second overhead frame carries the slot adjustment acknowledge for the first service, wherein the adjustment acknowledge condition comprises any one of the following:
a value of an acknowledge flag bit in the second overhead frame is toggled compared with a value of an acknowledge flag bit in an overhead frame in a seventh overhead multiframe;
a value of an acknowledge flag bit in the second overhead frame is toggled compared with a value of an acknowledge flag bit in an overhead frame in a seventh overhead multiframe, and the value of the acknowledge flag bit in the second overhead frame is the same as a value of a request flag bit in an overhead frame in an eighth overhead multiframe; or
a value of an acknowledge flag bit in the second overhead frame is a first value, wherein
the second overhead frame is comprised in a ninth overhead multiframe, the ninth overhead multiframe and the seventh overhead multiframe are two overhead multiframes consecutively sent by the first device to the second device, the ninth overhead multiframe is located after the seventh overhead multiframe, and the eight overhead multiframe is an overhead multiframe that is being sent to the first device when the second device receives the second overhead frame.

17. The method according to claim 16, wherein
the adjustment acknowledge condition comprises that the value of the acknowledge flag bit in the second overhead frame is the first value; and
the second overhead frame is a 1^{st} overhead frame in the ninth overhead multiframe, a value of an acknowledge flag bit in the 1^{st} overhead frame in the ninth overhead multiframe is the first value, and a value of an acknowledge flag bit in a remaining overhead frame in the ninth overhead multiframe is a second value; or
the second overhead frame is any overhead frame in the ninth overhead multiframe, and a value of an acknowledge flag bit in each overhead frame in the ninth overhead multiframe is the first value.

18. The method according to any one of claims 14 to 17, wherein the method further comprises:
sending, by the second device, a third overhead frame to the first device, wherein the third overhead frame carries a slot validation notification for the first service, and the slot validation notification indicates the first device to validate a slot adjustment result for the first service.

19. The method according to any one of claims 14 to 18, wherein the method further comprises:
receiving, by the second device, a fourth overhead frame sent by the first device, wherein the fourth overhead frame carries a slot adjustment notification for the first service, and the slot adjustment notification is used to notify the second device to adjust a slot used to carry the first service; and
adjusting, by the second device based on the slot adjustment notification for the first service, the slot used to carry the first service.

20. The method according to claim 19, wherein the method further comprises:
when the fourth overhead frame meets an adjustment notification condition, determining, by the second device, that the fourth overhead frame carries the slot adjustment notification for the first service, wherein the adjustment notification condition comprises any one of the following:
a value of a notification flag bit in the fourth overhead frame is toggled compared with a value of a notification flag bit in an overhead frame in a tenth overhead multiframe;
a value of a notification flag bit in the fourth overhead frame is toggled compared with a value of a notification flag bit in an overhead frame in a tenth overhead multiframe, and the value of the notification flag bit in the fourth overhead frame is different from a value of a request flag bit in an overhead frame in an eleventh overhead multiframe; or
a value of a notification flag bit in the fourth overhead frame is a first value, wherein
the fourth overhead frame is comprised in a twelfth overhead multiframe, the twelfth overhead multiframe and the tenth overhead multiframe are two overhead multiframes consecutively sent by the first device to the second device, the twelfth overhead multiframe is located after the tenth overhead multiframe, and the eleventh overhead multiframe is an overhead multiframe that is being sent to the first device when the second device receives the fourth overhead frame.

21. The method according to claim 20, wherein
the adjustment notification condition comprises that the value of the notification flag bit in the fourth overhead frame is the first value; and
the fourth overhead frame is a 1^{st} overhead frame in the twelfth overhead multiframe, a value of a notification flag bit in the 1^{st} overhead frame in the twelfth overhead multiframe is the first value, and a value of a notification flag bit in a remaining overhead frame in the twelfth overhead multiframe is a second value; or
the fourth overhead frame is any overhead frame in the twelfth overhead multiframe, and a value of a request flag bit in each overhead frame in the twelfth overhead multiframe is the first value.

22. The method according to any one of claims 14 to 21, wherein the second overhead frame further carries the identifier of the first service, the second overhead frame comprises a first fine grain client identification fgclientID field, a second fgclientID field, a fine grain overhead multiframe indicator fgOMFI field, a notification flag bit, a request flag bit, an acknowledge flag bit, and a validation flag bit, the first fgclientID field is used to carry the identifier of the second service, and the second fgclientID field is used to carry the identifier of the first service.

23. The method according to any one of claims 14 to 21, wherein the second overhead frame comprises a first fine grain client identification fgclientID field, a fine grain overhead multiframe indicator fgOMFI field, a notification flag bit, a request flag bit, an acknowledge flag bit, and a validation flag bit, and the first fgclientID field is used to carry the identifier of the second service.

24. The method according to any one of claims 14 to 23, wherein the first overhead frame is comprised in one fine grain multiplexing unit fgMU in a first overhead multiframe, and the first overhead multiframe comprises 480 fgMUs.

25. The method according to claim 24, wherein each of the 480 fgMUs comprises an overhead frame, and the overhead frame in each fgMU carries an identifier of a service carried in a slot indicated by an fgOMFI field in the overhead frame.

26. A slot adjustment apparatus, used in a first device, wherein the apparatus comprises:
a transceiver module, configured to perform receiving and sending operations in the method according to any one of claims 1 to 13; and
a processing module, configured to perform an operation other than the receiving and sending operations in the method according to any one of claims 1 to 13.

27. A slot adjustment apparatus, used in a second device, wherein the apparatus comprises:
a transceiver module, configured to perform receiving and sending operations in the method according to any one of claims 14 to 25; and
a processing module, configured to perform an operation other than the receiving and sending operations in the method according to any one of claims 14 to 25.

28. A slot adjustment apparatus, comprising a memory and a processor, wherein
the memory is configured to store a computer program; and
the processor is configured to execute the computer program stored in the memory, to enable the slot adjustment apparatus to perform the method according to any one of claims 1 to 25.

29. A communication system, comprising a first device and a second device, wherein the first device comprises the slot adjustment apparatus according to claim 26 or 28, and the second device comprises the slot adjustment apparatus according to claim 27 or 28.

30. A computer-readable storage medium, wherein the computer-readable storage medium stores a computer program, and when the computer program is executed, the method according to any one of claims 1 to 25 is implemented.

31. A computer program product, wherein the computer program product comprises a program or code, and when the program or the code is executed, the method according to any one of claims 1 to 25 is implemented.

32. A chip, wherein when the chip runs, the method according to any one of claims 1 to 25 is implemented.
